# EUROPEAN PATENT APPLICATION

(11) **EP 3 868 506 A1**
(43) Date of publication of application: **25.08.2021**
(21) Application number: 19883745.2
(22) Date of filing: 19.09.2019
(51) Int. Cl.: B23K 9/23, B23K 9/007, B23K 26/21, B23K 26/22, B23K 26/323

(54) **WELDING METHOD FOR BONDING DISSIMILAR MATERIALS, BONDING AUXILIARY MEMBER, AND DISSIMILAR MATERIAL WELDED JOINT**

(30) Priority: 14.11.2018 JP 2018214061
(71) Applicant: KABUSHIKI KAISHA KOBE SEIKO SHO (KOBE STEEL, LTD.), Hyogo 651-8585 (JP)
(72) Inventor: SUZUKI, Reiichi, Kanagawa 251-8551 (JP)
(74) Representative: Müller-Boré & Partner Patentanwälte PartG mbB
(86) International application number: PCT/JP2019/036838
(87) International publication number: WO 2020/100426

(57) **Abstract**

Provided is a welding method for bonding dissimilar materials that enables strong bonding, with highly reliable quality, of dissimilar materials of steel and a material other than steel using inexpensive welding equipment, and that can be applied without restrictions to open cross section structures and closed cross section structures. A lower plate (10) comprising a material other than steel and a steel upper plate (20) respectively have circular holes (11, 21). A dissimilar material welded joint (1) is equipped with a solid steel bonding auxiliary member (30) having a stepped outer shape having a shaft part (31) and a flange part (32), and the shaft part (31) has a narrow portion on the flange-part side or has at least one press-fitting protrusion on the outer periphery thereof. The bonding auxiliary member (30) is press-fitted into the hole (11) provided in the lower plate (10), and the lower plate (10) and upper plate (20) are overlapped such that the shaft part (31) of the bonding auxiliary member (30) is seen in the hole (21) in the upper plate (20). The hole (21) in the upper plate (20) is filled with an iron alloy or Ni alloy welding metal (40).

## Description

### Technical Field

The present invention relates to a welding method for dissimilar material joining, a joining assist member, and a dissimilar material welded joint.

### Background Art

Transport equipment as typified by automobiles is always required to have increased drive fuel efficiency for the purpose of reducing various items such as (a) consumption of petroleum fuels which are limited resources, (b) CO₂ which is a global warming gas generated with burning, and (c) running cost. As improvement measures, examples thereof include vehicle weight reduction as well as improvements in motive force-related technologies such as use of electric driving. One means for weight reduction is to replace steel which is a current main material with light materials such as aluminum alloys, magnesium alloys, or carbon fiber. However, replacing all of the materials with such light materials causes problems such as cost increase and insufficiency in strength. As a countermeasure against these problems, a design method so called "multi-material" in which a proper combination of steel and a light material is used at each location is now attracting attention.

Combining steel and any of the above-described light materials necessarily results in occurrence of a position where these materials are joined. Whereas steel materials, aluminum alloy materials, or magnesium alloy materials can be welded to each other easily, it is common that welding of dissimilar materials is very difficult. This is because intermetallic compounds (IMCs) which are very fragile are formed in a melt-mixing portion between steel and aluminum or magnesium and the melt-mixing portion is easily destroyed by external stress caused by tension, impact, or the like. As a result, welding methods such as resistance spot welding method and the arc welding method cannot be used for dissimilar material joining and it is common to use other joining methods. Welding cannot be used for joining of steel and carbon fiber because the latter is not a metal.

As existing dissimilar material joining techniques, examples thereof include a method in which through-holes are formed in both a steel material and a light material and they are bound together by pressing them each other from both sides using a bolt and a nut. Another common examples thereof include a method in which materials are bound together by a swaging effect obtained by inserting a swaging member from one side by applying a high pressure to it (refer to Patent Literature 1, for example).

As another example thereof, the following method is proposed: a steel joining member is pushed, as a punch, into an aluminum alloy material, whereby a hole is formed and the joining member is bound tentatively, and subsequently, the aluminum alloy material is overlapped with a steel material, the two kinds of members are sandwiched between copper electrodes from both sides, and the steel material and the joining member are resistance-welded to each other by applying pressure and large current to them instantaneously (refer to Patent Literature 2, for example.)

As another example thereof, the following method has been developed: an aluminum alloy material and a steel material are joined together directly using a friction stir joining tool (refer to Patent Literature 3, for example).

### Prior Art Literatures

### Patent Literatures

Patent Literature 1: JP 2002-174219 A
Patent Literature 2: JP 2009-285678 A
Patent Literature 3: Japanese Patent No. 5044128

### Summary of the Invention

### Technical Problem

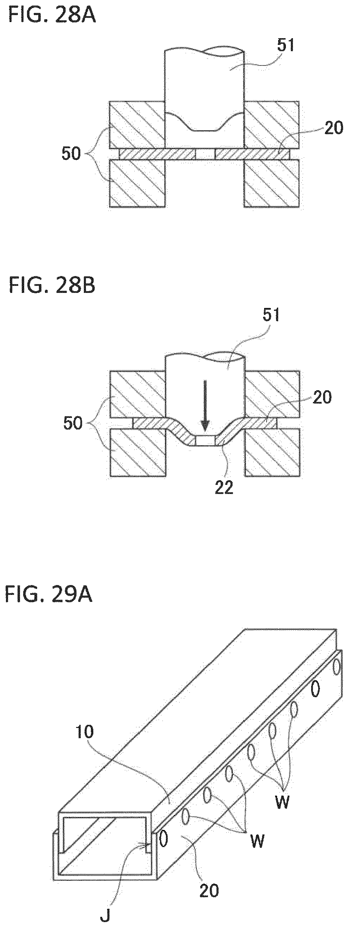

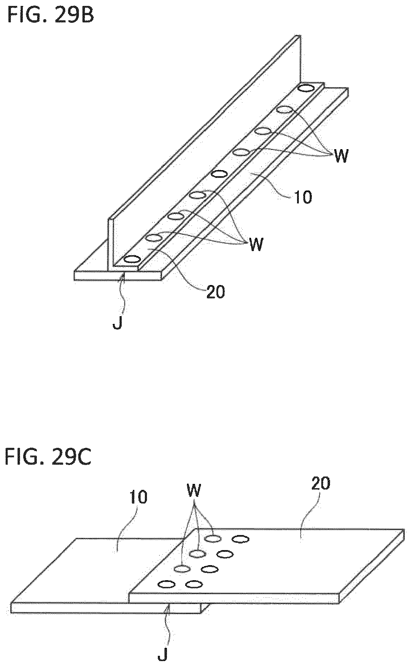

However, the bolt-nut joining method cannot be applied to a case where a steel material and a light material form a structure having a closed cross section (see FIG. 29A) because nuts cannot be inserted in such a case. Even in the case of a joint having an open section structure to which this method is applicable (see FIG. 29B and FIG. 29C), another problem of low efficiency arises because screwing nuts into the materials takes time.

Though the joining method disclosed in Patent Literature 1 is a relatively easy method, the method is associated with a problem that the swaging member cannot be inserted in the case where the steel material is high in strength and a problem that high joining strength cannot be obtained because the joining strength depends on the frictional force and the stiffness of the swaging member. There is another problem that this joining method cannot be applied to a closed section structure because it is necessary to press the swaging member by a jig from the front side and the back side for inserting it.

The joining method disclosed in Patent Literature 2 cannot be applied to a closed section structure. In addition, there is another problem that a facility for a resistance welding method is very expensive.

As for the joining method disclosed in Patent Literature 3, the following study report exists: pressure is applied to the surface of a steel material while allowing an aluminum alloy material to flow plastically in a low temperature range, and then, the two materials do not melt-mix with each other and metallic bonding force can be obtained without formation of intermetallic compounds, and therefore, joining of steel and carbon fiber is also possible. However, this joining method is associated with problems that the method cannot be applied to a closed section structure and the method requires a large mechanical facility and is expensive because high pressure needs to be generated. Furthermore, resulting joining force is not very strong. In addition, the joining method cannot be generally applied to a case where steel whose strength and melting points are high is disposed on the front side.

As such, each of the existing dissimilar material joining techniques has one or more of the following problems: (i) the materials and the groove shape are restricted to ones suitable for an open section structure; (ii) the joining strength is low, (iii) the facility cost is high, and (iv) the technique cannot be applied to the case where steel is disposed on the front side. Thus, to spread multi-material designing that enables combination of various kinds of materials, a new technique which is easy to use and satisfies all of the following conditions is desired: (i') the technique is applicable to both an open section structure and a closed section structure, (ii') the technique attains sufficiently high joining strength and is high in reliability, (iii') the technique is low in cost, and (iv') the technique is applicable to the case where steel is disposed on the front side.

The present invention has been made in view of the above problems, and an object of the invention is to provide a welding method for dissimilar material joining, a joining assist member, and a dissimilar material welded joint that make it possible to join dissimilar materials, that is, steel and a material other than the steel, with quality of being high in strength and reliability using an inexpensive facility already available on the market, and that can be applied to both an open section structure and a closed section structure with no limitations.

### Solution to Problem

To melt-join steel and a material other than the steel, such as an Al alloy or an Mg alloy, formation of intermetallic compounds (IMCs) is unavoidable as described above. On the other hand, it is apparent scientifically and empirically that steel-to-steel welding provides highest joining strength and reliability.

In view of the above, the present inventors have conceived of a method for attaining joining of dissimilar materials by using steel-to-steel welding as connection force and using binding force.

Therefore, the above object in the present invention can be achieved by the following constitutions.
(1) A welding method for dissimilar material joining for joining a first plate made of a material other than steel and a second plate made of steel, the method comprising:
   a step of making a hole through each of the first plate and the second plate;
   a step of press-fitting at least a shaft portion of a joining assist member being solid, being made of steel, and having an outer shape with step having the shaft portion and a flange portion, in which the shaft portion has a constricted portion on a flange portion side, in the hole of the first plate, wherein a relationship between a maximum outer diameter P_{D1} of the shaft portion, a width P_{D2} of the flange portion and a diameter B_{D1} of the hole of the first plate satisfies P_{D2} > P_{D1} > B_{D1}, or
   a step of press-fitting at least a shaft portion of a joining assist member being solid, being made of steel, and having an outer shape with step having the shaft portion and a flange portion, in which the shaft portion has at least one protrusion for press-fitting on an outer periphery thereof, in the hole of the first plate, wherein a width P_{D2} of the flange portion is larger than a diameter B_{D2} of the hole of the first plate, and a diameter P_{D1} of a largest circle being contact with an outermost diameter portion of at least two of the protrusions or a diameter P_{D2} of a circle being contact with an outermost diameter portion of the one protrusion and an outer periphery of the shaft portion is larger than the diameter B_{D2} of the hole of the first plate;
   a step of overlapping the first plate and the second plate such that the shaft portion of the joining assist member faces the hole of the second plate; and
   a step of filling the hole of the second plate with a weld metal and welding the second plate and the joining assist member by any of the following methods (a) to (f):
      (a) a gas-shielded arc welding method using, as a consumable electrode, a welding wire to provide the weld metal made of an iron alloy or nickel alloy;
      (b) a non-gas arc welding method using the welding wire as a consumable electrode;
      (c) a gas tungsten arc welding method using the welding wire as a non-consumable electrode filler;
      (d) a plasma arc welding method using the welding wire as a non-consumable electrode filler;
      (e) a shielded metal arc welding method using, as a consumable electrode, a covered electrode to provide the weld metal made of an iron alloy or nickel alloy; and
      (f) a laser welding method using the welding wire as a filler wire.
(2) A joining assist member for use in the welding method for dissimilar material joining as described in (1), the joining assist member being solid, being made of steel, and having an outer shape with step having a shaft portion and a flange portion,
   wherein a relationship between a maximum outer diameter P_{D1} of the shaft portion, a width P_{D2} of the flange portion, and a diameter B_{D1} of the hole of the first plate satisfies P_{D2} > P_{D1} > B_{D1}, and the shaft portion has a constricted portion on a flange portion side.
(3) A joining assist member for use in the welding method for dissimilar material joining as described in (1), the joining assist member being solid, being made of steel, and having an outer shape with step having a shaft portion and a flange portion,
   wherein the shaft portion has at least one protrusion for press-fitting on an outer periphery thereof, a width P_{D2} of the flange portion is larger than a diameter B_{D2} of the hole of the first plate, and a diameter P_{D1} of a largest circle being contact with an outermost diameter portion of at least two of the protrusions or a diameter P_{D1} of a circle being contact with an outermost diameter portion of the one protrusion and an outer periphery of the shaft portion is larger than a diameter B_{D2} of the hole of the first plate.
(4) A dissimilar material welded joint comprising a first plate made of a material other than steel, and a second plate made of steel and jointed to the first plate,
   wherein the first plate has a hole, the second plate has a hole, and these holes are located coaxially,
   wherein the dissimilar material welded joint further comprises a joining assist member,
   the joining assist member being made of steel, and having an outer shape with step having a shaft portion and a flange portion, wherein a relationship between a maximum outer diameter P_{D1} of the shaft portion, a width P_{D2} of the flange portion, and a diameter B_{D1} of the hole of the first plate satisfies P_{D2} > P_{D1} > B_{D1}, and the shaft portion has a constricted portion on a flange portion side; or
   the joining assist member being solid, being made of steel, and having an outer shape with step having a shaft portion and a flange portion, wherein the shaft portion has at least one protrusion for press-fitting on an outer periphery thereof, a width P_{D2} of the flange portion is larger than a diameter B_{D2} of the hole of the first plate, and a diameter P_{D1} of a largest circle being contact with an outermost diameter portion of at least two of the protrusions or a diameter P_{D1} of a circle being contact with an outermost diameter portion of the one protrusion and an outer periphery of the shaft portion is larger than a diameter B_{D2} of the hole of the first plate,
   wherein at least the shaft portion of the joining assist member is fixed in the hole of the first plate,
   wherein the first plate and the second plate are overlapped such that the shaft portion of the joining assist member faces the hole of the second plate,
   wherein the hole of the second plate is filled with a weld metal made of an iron alloy or nickel alloy and fusion zone is formed by the weld metal and a part of a melted portions of the second plate and joining assist member.

### Advantageous Effects of Invention

In the present invention, it is possible to provide a welding method for dissimilar material joining, a joining assist member, and a dissimilar material welded joint that make it possible to join dissimilar materials, that is, steel and a material other than the steel, with quality of being high in strength and reliability using an inexpensive welding facility and enables application to both an open section structure and a closed section structure with no limitations. In addition, it can be applied to a case where the second plate made of steel is on the front side.

### Brief Description of Drawings

[FIG. 1A] FIG. 1A is a perspective view of a dissimilar material welded joint in the first embodiment of the present invention.
[FIG. 1B] FIG. IB is a sectional view of the dissimilar material welded joint taken along line I-I in FIG. 1A.
[FIG. 2A] FIG. 2A is a side view of a joining assist member in the first embodiment.
[FIG. 2B] FIG. 2B is a front view of the joining assist member in the first embodiment.
[FIG. 3A] FIG. 3A is a side view of a joining assist member in a first modification in the first embodiment.
[FIG. 3B] FIG. 3B is a side view of a joining assist member in a second modification in the first embodiment.
[FIG. 4] FIG. 4 is a sectional view of a dissimilar material welded joint using the joining assist member in the first modification, which corresponds to that in FIG. IB.
[FIG. 5A] FIG. 5A is a front view of a joining assist member in the third modification in the first embodiment.
[FIG. 5B] FIG. 5B is a front view of a joining assist member in the fourth modification in the first embodiment.
[FIG. 5C] FIG. 5C is a front view of a joining assist member in the fifth modification in the first embodiment.
[FIG. 5D] FIG. 5D is a front view of a joining assist member in the sixth modification in the first embodiment.
[FIG. 5E] FIG. 5E is a front view of a joining assist member in the seventh modification in the first embodiment.
[FIG. 5F] FIG. 5F is a front view of a joining assist member in the eighth modification in the first embodiment.
[FIG. 6A] FIG. 6A is a sectional view of the dissimilar material welded joint in the first embodiment.
[FIG. 6B] FIG. 6B is a sectional view thereof taken along line VI-VI in FIG. 6A.
[FIG. 7A] FIG. 7A illustrates boring work in a welding method for dissimilar material joining in the first embodiment.
[FIG. 7B] FIG. 7B illustrates press-fitting work in the welding method for dissimilar material joining in the first embodiment.
[FIG. 7C] FIG. 7C illustrates a state of a bottom plate after press-fitting in the welding method for dissimilar material joining in the first embodiment.
[FIG. 7D] FIG. 7D illustrates overlapping work in the welding method for dissimilar material joining in the first embodiment.
[FIG. 7E] FIG. 7E illustrates welding work in the welding method for dissimilar material joining in the first embodiment.
[FIG. 8] FIG. 8 illustrates another welding work in the welding method for dissimilar material joining in the first embodiment.
[FIG. 9] FIG. 9 is a sectional view for describing a process of press-fitting work.
[FIG. 10] FIG. 10 is a sectional view for describing a case where an exposed surface of a flange portion is press-fitted until the exposed surface is positioned inside a bottom plate during press-fitting work.
[FIG. 11A] FIG 11A is a sectional view illustrating a state where a bottom plate in which a joining assist member has been press-fitted is overlapped with a top plate in the first example.
[FIG. 11B] FIG 11B is a sectional view illustrating a state where a bottom plate in which a joining assist member has been press-fitted is overlapped with a top plate in the second example.
[FIG. 11C] FIG 11C is a sectional view illustrating a state where a bottom plate in which a joining assist member has been press-fitted is overlapped with a top plate in the third example.
[FIG. 11D] FIG 11D is a sectional view illustrating a state where a bottom plate in which a joining assist member has been press-fitted is overlapped with a top plate in the fourth example.
[FIG. 12] FIG. 12 is a side view of a joining assist member in the ninth modification in the first embodiment.
[FIG. 13] FIG. 13 illustrates still another welding work in the welding method for dissimilar material joining in the first embodiment.
[FIG. 14A] FIG. 14A illustrates movement of laser based on screw motion in laser welding.
[FIG. 14B] FIG. 14B illustrates movement of laser based on reciprocation in laser welding.
[FIG. 15A] FIG. 15A is a sectional view of a dissimilar material welded joint for describing penetration of a weld metal.
[FIG. 15B] FIG. 15B is a sectional view of a dissimilar material welded joint for describing penetration of a weld metal.
[FIG. 16A] FIG. 16A is a perspective view of a dissimilar material welded joint, as a comparative example, which is obtained by allowing an aluminum-made bottom plate to be overlapped with a steel-made top plate, followed by penetration welding.
[FIG. 16B] FIG. 16B is a sectional view of the dissimilar material welded joint illustrated in FIG. 16A.
[FIG. 16C] FIG. 16C is a perspective view of a dissimilar material welded joint, as another comparative example, which is obtained by allowing an aluminum-made bottom plate to be overlapped with a steel-made top plate having a hole, followed by penetration welding.
[FIG. 17A] FIG. 17A is a sectional view illustrating a state where tensile shear force acts on the dissimilar material welded joint illustrated in FIG. 16A.
[FIG. 17B] FIG. 17B is a perspective view of the dissimilar material welded joint illustrated in FIG. 17A.
[FIG. 18A] FIG. 18A is a sectional view illustrating a state where vertical peeling tensile force acts on the dissimilar material welded joint illustrated in FIG. 16A.
[FIG. 18B] FIG. 18B is a perspective view of the dissimilar material welded joint illustrated in FIG. 18A.
[FIG. 19A] FIG. 19A is a sectional view of the dissimilar material welded joint in the first embodiment.
[FIG. 19B] FIG. 19B is a perspective view illustrating a state where vertical peeling tensile force acts on the dissimilar material welded joint illustrated in FIG. 19A.
[FIG. 19C] FIG. 19C is a perspective view illustrating a state where a dissimilar material welded joint in the first embodiment is deformed by bending.
[FIG. 20] FIG. 20 is a sectional view of a top plate, a bottom plate, and a joining assist member for describing dimension relation of the joining assist member.
[FIG. 21A] FIG. 21A is a sectional view of a dissimilar material welded joint for describing a height of a space unfilled with a weld metal.
[FIG. 21B] FIG. 21B is a sectional view of a dissimilar material welded joint in which a hole of a top plate has been filled with a weld metal and an excess weld metal has been formed.
[FIG. 22] FIG. 22 is a sectional view illustrating a state where external force acts on a dissimilar material welded joint in which a hole of the top plate has been filled, in a thickness direction (three-dimensional direction).
[FIG. 23A] FIG. 23A is a sectional view of a dissimilar material welded joint in a case where an unfilled height is high.
[FIG. 23B] FIG. 23B is a sectional view illustrating a state where external force acts on the dissimilar material welded joint illustrated in FIG. 23A, in a thickness direction (three-dimensional direction).
[FIG. 24A] FIG. 24A is a perspective view of a top plate and bottom plate for describing a welding method for dissimilar material joining in the first modification in the first embodiment.
[FIG. 24B] FIG. 24B is a sectional view of the top plate and bottom plate for describing the welding method for dissimilar material joining in the first modification in the first embodiment.
[FIG. 25A] FIG. 25A is a perspective view of a top plate and bottom plate for describing a welding method for dissimilar material joining in the second modification in the first embodiment.
[FIG. 25B] FIG. 25B is a sectional view of a top plate and bottom plate for describing the welding method for dissimilar material joining in the second modification in the first embodiment.
[FIG. 26] FIG. 26 is a side view of a joining assist member in the tenth modification in the first embodiment.
[FIG. 27A] FIG. 27A is a sectional view for describing drawing of a top plate in a welding method for dissimilar material joining in the third modification in the first embodiment.
[FIG. 27B] FIG. 27B is a sectional view of a dissimilar material welded joint after welding in the welding method for dissimilar material joining in the third modification in the first embodiment.
[FIG. 28A] FIG. 28A illustrates a state before a swell portion of a top plate illustrated in FIG. 27 is formed by drawing.
[FIG. 28B] FIG. 28B illustrates a state after a swell portion of a top plate illustrated in FIG. 27 has been formed by drawing.
[FIG. 29A] FIG. 29A is a perspective view of a closed section structure to which the dissimilar material welded joint in the first embodiment is applied.
[FIG. 29B] FIG. 29B is a perspective view of an open section structure formed by an L-shaped plate and a flat plate, to which the dissimilar material welded joint in the first embodiment is applied.
[FIG. 29C] FIG. 29C is a perspective view of an open section structure formed by two flat plates, to which the dissimilar material welded joint in the first embodiment is applied.
[FIG. 30] FIG. 30 illustrates a welding method for dissimilar material joining in the fourth modification in the first embodiment.
[FIG. 31] FIG. 31 illustrates a welding method for dissimilar material joining in the fifth modification in the first embodiment.
[FIG. 32A] FIG. 32A is a perspective view of a dissimilar material welded joint in the second embodiment of the present invention.
[FIG. 32B] FIG. 32B is a sectional view of the dissimilar material welded joint taken along line XXXII-XXXII in FIG. 32A.
[FIG. 33A] FIG. 33A is a side view of a joining assist member in the second embodiment.
[FIG. 33B] FIG. 33B is front view of the joining assist member in the second embodiment.
[FIG. 34A] FIG. 34A is a side view of a joining assist member in the first modification in the second embodiment.
[FIG. 34B] FIG. 34B is a side view of a joining assist member in the second modification in the second embodiment.
[FIG. 35] FIG. 35 is a sectional view of a dissimilar material welded joint using the joining assist member in the first modification, which corresponds to that in FIG. 32B.
[FIG. 36A] FIG. 36A illustrates boring work in a welding method for dissimilar material joining in the second embodiment.
[FIG. 36B] FIG. 36B illustrates press-fitting work in the welding method for dissimilar material joining in the second embodiment.
[FIG. 36C] FIG. 36C illustrates a state of a bottom plate after press-fitting in the welding method for dissimilar material joining in the second embodiment.
[FIG. 36D] FIG. 36D illustrates overlapping work in the welding method for dissimilar material joining in the second embodiment.
[FIG. 36E] FIG. 36E illustrates welding work in the welding method for dissimilar material joining in the second embodiment.
[FIG. 37] FIG. 37 illustrates another welding work in the welding method for dissimilar material joining in the second embodiment.
[FIG. 38] FIG. 38 is a sectional view for describing a process of press-fitting work.
[FIG. 39A] FIG. 39A is a sectional view illustrating a state where a bottom plate in which a joining assist member has been press-fitted is overlapped with a top plate in the first example.
[FIG. 39B] FIG. 39B is a sectional view illustrating a state where a bottom plate in which a joining assist member has been press-fitted is overlapped with a top plate in the second example.
[FIG. 39C] FIG. 39C is a sectional view illustrating a state where a bottom plate in which a joining assist member has been press-fitted is overlapped with a top plate in the third example.
[FIG. 39D] FIG. 39D is a sectional view illustrating a state where a bottom plate in which a joining assist member has been press-fitted is overlapped with a top plate in the fourth example.
[FIG. 40] FIG. 40 is a side view of a joining assist member in the third modification in the second embodiment.
[FIG. 41A] FIG. 41A is a sectional view of a dissimilar material welded joint for describing penetration of a weld metal.
[FIG. 41B] FIG. 41B is a sectional view of a dissimilar material welded joint for describing penetration of a weld metal.
[FIG. 42A] FIG. 42A is a sectional view of a dissimilar material welded joint in the second embodiment.
[FIG. 42B] FIG. 42B is a perspective view illustrating a state where vertical peeling tensile force acts on the dissimilar material welded joint illustrated in FIG. 42A.
[FIG. 42C] FIG. 42C is a perspective view illustrating a state where a dissimilar material welded joint in the second embodiment is deformed by bending.
[FIG. 43] FIG. 43 is a sectional view of a top plate, a bottom plate, and a joining assist member for describing dimension relation of the joining assist member.
[FIG. 44A] FIG. 44A is a sectional view of a dissimilar material welded joint for describing a height of a space unfilled with a weld metal.
[FIG. 44B] FIG. 44B is a sectional view of a dissimilar material welded joint in which a hole of a top plate has been filled with a weld metal and an excess weld metal has been formed.
[FIG. 45] FIG. 45 is a sectional view illustrating a state where external force acts on a dissimilar material welded joint in which a hole of the top plate has been filled, in a thickness direction (three-dimensional direction).
[FIG. 46A] FIG. 46A is a sectional view of a dissimilar material welded joint in a case where an unfilled height is high.
[FIG. 46B] FIG. 46B is a sectional view illustrating a state where external force acts on the dissimilar material welded joint illustrated in FIG. 46A, in a thickness direction (three-dimensional direction).
[FIG. 47A] FIG. 47A is a perspective view of a top plate and bottom plate for describing a welding method for dissimilar material joining in the first modification in the second embodiment.
[FIG. 47B] FIG. 47B is a sectional view of the top plate and bottom plate for describing the welding method for dissimilar material joining in the first modification in the second embodiment.
[FIG. 48A] FIG. 48A is a perspective view of a top plate and bottom plate for describing a welding method for dissimilar material joining in the second modification in the second embodiment.
[FIG. 48B] FIG. 48B is a sectional view of the top plate and bottom plate for describing the welding method for dissimilar material joining in the second modification in the second embodiment.
[FIG. 49A] FIG. 49A is a perspective view of a top plate and bottom plate for describing a welding method for dissimilar material joining in the third modification in the second embodiment.
[FIG. 49B] FIG. 49B is a sectional view of the top plate and bottom plate for describing the welding method for dissimilar material joining in the third modification in the second embodiment.
[FIG. 50A] FIG. 50A is a perspective view of a top plate and bottom plate for describing a welding method for dissimilar material joining in the fourth modification in the second embodiment.
[FIG. 50B] FIG. 50B is a sectional view of the top plate and bottom plate for describing the welding method for dissimilar material joining in the fourth modification in the second embodiment.
[FIG. 51A] FIG. 51A is a top view, side view and bottom view of a joining assist member in the fourth modification in the second embodiment.
[FIG. 51B] FIG. 51B is a top view, side view and bottom view of a joining assist member in the fifth modification in the second embodiment.
[FIG. 52] FIG. 52 is a side view of a joining assist member in the sixth modification in the second embodiment.
[FIG. 53] FIG. 53 is a sectional view of a dissimilar material welded joint after welding in the welding method for dissimilar material joining in the fifth modification in the second embodiment.
[FIG. 54A] FIG. 54A is a perspective view of a dissimilar material welded joint in the third embodiment of the present invention.
[FIG. 54B] FIG. 54B is a sectional view of the dissimilar material welded joint taken along line LIV-LIV in FIG. 54A.
[FIG. 55A] FIG. 55A is a perspective view of a joining assist member in the third embodiment.
[FIG. 55B] FIG. 55B is a side view of the joining assist member in the third embodiment, and a sectional view thereof taken along line LV-LV.
[FIG. 56A] FIG. 56A is a side view of a main part of a joining assist member in the first modification in the third embodiment.
[FIG. 56B] FIG. 56B is a side view of a main part of a joining assist member in the second modification in the third embodiment.
[FIG. 56C] FIG. 56C is a side view of a main part of a joining assist member in the third modification in the third embodiment.
[FIG. 56D] FIG. 56D is a side view of a main part of a joining assist member in the fourth modification in the third embodiment.
[FIG. 56E] FIG. 56E is a side view of a main part of a joining assist member in the fifth modification in the third embodiment.
[FIG. 56F] FIG. 56F is a side view of a main part of a joining assist member in the sixth modification in the third embodiment.
[FIG. 56G] FIG. 56G is a side view of a main part of a joining assist member in the seventh modification in the third embodiment.
[FIG. 56H] FIG. 56H is a side view of a main part of a joining assist member in the eighth modification in the third embodiment.
[FIG. 56I] FIG. 56I is a side view of a main part of a joining assist member in the ninth modification in the third embodiment.
[FIG. 57A] FIG. 57A is a perspective view of a joining assist member in the tenth modification in the third embodiment.
[FIG. 57B] FIG. 57B is a perspective view of a joining assist member in the eleventh modification in the third embodiment.
[FIG. 58A] FIG. 58A is a side view of a joining assist member in the twelfth modification in the third embodiment, and a sectional view thereof taken along line LVIII_{A}-LVIII_{A}.
[FIG. 58B] FIG. 58B is a side view of a joining assist member in the thirteenth modification in the third embodiment, and a sectional view thereof taken along line LVIII_{B}-LVIII_{B}.
[FIG. 58C] FIG. 58C is a side view of a joining assist member in the fourteenth modification in the third embodiment, and a sectional view thereof taken along line LVIIIc-LVIIIc.
[FIG. 58D] FIG. 58D is a side view of a joining assist member in the fifteenth modification in the third embodiment, and a sectional view thereof taken along line LVIII_{D}-LVIII_{D}.
[FIG. 58E] FIG. 58E is a side view of a joining assist member in the sixteenth modification in the third embodiment, and a sectional view thereof taken along line LVIII_{E}-LVIII_{E}.
[FIG. 59A] FIG. 59A is a perspective view of a joining assist member in the seventeenth modification in the third embodiment.
[FIG. 59B] FIG. 59B is a sectional view of a dissimilar material welded joint using the joining assist member in the seventeenth modification, which corresponds to that in FIG. 54B.
[FIG. 60A] FIG. 60A illustrates boring work in a welding method for dissimilar material joining in the third embodiment.
[FIG. 60B] FIG. 60B illustrates press-fitting work in the welding method for dissimilar material joining in the third embodiment.
[FIG. 60C] FIG. 60C illustrates a state of a bottom plate after press-fitting in the welding method for dissimilar material joining in the third embodiment.
[FIG. 60D] FIG. 60D illustrates overlapping work in the welding method for dissimilar material joining in the third embodiment.
[FIG. 60E] FIG. 60E illustrates welding work in the welding method for dissimilar material joining in the third embodiment.
[FIG. 61] FIG. 61 illustrates another welding work in the welding method for dissimilar material joining in the third embodiment.
[FIG. 62] FIG. 62 is a sectional view for describing a process of press-fitting work.
[FIG. 63A] FIG. 63A is a sectional view illustrating a state where a bottom plate in which a joining assist member has been press-fitted is overlapped with a top plate in the first example.
[FIG. 63B] FIG. 63B is a sectional view illustrating a state where a bottom plate in which a joining assist member has been press-fitted is overlapped with a top plate in the second example.
[FIG. 63C] FIG. 63C is a sectional view illustrating a state where a bottom plate in which a joining assist member has been press-fitted is overlapped with a top plate in the third example.
[FIG. 63D] FIG. 63D is a sectional view illustrating a state where a bottom plate in which a joining assist member has been press-fitted is overlapped with a top plate in the fourth example.
[FIG. 63E] FIG. 63E is a sectional view illustrating a state where a bottom plate in which a joining assist member has been press-fitted is overlapped with a top plate in the fifth modification.
[FIG. 64A] FIG. 64A is a sectional view of a dissimilar material welded joint for describing penetration of a weld metal.
[FIG. 64B] FIG. 64B is a sectional view of a dissimilar material welded joint for describing penetration of a weld metal.
[FIG. 65A] FIG. 65A is a sectional view of a dissimilar material welded joint in the third embodiment.
[FIG. 65B] FIG. 65B is a perspective view illustrating a state where vertical peeling tensile force acts on the dissimilar material welded joint illustrated in FIG. 65A.
[FIG. 65C] FIG. 65C is a perspective view illustrating a state where a dissimilar material welded joint in the third embodiment is deformed by bending.
[FIG. 66] FIG. 66 is a sectional view of a top plate, a bottom plate, and a joining assist member for describing dimension relation of the joining assist member.
[FIG. 67A] FIG. 67A is a sectional view of a dissimilar material welded joint for describing a height of a space unfilled with a weld metal.
[FIG. 67B] FIG. 67B is a sectional view of a dissimilar material welded joint in which a hole of a top plate has been filled with a weld metal and an excess weld metal has been formed.
[FIG. 68] FIG. 68 is a sectional view illustrating a state where external force acts on a dissimilar material welded joint in which a hole of the top plate has been filled, in a thickness direction (three-dimensional direction).
[FIG. 69A] FIG. 69A is a sectional view of a dissimilar material welded joint in a case where an unfilled height is high.
[FIG. 69B] FIG. 69B is a sectional view illustrating a state where external force acts on the dissimilar material welded joint illustrated in FIG. 69A, in a thickness direction (three-dimensional direction).
[FIG. 70A] FIG. 70A is a sectional view of a dissimilar material welded joint in the third embodiment.
[FIG. 70B] FIG. 70B is a sectional view thereof taken along line LXX_{A}-LXX_{A} in FIG. 70A.
[FIG. 71] FIG. 71 is a side view of a joining assist member in the twenty-fourth modification.
[FIG. 72A] FIG. 72A is a perspective view of a top plate and bottom plate for describing a welding method for dissimilar material joining in the first modification.
[FIG. 72B] FIG. 72B is a sectional view of the top plate and bottom plate for describing the welding method for dissimilar material joining in the first modification.
[FIG. 73A] FIG. 73A is a perspective view of a top plate and bottom plate for describing a welding method for dissimilar material joining in the second modification.
[FIG. 73B] FIG. 73B is a sectional view of the top plate and bottom plate for describing the welding method for dissimilar material joining in the second modification.
[FIG. 74A] FIG. 74A is a perspective view of a top plate and bottom plate for describing a welding method for dissimilar material joining in the third modification.
[FIG. 74B] FIG. 74B is a sectional view of the top plate and bottom plate for describing the welding method for dissimilar material joining in the third modification.
[FIG. 75A] FIG. 75A is a perspective view of a top plate and bottom plate for describing a welding method for dissimilar material joining in the fourth modification.
[FIG. 75B] FIG. 75B is a sectional view of the top plate and bottom plate for describing the welding method for dissimilar material joining in the fourth modification.
[FIG. 76A] FIG. 76A is a top view, side view and bottom view of a joining assist member in the third modification illustrated in FIG. 56C.
[FIG. 76B] FIG. 76B is a top view, side view and bottom view of a joining assist member in the twenty-fifth modification.
[FIG. 76C] FIG. 76C is a top view, side view and bottom view of a joining assist member in the twenty-sixth modification.
[FIG. 77] FIG. 77 is a side view of a joining assist member in the twenty-seventh modification.
[FIG. 78] FIG. 78 is a sectional view of a dissimilar material welded joint after welding in the welding method for dissimilar material joining in the fifth modification.

### Description of Embodiments

A welding method for dissimilar material joining, a joining assist member, and a dissimilar material welded joint in each embodiment of the present invention are hereinafter described in detail with reference to the drawings.

### [First Embodiment]

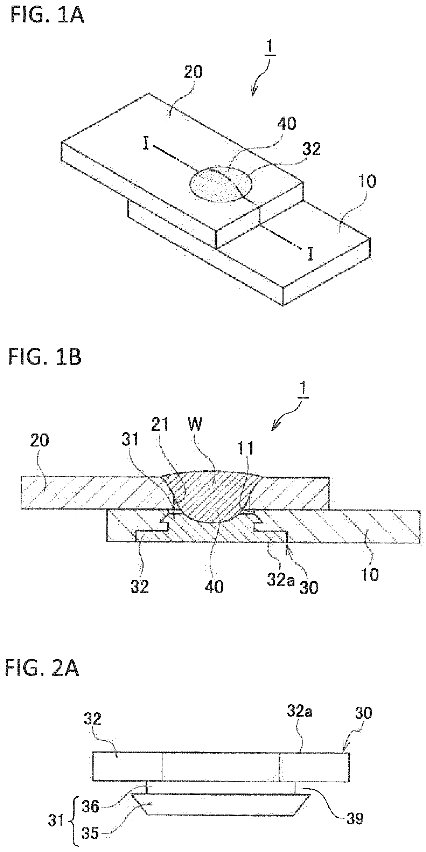

In the welding method for dissimilar material joining in the first embodiment, a dissimilar material welded joint 1 as illustrated in FIG. 1A and FIG. 1B is obtained by joining a bottom plate 10 (first plate) made of an aluminum alloy or magnesium alloy and a top plate 20 (second plate) made of steel that are overlapped with each other, via a joining assist member 30 made of steel, by an arc welding method or laser welding method described below.

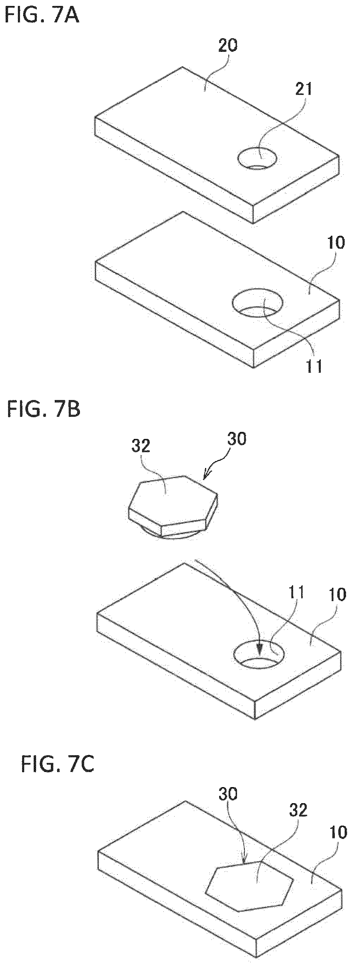

The bottom plate 10 has a circular hole 11 penetrating the bottom plate 10 in the thickness direction and top plate 20 has a circular hole 21 penetrating the top plate 20 in the thickness direction, the holes 11 and 21 being located coaxially (see FIG. 7A). A whole of a joining assist member 30 is inserted in the hole 11 of the bottom plate 10 by pressing it.

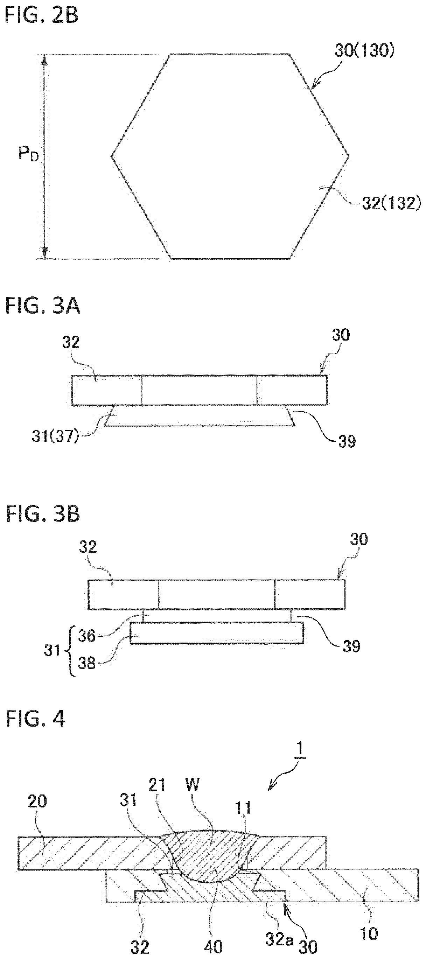

As illustrated in FIG. 2A and FIG. 2B, the joining assist member 30 has an outer shape with step, i.e. has a shaft portion 31 and a flange portion 32 which extends outward from the shaft portion 31. Each of the shaft portion 31 and flange portion 32 is formed to be solid.

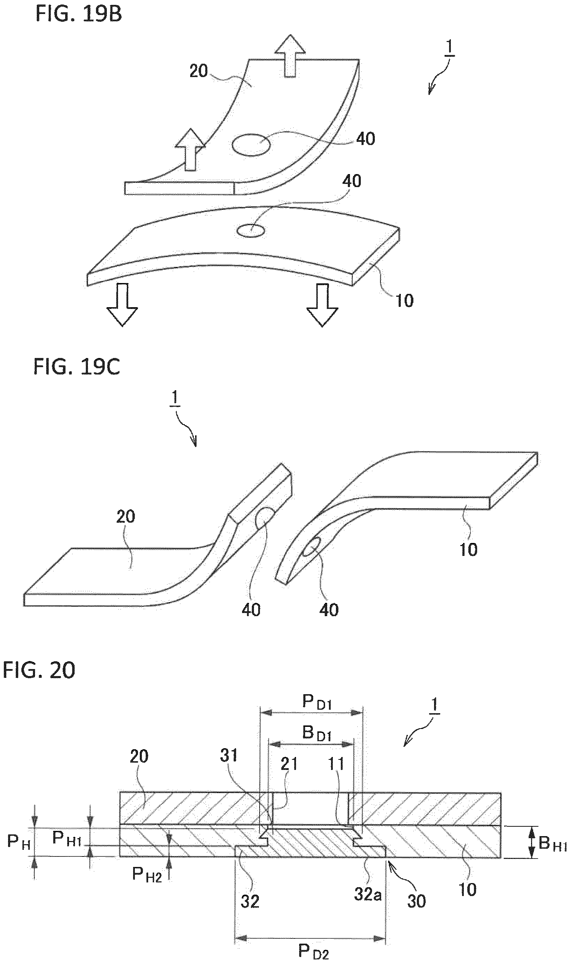

In addition, as described below, the joining assist member 30 is designed such that the relationship between a maximum outer diameter P_{D1} of the shaft portion 31, a width P_{D2} of the flange portion, and a diameter B_{D1} of the hole 11 of the bottom plate 10 satisfies P_{D2} > P_{D1} > B_{D1}, and a whole thickness P_{H} is equal to or less than a thickness B_{H1} of the bottom plate 10 (see FIG. 20).

The diameter of the hole 21 of the top plate 20 is not limited as long as the hole 21 can be filled with a weld metal 40 described below, and may be the same as the diameter B_{D1} of the hole 11 of the bottom plate 10, may be larger than the diameter B_{D1}, or may be smaller than the diameter B_{D1}.

Furthermore, in this embodiment, the outer shape of the shaft portion 31 is configured to have a constricted portion 39 on the flange portion side. Specifically, the shaft portion 31 has a tapered portion 35 whose outer periphery gradually expands in diameter from the tip toward the flange portion 32 and defines a maximum outer diameter P_{D1}, and a small-diameter cylindrical portion 36 whose diameter is smaller than the maximum outer diameter P_{D1} of the tapered portion 35. Therefore, the small-diameter cylindrical portion 36 gives the outer shape of the shaft portion 31 having a constricted portion 39 on the flange portion side.

The outer shape of the shaft portion 31 is not particularly limited as long as the shaft portion 31 has a constricted portion 39 on the flange portion side to ensure that the joining assist member 30 is fixed to the bottom plate 10 by swaging binding force. For example, as illustrated in FIG. 3A, the shaft portion 31 may be a reduced-diameter tapered portion 37 in which the outer periphery gradually reduces in diameter from the tip to the flange portion 32. In addition, as illustrated in FIG. 3B, the shaft portion 31 may be configured to have a large-diameter cylindrical portion 38 provided on the tip side and a small-diameter cylindrical portion 36 provided on the flange portion side.

Since the function of the constructed portion 39 is substantially the same in any of the joining assist members 30 illustrated in FIG. 2A, FIG. 3A, and FIG. 3B, the following description is made with arbitrary joining assist member 30. FIG. 4 is a sectional view of the dissimilar material welded joint 1 using the joining assist member 30 in FIG. 3A, which corresponds to that in FIG. IB.

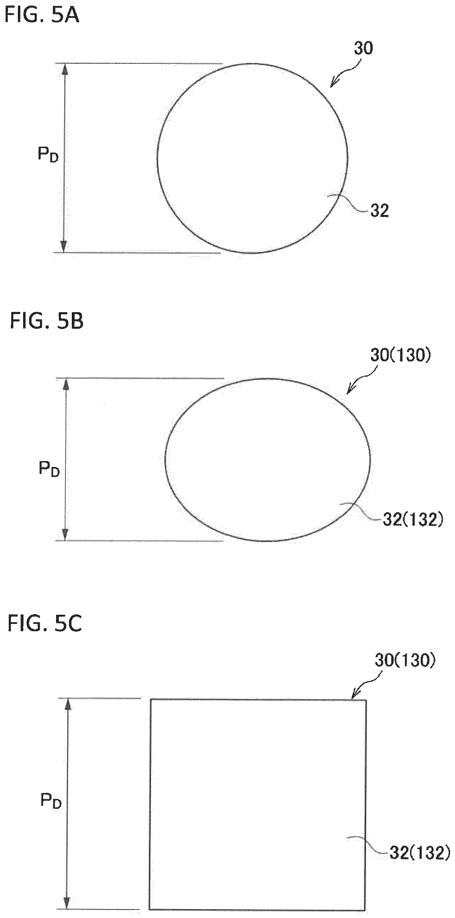

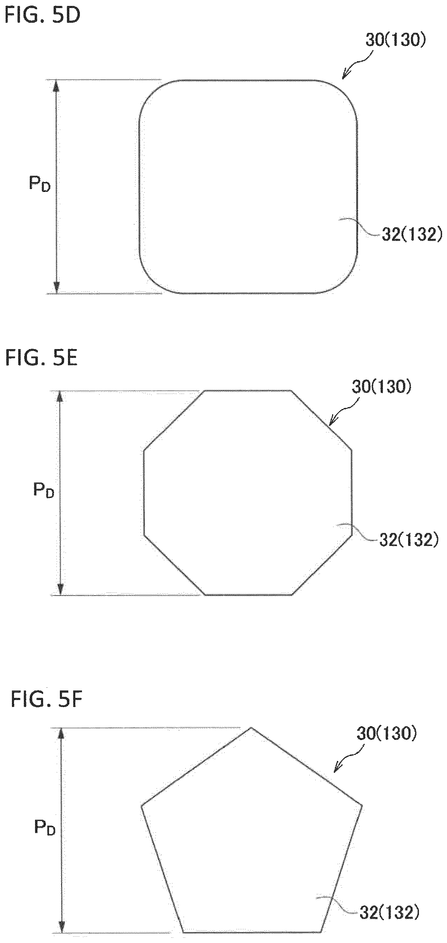

The outer shape of the flange portion 32 of the joining assist member 30 is not limited to a hexagon shape as illustrated in FIG. 2B, and can be any shape as long as it blocks the hole 11 opened in the bottom plate 10. In other words, the outer shape can be a circular shape as illustrated in FIG 5A, an oval shape as illustrated in FIG. 5B, or polygonal shapes with at least four sides as illustrated in FIG. 2B, and FIG. 5C to FIG. 5F. The corners of the polygonal shape may be rounded, as illustrated in FIG. 5D.

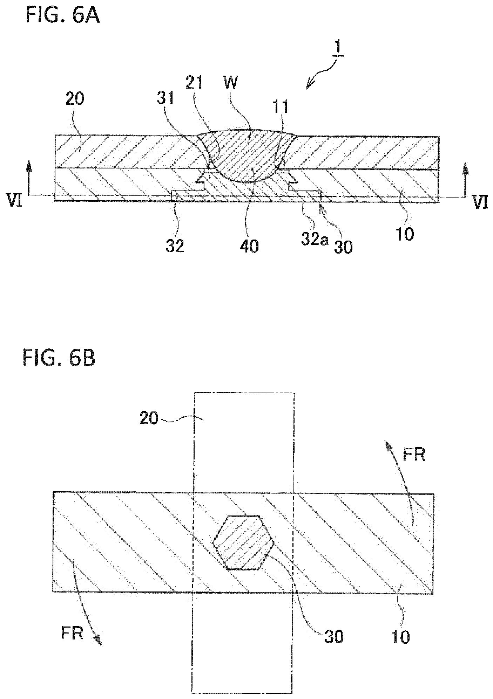

In this embodiment, the flange portion 32 is press-fitted in the bottom plate 10. In a case where the bottom plate 10 and the top plate 20 are joined by only one joining assist member 30 and the shape of the flange portion 32 is an exact circle, there is a possibility that the bottom plate 10 rotates around the joining assist member 30 by applying a strong horizontal rotational force FR to the bottom plate 10. For this reason, by making the outer shape of the flange portion 32 an oval shape or polygonal shape, it is possible to prevent the bottom plate 10 from rotating relative to the top plate 20 even when a rotational force FR is applied, as illustrated in FIG. 6B.

In these joining assist members 30, the width P_{D2} of the flange portion 32 described below is specified by the shortest distance between opposing surfaces.

As described above, the shaft portion 31 is located coaxially with the hole 11 of the bottom plate 10 by press-fitting the whole of the joining assist member 30 in the bottom plate 10.

Furthermore, the hole 21 of the top plate 20 is filled with a weld metal 40 made of an iron alloy or nickel alloy obtained by melt of a filler material (welding material) by arc welding, and a fusion zone W is formed by the weld metal 40 and a part of melted portions of the top plate 20 and joining assist member 30. Therefore, the fusion zone W is also disposed inside the hole 21 of the top plate 20 and the joining assist member 30 and the top plate 20 are welded by the fusion zone W, and as a result, the bottom plate 10 in which the joining assist member 30 has been fitted and the top plate 20 are joined.

In the first embodiment described above, circular holes 11 and 21 are provided in the bottom plate 10 and the top plate 20, respectively. However, the shape of the holes 11 and 21 is not limited to circle and the holes 11 and 12 with various shapes other than the circular shape can be used as long as the shaft portion 31 of the joining assist member 30 can be inserted therein. For example, triangle shapes, square shapes, polygon shapes having more than four sides, or oval shapes can be used. In the case where the shape of the hole 11 or 21 is not circle, the diameter B_{D1} of the hole is defined by a diameter of the inscribed circle of the hole.

A welding method for dissimilar material joining for forming the dissimilar material welded joint 1 is described below with reference to FIG. 7A to FIG. 7E.

First, as illustrated in FIG. 7A, boring work for making holes 11 and 12 through the bottom plate 10 and top plate 20, respectively, is performed (step S1).

Next, as illustrated in FIG. 7B and FIG. 7C, the whole of the joining assist member 30 is press-fitted in the hole 11 of the bottom plate 10 from the surface 10a of the bottom plate 10 (the bottom surface of the bottom plate 10 in a state of having been joined to the top plate 20) (step S2).

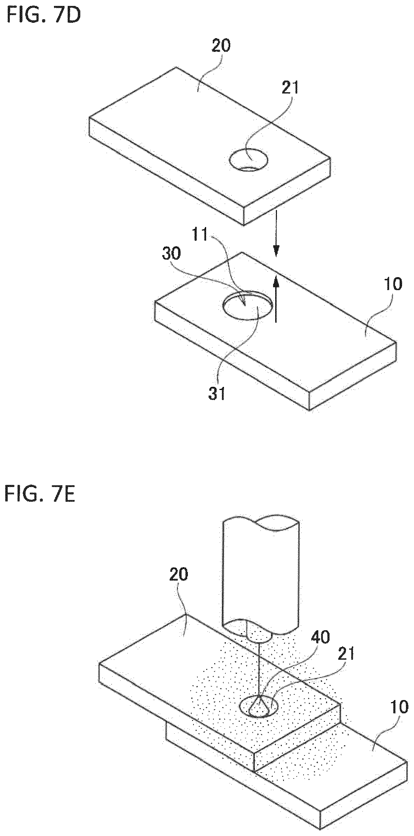

Then, as illustrated in FIG. 7D, the bottom plate 10 in which the joining assist member 30 has been fitted is reversed, and overlapping work of allowing the bottom plate 10 and the top plate 20 to be overlapped with each other such that the shaft portion 31 of the joining assist member 30 faces the hole 21 of the top plate 20 (step S3). In other words, in this state, the shaft portion 31 of the joining assist member 30 press-fitted in the bottom plate 10 is positioned on the top plate 20 side as compared with the flange portion 32, and the hole 11 of the bottom plate 10 and the hole 21 of the top plate 20 are coaxially located.

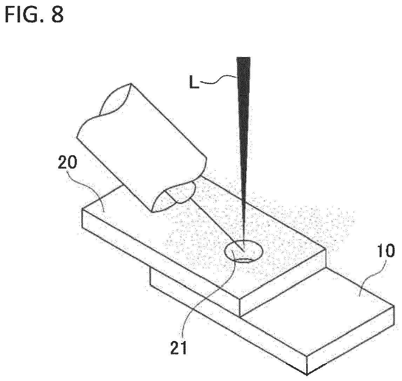

Subsequently, as illustrated in FIG. 7E and FIG. 8, the bottom plate 10 and the top plate 20 are joined to each other by performing any arc welding work of (a) a consumable-electrode gas-shielded arc welding method, (b) a non-gas arc welding method, (c) a gas tungsten arc welding method, (d) a plasma arc welding method, and (e) a shielded metal arc welding method, or (f) laser welding work (step S4).

FIG. 7E illustrates a case where arc welding work is performed by (a) the consumable-electrode gas-shielded arc welding method.

Specific examples of methods for the boring work in step S1 include a) punching with a punch, b) press punching using a die, and c) cutting by laser, plasma or waterjet method.

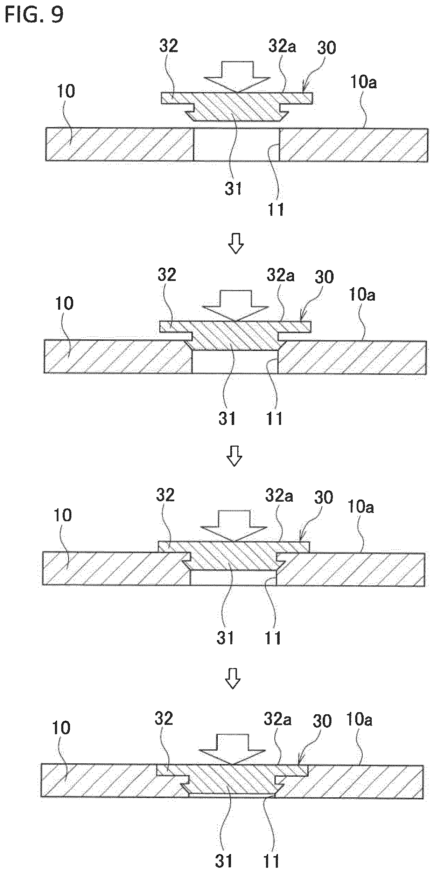

In the press-fitting work in step S2, as illustrated in FIG. 9, the joining assist member 30 is press-fitted in the hole 11 from the surface 10a side of the bottom plate 10 until the exposed surface 32a of the flange portion 32 is substantially flush with the surface 10a of the bottom plate 10. The reason for this is that in a case where the flange portion 32 protrudes beyond the surface 10a of the bottom plate 10, it may be aesthetically unpleasing, and when other component(s) is provided on the bottom plate 10, the protrusion of the joining assist member 30 may interfere therewith. In addition, it is valuable in terms of design flexibility that flatness of the surface 10a of the bottom plate 10 is maintained even after welding.

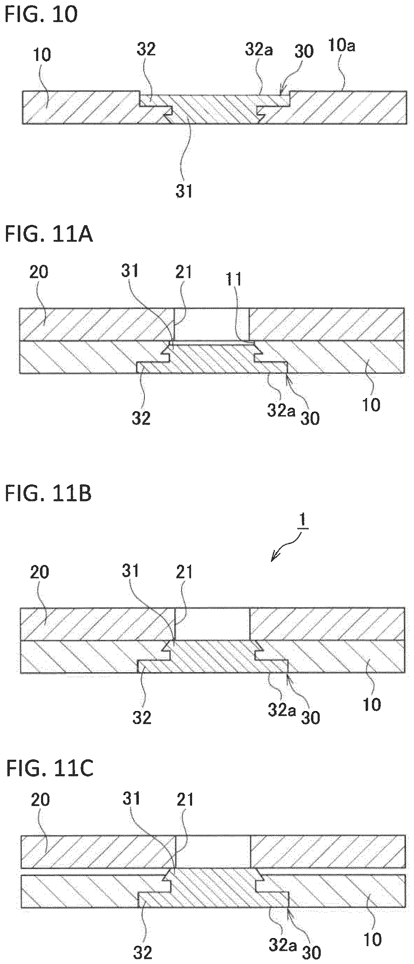

However, as for the indentation depth of the joining assist member 30, even if it is located below the surface 10a of the bottom plate 10, as illustrated in FIG. 10, such a case is acceptable because it does not have much adverse effect on the joint strength.

On the other hand, there is no restriction on the position of the lower surface (the tip surface of the shaft portion 31) of the joining assist member 30 after press-fitting, to the bottom plate 10. However, in a case where welding is not performed immediately after press-fitting and the bottom plate 10 in which the joining assist member 30 has been press-fitted is press-formed, the protrusion from the surface of the bottom plate 10 is an obstacle. In addition, in a case where the diameter (hole diameter) of the hole 21 of the top plate 20 is smaller than the outer diameter of the shaft portion 31 of the joining assist member 30 during joining, the case where the joining assist member 30 protrudes from the surface of the bottom plate 10 is undesirable because it cause a gap when the bottom plate 10 and top plate 20 are overlapped with each other, resulting in poor assembly accuracy.

For this reason, in these cases, the case where the position of the lower surface of the joining assist member 30 does not protrude from the surface of the bottom plate 10, as illustrated in FIG. 11A and FIG. 11B, is desirable. For example, the joining assist member 30 is designed to have a thickness P_{H} being equal to or less than the thickness B_{H1} of the bottom plate 10.

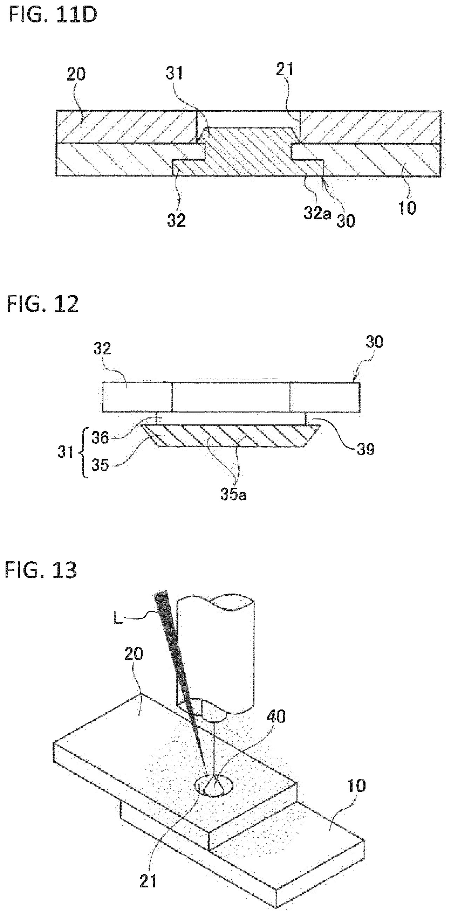

However, in a case where the occurrence of a gap between the top plate 20 and the bottom plate 10 is expected in the design stage, it is acceptable to use the joining assist member 30 protruding from the back surface (the upper surface of the bottom plate 10 in a state where the joining assist member is joined to the top plate 20) within the gap, as illustrated in FIG. 11C. Alternatively, in a case where the diameter of the hole 21 of the top plate 20 is larger than the outer diameter of the shaft portion 31 of the joining assist member 30, as illustrated in FIG. 11D, such a case is rather preferable because the protruding portion of the joining assist member 30 serves as a guide for overlapping, and the temporary fixability during welding work is high. As described above, the position of the back surface of the joining assist member 30 to be press-fitted can be suitably determined depending on the design.

The press-fitting work can be done by any means, and examples of practical method thereof include striking with a hammer and using a press machine powered by oil pressure, water pressure, air pressure, gas pressure or electric drive.

It is also possible to turn in while applying pressure, and in the case of using such a method, the tip of the shaft portion 31 can be provided with regular undulations in the shape of a screw to facilitate turning. For example, as illustrated in FIG. 12, a spiral groove 35a may be formed in the tapered portion 35 of the shaft portion 31.

In the overlapping work, in this embodiment, the bottom plate 10 is vertically flipped because the joining assist member 30 is press-fitted from the vertical upper side toward the vertical lower side, but it is clear that, in a case where the joining assist member 30 is press-fitted from the vertical lower side toward the vertical upper side, the bottom plate 10 is not needed to be vertically flipped.

The overlapping work may be performed before the press-fitting work, and the top plate 20 and the bottom plate 10 may be vertically flipped together after the joining assist member 30 is press-fitted in the bottom plate 10 that is positioned on the upper side of the top plate 20. Furthermore, the overlapping work may be performed before the boring work, and the hole 11 of the bottom plate 10 and the hole 21 of the top plate 20 may be bored simultaneously.

The welding work in step S4 is necessary for filling the hole 21 of the top plate 20 and joining the joining assist member 30 and the top plate 20 via the weld metal 40 in the hole 21 of the top plate 20. It is therefore indispensable for the welding work to insert a filler material (welding material) as a filling material. More specifically, the weld metal 40 is formed by melting the filler material by any of the following six arc welding methods or laser welding method.
(a) The consumable-electrode gas-shielded arc welding method, which is a welding method commonly called MAG or MIG, is a method for forming a good welded portion by using a solid wire or a flux-cored wire as a filler/arc generation consumable electrode and shielding the welded portion from the air by a shielding gas such as CO₂, Ar, He, or O₂.
(b) The non-gas arc welding method, which is called a self-shielded arc welding method, is a method for forming a good welded portion by using a special flux-cored wire as a filler/arc generation consumable electrode without shielding gases.
(c) The gas tungsten arc welding method is one kind of gas-shielded arc welding method but is of a non-consumable-electrode type, and is commonly called TIG. An inert gas such as Ar or He is used as a shielding gas. An arc is generated between a tungsten electrode and a base metal, and a filler wire is supplied to the arc from the side.
   Whereas in general no current is applied to the filler wire, there exists hot wire TIG in which the melting rate is increased by applying a current to the filler wire. In this case, no arc is generated from the filler wire.
(d) The plasma arc welding method, the principle of which is the same as that of the TIG, is a welding method in which the arc force is increased by tightening an arc by employing double gas supply systems and increasing the gas supply rate.
(e) The shielded metal arc welding method is an arc welding method in which a covered electrode obtained by covering a metal core wire with a flux is used as a filler. No shielding gas is necessary.
(f) The laser welding method uses laser instead of an arc as the heat source, and the welding wire is used as a filler wire.

As for the filler material (welding material), common welding wires or welding rods can be employed as long as the weld metal 40 made of an Fe alloy is formed. A nickel alloy can also be used because it does not cause any problems in welding for iron.

More specifically, JIS standard materials such as (a) Z3312, Z3313, Z3317, Z3318, Z3321, Z3323, and Z3334, (b) Z3313, (c) Z3316, Z3321, and Z3334, and (d) Z3211, Z3221, Z3223, Z3224, and AWS (American Welding Society) standard materials such as (a) A5.9, A5.14, A5.18, A5.20, A5.22, A5.28, A5.29, and A5.34, (b) A5.20, (c) A5.9, A5.14, A5.18, and A5.28, and (d) A5.1, A5.4, A5.5, and A5.11, are available on markets.

The hole 21 of the top plate 20 is filled with a filler material using the above arc welding methods. In general, it is not necessary to move the target position of the filler wire or welding rod, and it is appropriate to finish welding by ending arc formation after a lapse of a proper supply time. However, in the case where the hole 21 of the top plate 20 has a large area, the target position of the filler wire or welding rod may be moved so as to form a circle in the hole 21 of the top plate 20.

In addition, in the laser welding method, the laser has a higher heat concentration and gives deeper penetration than the arc. Therefore, by using the laser, it is possible to achieve both a small hole area and excellent penetration quality, which are difficult to be achieved by the arc only, and to increase the working efficiency. Furthermore, by using a filler wire as a filler material, joining of the top plate 20 and the joining assist member 30 that has been press-fitted in the bottom plate 10, which cannot be joined by laser only, becomes possible. As the filler wire, the above (a) to (d) can be applied.

As illustrated in FIG. 13, it is also possible to use the so-called laser-arc hybrid method, in which laser is used as a heat source in the arc welding methods (a) to (e) as heat source and welding wire supply methods, to further increase efficiency as compared with the case using each method alone.

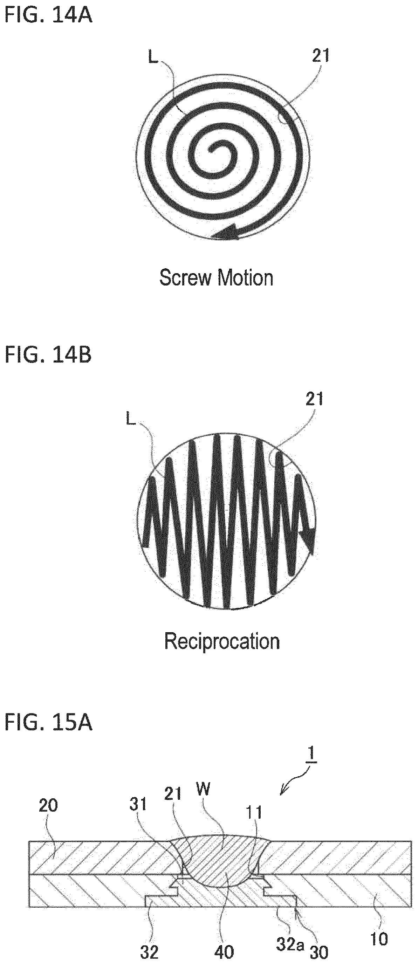

There are several kinds of lasers for welding, such as carbon dioxide lasers, semiconductor lasers (also called diode lasers), YAG lasers, disk lasers, and fiber lasers, as oscillators, all of which are applicable to the present method. As for the laser irradiation method, in addition to a method based on the fixed aiming position, a method based on lens-based motion called Galvano scanner, and a method of obtaining a suitable area range of weld penetration by the screw motion in which the aiming position is moved at a high speed in a spiral shape as illustrated in FIG. 14A or the reciprocating motion as illustrated in FIG. 14B through mechanical motion of a welding robot.

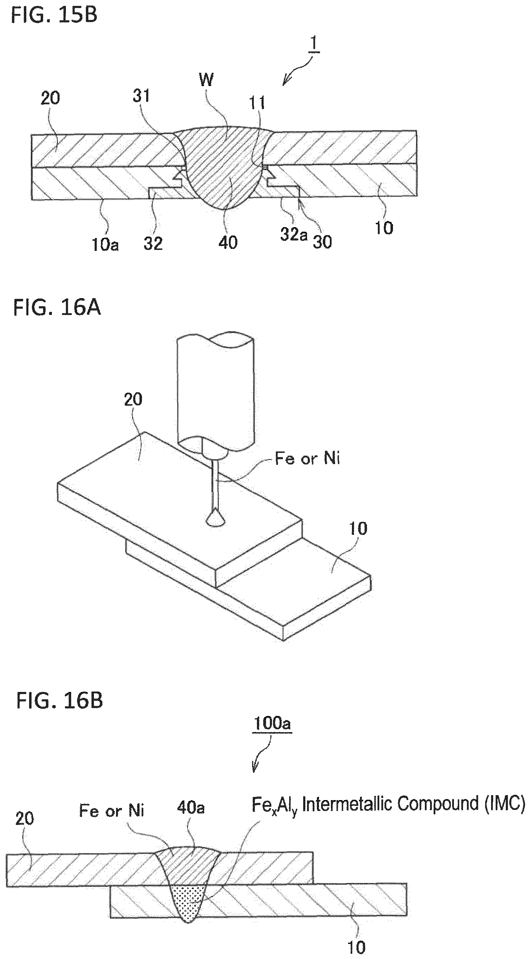

As for the penetration of the weld metal 40, the joining assist member 30 is necessary to be moderately melted, as illustrated in FIG. 15A. As illustrated in FIG. 15B, there is no problem even if the weld metal 40 is formed over the range beyond the thickness of the joining assist member 30, i.e. melting is conducted until so-called penetration bead is formed.

However, if the joining assist member 30 does not melt and the weld metal 40 just puts on it, high strength cannot be obtained as a joint because the metal bond is incomplete. In addition, in a case where other member(s) is assembled so as to be in contact with the surface 10a of the bottom plate 10, the protrusion of the weld metal 40, which is the penetration bead, is an obstacle, so it is of course necessary to avoid such an excessive penetration state. Furthermore, welding is necessary to be performed such that the weld metal 40 does not melt down due to deep penetration of the weld metal 40.

With the above work, the top plate 20 made of steel and the bottom plate 10 made of materials other than the steel are joined with high strength.

The role of the joining assist member 30 made of steel and used in the above welding method is described below.

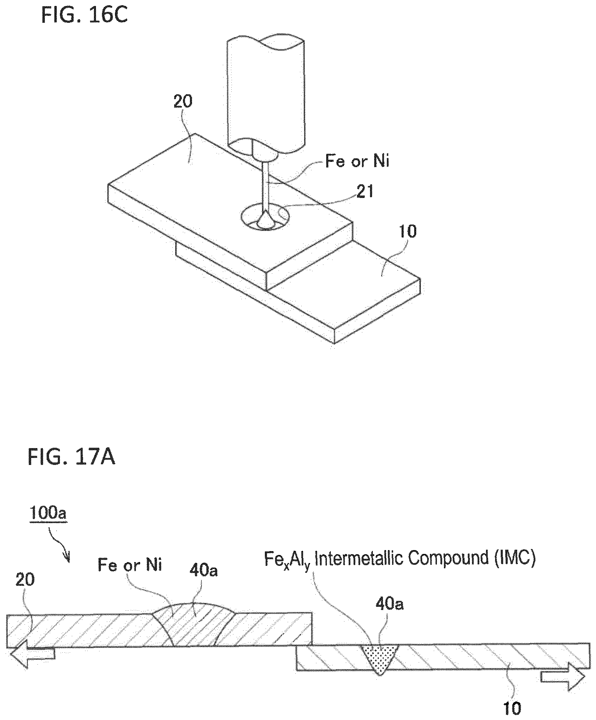

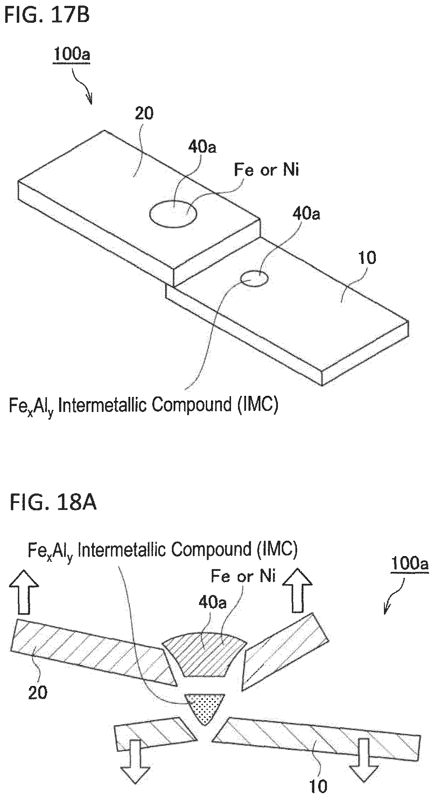

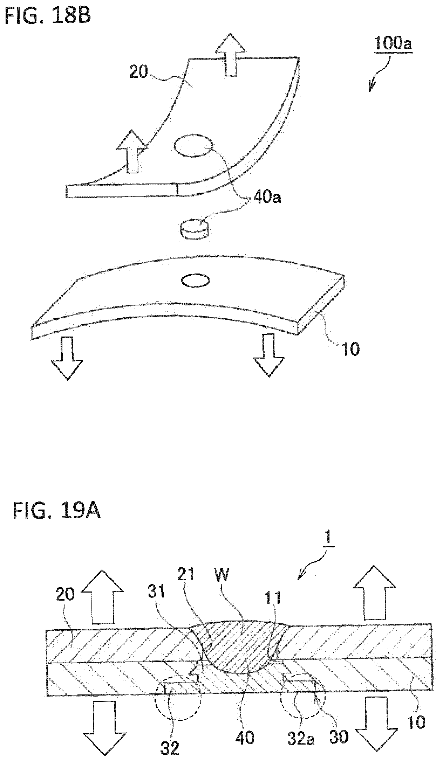

If no joining assist material is used, and as illustrated in FIG. 16A, an aluminum-made bottom plate 10 and a steel-made top plate 20 are simply overlapped with each other, and arc spot welding in which arc welding using a steel-made or nickel alloy-made welding wire is held at a fixed point for a fixed time is performed from the top plate side, the weld metal 40a formed on the bottom plate 10 side is made of an alloy of aluminum and steel, or aluminum, steel and nickel, as illustrated in FIG. 16B. This alloy exhibits intermetallic compound (IMC), which has a brittle property because of its high aluminum content. In such a dissimilar material welded joint 100a, even though it appears that they are joined, the weld metal 40a is easily broken and come off by tensile stress applied in the transverse direction (shear tension), as illustrated in FIG. 17A and FIG. 17B. Even in a case where tensile stress is applied in the longitudinal direction (peeling tension), the weld metal 40a breaks, or the boundary between the weld metal 40a and the bottom plate 10 breaks and the joint is broken as the bottom plate 10 comes off, as illustrated in FIG. 18A and FIG. 18B. As illustrated in FIG. 16C, making a hole in the top plate 20 is not a remedy for the easy rupture phenomenon described above, because melting of the aluminum-made bottom plate 10 occurs in the same way.

In this way, even if the aluminum-made bottom plate 10 and the steel-made top plate 20 are simply overlapped with each other and they are subjected to penetration welding, most of the weld metal 40a are an intermetallic compound, resulting in weak in both shear tension and peeling tension, making it impractical as a welded joint.

In FIG. 16C, in a case of using an aluminum alloy-made welding wire instead of a steel-made or nickel alloy-made welding wire, it is possible to form the joined part without melting the top plate 20 so much, i.e., avoiding the formation of intermetallic compounds, because the melting point of aluminum alloy is much lower than that of steel. However, the weld metal made of an aluminum alloy has properties that strength is significantly lower than that of steel-made or nickel alloy-made weld metal, and although soundness can be achieved, high joint strength cannot be obtained.

From the above issues regarding the dissimilar material welded joint 100a, in the dissimilar material welded joint 1 in this embodiment, while the weld metal is made of steel or nickel alloy, the melting of aluminum is prevented and intermetallic compounds are not allowed to be generated.

In other words, as illustrated in FIG. 7A to FIG. 7E, making a hole in of the aluminum-made bottom plate 10 is performed, and a steel-made solid joining assist member 30 is press-fitted in the hole 11 and fixed. Then, the bottom plate 10 is reversed and overlapped with the top plate 20 to be joined, and the weld metal 40 is formed by filling the hole 21 by arc welding from the hole 21 opened in the top plate 20. In this way, the aluminum and steel are not mixed, and the steel-made top plate 20, the weld metal 40, and the steel-made joining assist member 30 are welded together by a strong metal bond. Since the aluminum alloy-made bottom plate 10 is bound by the steel-made joining assist member 30, the top plate 20 and the bottom plate 10 cannot move relatively.

The primary role of the flange portion 32 of the joining assist member 30, which is wider than the hole 11 of the bottom plate 10, is to resist vertical peeling force. As illustrated in FIG. 19A, the use of a joining assist member 30 having an appropriate size can prevent the joining assist member 30 from being peeled from the bottom plate 10 at the interface therebetween and falling out. In general, the weld metal 40 breaks after sufficient plastic deformation.

Since the weld metal 40 has a strong bonding force enough to be resistant to tensile stress in the shear direction, bending deformation of the base metal first occurs without brittle fracture (see FIG. 19C), and the stress state thereof is similar to that of vertical peeling tension (see FIG. 19B). In other words, after sufficient deformation, ductile fracture occurs with high strength.

As for the flange portion 32 of the joining assist member 30, the larger the area thereof and the larger the thickness P_{H2} thereof are, the larger the strength against external stress in the thickness direction (three-dimensional direction) is, which is desirable. However, in the case where the area and thickness are excessively large, the pressure required for press-fitting is high, resulting in requirement of powerful press device, and excessive strain is generated in the bottom plate 10, resulting in cracks or deformation of the bottom plate 10 or the joining assist member 30. Therefore, taking the material and thickness of the bottom plate 10, and diameter of the hole into consideration, the size is appropriately determined.

As described above, the joining assist member 30 has the roles of (1) preventing IMC formation caused by melting of aluminum alloy or magnesium alloy, which is the material of the bottom plate 10, during welding, and (2) firmly bonding the bottom plate 10 and the top plate 20 after welding. However, when the joining assist member 30 is set in the bottom plate 10 before the welding step, if the joining assist member 30 is simply press-fitted in the bottom plate 10, the joining assist member 30 may easily come off from the bottom plate 10 when the bottom plate 10 is vertically flipped, or the joining assist member 30 may be pushed back by the reaction force during the press-fitting step. In order to prevent such a situation, it is necessary to temporarily fix the joining assist member 30 to the bottom plate 10 until it is welded. As a measure to prevent such a situation, a function of "swaging" utilizing elasto-plastic deformation of metal being the material of the bottom plate 10 is imparted to the joining assist member 30.

Specifically, this is achieved by making the maximum outer diameter P_{D1} of the shaft portion 31 as well as the flange portion 32 of the joining assist member 30 larger than the diameter B_{D1} of the hole 11 of the bottom plate 10, and by providing a constricted portion 39 having a small diameter at the boundary between the shaft portion 31 and the flange portion 32.

By designing the maximum outer diameter P_{D1} of the shaft portion 31 of the joining assist member 30 to be slightly larger than the diameter B_{D1} of the hole 11 of the bottom plate 10 and inserting it under pressure, the material of the bottom plate 10 is elasto-plastically deformed and spread. After this, when the constricted portion 39 having a smaller diameter is inserted, the pressure to spread is reduced, so the metal being the elastically deformed portion flows into there, and a swaging effect based on the shape is obtained. In this way, the elasticity of the material itself can be used to ensure that the joining assist member 30 does not come off easily.

The axial cross-section of the shaft portion 31 is desirably similar to a cross-section of the hole 11 of the bottom plate 10 because press-fitting can be easily performed. For example, in a case where the shape of the hole 11 is polygonal shape, the axial cross-section of the shaft portion 31 should be similar to that of the hole 11 to prevent the bottom plate 10 from rotating relative to the top plate 20.

The width P_{D2} of the flange portion 32 needs to be relatively larger than the maximum outer diameter P_{D1} of the shaft portion 31 so that the flange portion 32 can resist the peeling stress in the thickness direction of the bottom plate 10. In the case where the maximum outer diameter P_{D1} of the shaft portion 31 is large, there is a possibility that it may become larger than the width P_{D2} of the flange portion 32 even if the elastically deformed portion caused by spreading during insertion flows somewhat. In this case, the flange portion 32 loses the function of resisting the peeling stress for the bottom plate 10.

In addition, owing to the swaging effect, as a temporary fixing means, imparted to the joining assist member 30, by allowing the joining assist member 30 to be press-fitted into the aluminum alloy or magnesium alloy, which is the bottom plate 10, before the joining step, for example, in a plant for a step different from the joining step, it does not come off easily and can be transported to a joining plant for the joining step to be performed easily.

For the above reasons, the joining assist member 30 is made of steel and has an outer shape with step having a shaft portion 31 and a flange portion 32, the relationship between the maximum outer diameter P_{D1} of the shaft portion 31, the width P_{D2} of the flange portion 32, and the diameter B_{D1} of the hole 11 of the bottom plate 10 is P_{D2} > P_{D1} > B_{D1}, and the shaft portion 31 has a constricted portion 39 on the flange portion side.

As for the material of the steel-made jointing assist member 30, there is no particular limitation as long as the material is pure iron or iron alloys, and examples thereof include mild steel, carbon steel, stainless steel, and the like.

The material of the bottom plate 10 is not limited to aluminum alloy or magnesium alloy, and members made of various materials can be used as long as the material is made of materials other than steel. Examples of the materials other than steel include, for example, carbon fiber reinforced plastics (CFRP), non-ferrous metals, resins, composite materials of resins and metals, and ultra-high tensile steel of 1700 MPa or higher.

FIG. 20 also illustrates the various dimensions of the joining assist member 30. In other words, in this embodiment, in addition to the provision that the relationship between the maximum outer diameter P_{D1} of the shaft portion 31, the width P_{D2} of the flange portion 32, and the diameter B_{D1} of the hole 11 of the bottom plate 10 is P_{D2} > P_{D1} > B_{D1}, the dimensions of the joining assist member 30 are specified as follows.

### Height P_{H2} of flange portion

The height P_{H2} of the flange portion 32 is designed to be from 20% to 80% of the thickness B_{H1} of the bottom plate 10. The flange portion 32 of the joining assist member 30 plays a major role of resisting external stresses in the thickness direction, i.e. peeling stress. Although the shaft portion 31 and the constricted portion 39 also have some resistance to the peeling stress owing to the swaging effect for the bottom plate 10, the flange portion 32 plays a relatively larger role in the component structure. As for the flange portion 32, the larger the area thereof and the larger the height P_{H2} thereof are, the larger the strength against external stress in the thickness direction (three-dimensional direction) is, which is desirable. In the case where the height P_{H2} is less than 20% of the thickness B_{H1} of the bottom plate 10, the flange portion 32 of the joining assist member 30 easily undergoes elasto-plastic deformation caused by external stress in the thickness direction, and the bottom plate 10 easily comes off from the joining assist member 30. In other words, high resistance is not exhibited. Therefore, the lower limit of the height P_{H2} of the flange portion 32 is desirably set to 20% of the thickness B_{H1} of the bottom plate 10.

On the other hand, in the case where the height P_{H2} of the flange portion 32 is larger than 80% of the thickness B_{H1} of the bottom plate 10, the total height of the constricted portion 39 and the shaft portion 31, which temporarily swage the bottom plate 10 and the joining assist member 30, is less than 20%, and the swaging force becomes weak. In addition, since the flange portion 32 has a larger cross-sectional area than the shaft portion 31, a larger force is required for press-fitting, resulting in large distortion of the bottom plate 10, so if the joining assist member is press-fitted deeply, the bottom plate 10 may crack or otherwise break. Therefore, the height P_{H2} of the flange portion 32 is desirably equal to or less than 80% of the thickness B_{H1} of the bottom plate 10.

### Width P_{D2} of flange portion

The width P_{D2} of the flange portion 32 is designed to be from 110% to 200% of the diameter B_{D1} of the hole 11 of the bottom plate 10. As described above, as for the flange portion 32, the larger the area thereof and the larger the height P_{H2} thereof are, the larger the strength against external stress in the thickness direction (three-dimensional direction) is, which is desirable. In the case where the width P_{D2} of the flange portion 32 is less than 110% of the diameter B_{D1} of the hole 11 of the bottom plate 10, when the flange portion 32 is elasto-plastically deformed by the external stress in the thickness direction, the flange portion 32 may easily have an apparent diameter being equal to or less than the size of the hole 11 of the bottom plate 10, so that the bottom plate 10 can easily come off. In other words, the flange portion 32 does not exhibit high resistance. Therefore, the lower limit of the width P_{D2} of the flange portion 32 is 110% of the diameter B_{D1} of the hole 11 of the bottom plate 10. The lower limit is more preferably 120% thereof.

On the other hand, since the cross-sectional area of the flange portion 32 is larger than that of the shaft portion 31, a larger force is required for press-fitting, resulting in large distortion of the bottom plate 10, so if the joining assist member with a large area is press-fitted, the bottom plate 10 may crack or otherwise break. Therefore, the diameter P_{D2} of the flange portion 32 is desirably equal to or less than 200% thereof.

As described above, in the case where the shape of the hole 11 is other than circle, the width P_{D2} of the flange portion 32 is preferably equal to or larger than 110% of the diameter of the circumscribed circle of the hole 11 of the bottom plate 10 for achieving the state where the hole 11 is completely blocked by the flange portion 32.

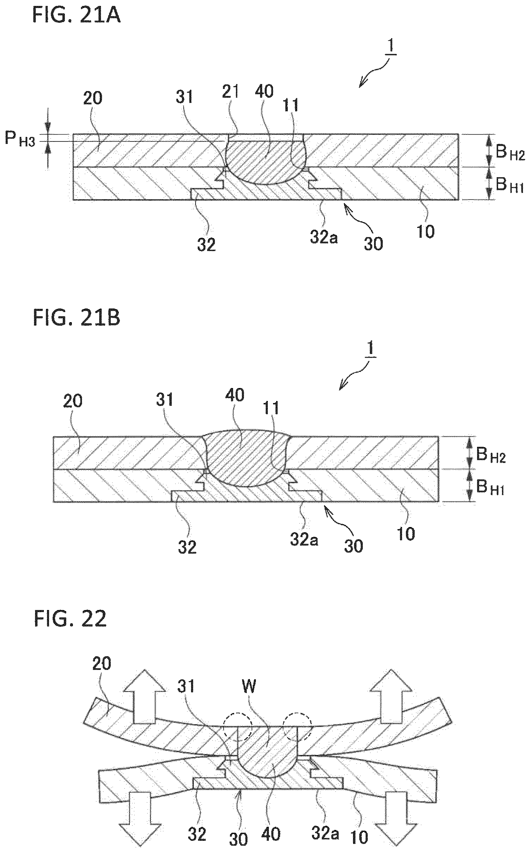

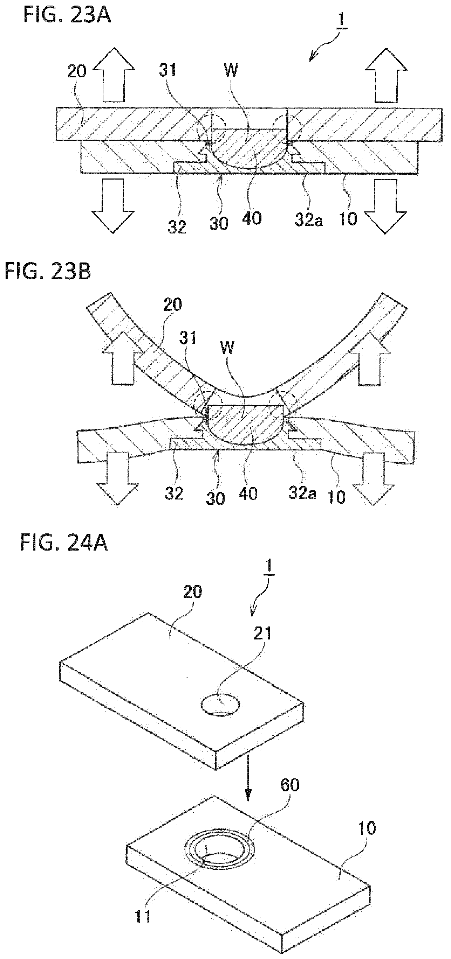

As illustrated in FIG. 21A, the height P_{H3} of the space unfilled with the weld metal 40 from the surface of the top plate 20 is set to be equal to or less than 30% of the thickness B_{H2} of the top plate 20. It is desirable that the hole 21 of the top plate 20 is filled with the weld metal 40 and the height of the surface position is equal to that of the surface of the top plate 20. As illustrated in FIG. 22, this prevents the deformation of the joining assist member 30 caused by external stress in the thickness direction (three-dimensional direction) and gives high strength. On the other hand, as illustrated in FIG. 23A, in a case where the unfilled height P_{H3} is excessively large, the bonding area between the joining assist member 30 and the weld metal 40 is small, resulting in low joining strength. In a case where filling is performed at only less than 70% of the thickness B_{H2} of the top plate 20, the joint joining strength is significantly low, and as illustrated in FIG. 23B, the joining assist member 30 easily deforms and the bottom plate 10 easily comes off. For this reason, the unfilled height P_{H3} should be equal to or less than 30% of the thickness B_{H2} of the top plate 20.

On the other hand, ideally, the hole is filled with the weld metal 40 desirably such that the height thereof is equal to that of the surface of the bottom plate 10, as described above. However, when the dissimilar material welded joint 1 is assembled into a larger structure after joining, in a case where there is room in the upper space of the joint, the whole of the hole 21 of the top plate 20 may be filled with the weld metal 40 and an excess weld metal may be further formed thereon, as illustrated in FIG. 21B.

It is not always necessary to restrict the thickness of the bottom plate 10 and top plate 20, but taking working efficiency and lap welding shape into consideration, the thickness of the top plate 20 is desirably 4.0 mm or less. On the other hand, taking a heat input of arc welding into consideration, unduly small thickness causes burn-through during welding and makes the welding difficult, and therefore, it is desirable that the thickness of each of the bottom plate 10 and the top plate 20 be 0.5 mm or more.

With the above configurations, the bottom plate 10 made of an aluminum alloy or magnesium alloy and the top plate 20 made of steel can be joined strongly.

It is common that the direct joining of different kinds of metals is associated with a problem other than the formation of IMCs. That is, when different kinds of metals are brought into contact with each other, a galvanic cell is formed, which is a cause of accelerating corrosion. Corrosion caused by this phenomenon (anode reaction in the cell) is called electric corrosion. Corrosion is accelerated when water exists in an interface where different kinds of metals are in contact with each other. Thus, in a case where this embodiment is applied to a joining location into which water is prone to intrude, it is necessary to subject the joining location to sealing treatment for preventing intrusion of water to prevent electric corrosion. Also in this joining method, in the case where a metal material other than steel, such as an Al alloy or Mg alloy is used as the first plate, since there are plural interfaces where different kinds of metals come into contact with each other, it is preferable to use a resin-based adhesive not only for further increase in joint strength but also as a sealing material.

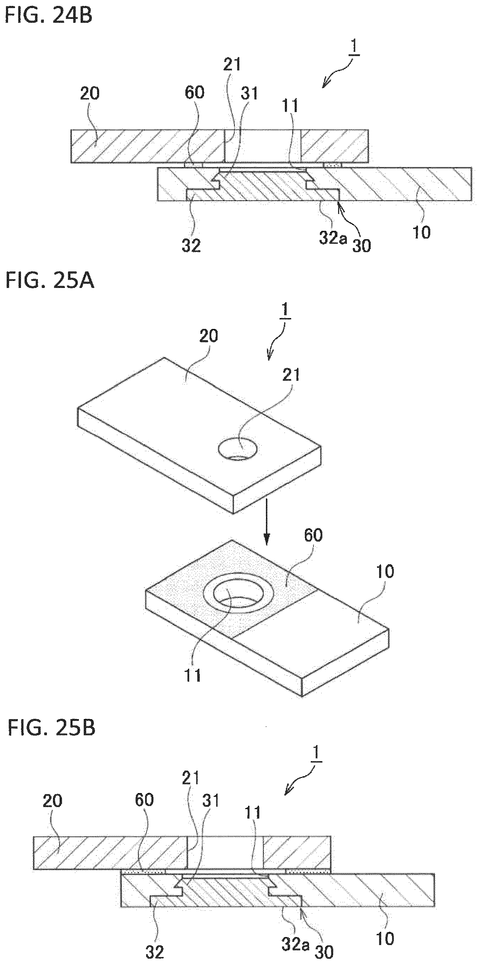

For example, as in the first modification illustrated in FIG. 24A and FIG. 24B, an adhesive 60 may be applied in a ring-like shape to the whole periphery of a welding portion in the joining surfaces of the bottom plate 10 and the top plate 20. Examples of the method for applying the adhesive 60 to the whole periphery of a welding portion in the joining surfaces of the bottom plate 10 and the top plate 20 includes a method in which the adhesive 60 is applied to the entire area of the joining surface excluding the welding portion, as in the second modification illustrated in FIG. 25A and FIG. 25B. This makes it possible to lower the electric corrosion rates of the bottom plate 10, top plate 20, and weld metal 40.

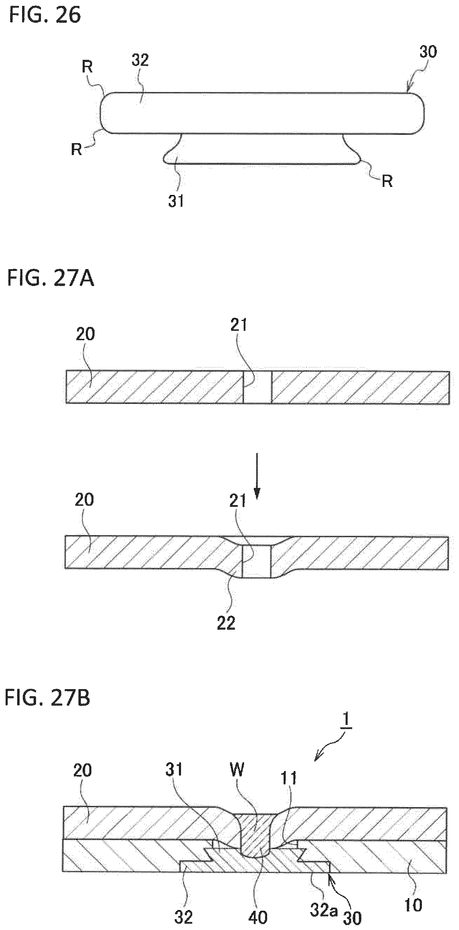

As illustrated in FIG. 26, the modification in which positions corresponding to edges of the joining assist member 30 have a roundness R in terms of safety in use and restrictions during forging causes no problem.

Furthermore, the top plate 20 may have a swell portion 22, as in the modification illustrated in FIG. 27A.

In a case where the thickness of the bottom plate 10 is relatively small, the top plate 20 can be welded well by simply making a hole in the top plate 20 as described above. However, in a case where the thickness of the bottom plate 10 is large, it takes time to fill the holes 11 of the bottom plate 10 in the welding step, resulting in poor efficiency. Also, the amount of heat is excessive, and a part of the joining assist member 30 tends to cause burn-through before the filling is completed. For this reason, in the case where the top plate 20 has the swell portion 22 formed by drawing, as illustrated in FIG. 27B, the volume of the hole 11 can be reduced and the hole 11 can be filled while preventing a burn-through failure.

In addition, in this modification, the swell portion 22 of the top plate 20 can be used as a mark when the bottom plate 10 and the top plate 20 are positioned with respect to each other. As a result, the swell portion 22 of the top plate 20 and the hole 11 of the bottom plate 10 can easily be positioned with respect to each other and the efficiency of overlapping work can be increased.

As for the drawing process for the swell portion 22, as illustrated in FIG. 28A, the peripheral part of the portion of the top plate 20 where the swell portion 22 is to be formed is bound by the die 50. Then, as illustrated in FIG. 28B, the swell portion 22 is formed by applying pressure to the portion where the swell portion 22 is to be formed and pushing it with the punch 51.

Since the welding method in this embodiment can be called spot welding with a small joining area, in the case of joining overlapped portions J of materials for actual use having a relatively large joining area, this welding method may be performed at plural positions, as illustrated in FIG. 29A to FIG. 29C. Then, strong joining can be attained in the overlapped portions J. Whereas this embodiment can be applied to open section structures as illustrated in FIG. 29B and FIG. 29C, it can be particularly suitably applied to closed section structures as illustrated in FIG. 29A.

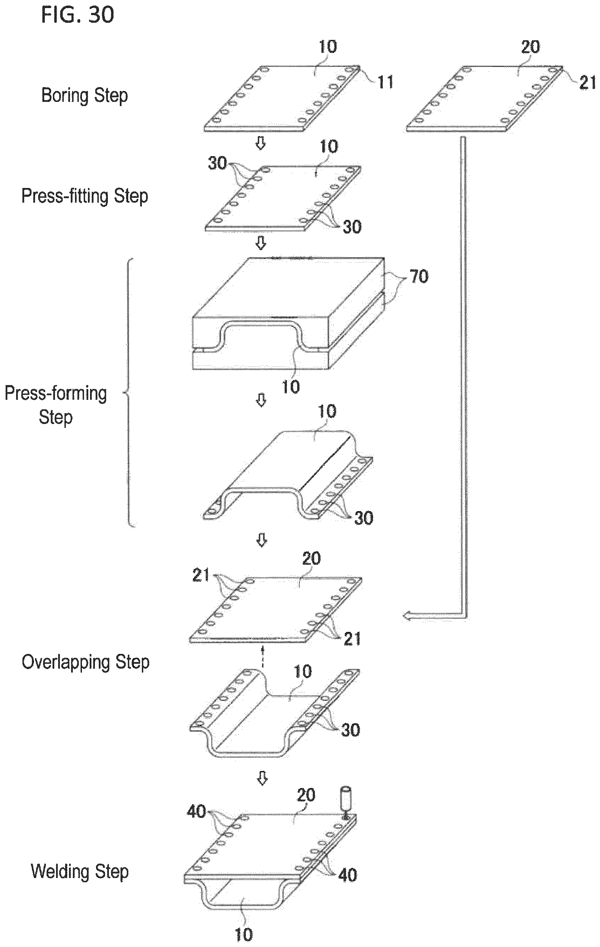

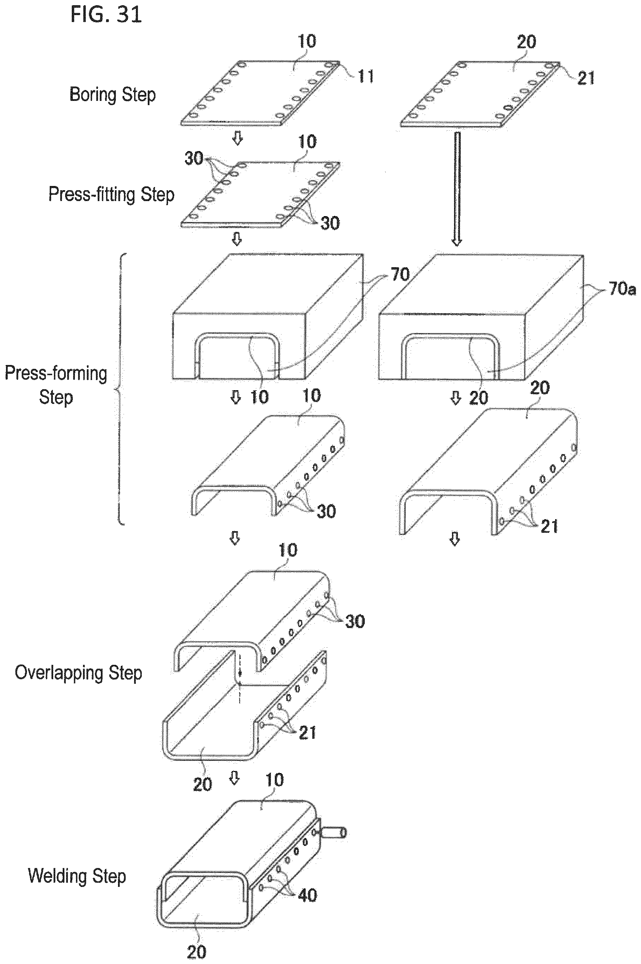

As illustrated in FIG. 30 and FIG. 31, in this joining method, the joining assist member 30 embedded in the bottom plate 10 does not protrude from the front and back surfaces of the bottom plate 10, so it is easy to press-form the bottom plate 10 in which the joining assist member 30 has been embedded (the bottom plate 10 with joining assist member) by using a die 70 or the like as a step preceding the welding step. As a subsequent step, the press-formed bottom plate 10 with the joining assist member and the top plate 20 are overlapped with each other and they are welded together. This welding method can, of course, be used for both an open section structure and a closed section structure without distinction. In FIG. 31, the top plate 20 is also press-formed by using a die 70a.

The bottom plate 10 with the joining assist member is easy to be handled because they are all formed in a substantially flat shape before the press forming step.

As described above, this welding method for dissimilar material joining in this embodiment includes: a step of making holes 11 and 21 through the bottom plate 10 made of materials other than steel and the top plate 20, respectively; a step of press-fitting the joining assist member 30 made of steel in the hole 11 of the bottom plate 10 such that an exposed surface of a flange portion 32 is substantially flush with the surface of the bottom plate 10 or is positioned inside the bottom plate 10, the joining assist member 30 having an outer shape with step having a shaft portion 31 and the flange portion 32, the shaft portion 31 having a constricted portion 39 on the flange portion side, and the relationship between the maximum outer diameter P_{D1} of the shaft portion 31, the width P_{D2} of the flange portion 32, and the diameter B_{D1} of the hole 11 of the bottom plate 10 satisfying P_{D2}>P_{D1}>B_{D1} ; a step of overlapping the bottom plate 10 and the top plate 20 such that the shaft portion 31 of the joining assist member 30 faces the hole 21 of the top plate 20; and a step of filling the hole 21 of the top plate 20 with the weld metal 40 and welding the top plate 20 and the joining assist member 30 by any of the following methods (a) to (f).

(a) A gas-shielded arc welding method using, as a consumable electrode, a welding wire to provide the weld metal 40 made of an iron alloy or nickel alloy;
(b) a non-gas arc welding method using the above welding wire as a consumable electrode;
(c) a gas tungsten arc welding method using the above welding wire as a non-consumable electrode filler;
(d) a plasma arc welding method using the above welding wire as a non-consumable electrode filler;
(e) a shielded metal arc welding method using, as a consumable electrode, a covered electrode to provide the weld metal 40 made of an iron alloy or nickel alloy; and
(f) a laser welding method using the above welding wire as a non-consumable electrode filler.

This method makes it possible to join the first plate (bottom plate 10) made of a material other than steel, such as an Al alloy or Mg alloy, and the second plate (top plate 20) made of steel using an inexpensive welding facility with quality of being high in strength and reliability, and can be applied to both an open section structure and a closed section structure with no limitations, and also can be applied to the case where the top plate 20 made of steel is on the front side.

In the filling and welding step, a laser is used in addition to the arc as a heat source in any of the above arc welding method (a) to (e), and welding is performed. This can further improve the working efficiency.

The thickness P_{H} of the joining assist member 30 is equal to or less than the thickness B_{H1} of the bottom plate 10, and the top plate 20 has a swell portion 22 formed by drawing, and in the overlapping step, the swell portion 22 of the top plate 20 is positioned inside the hole 11 of the bottom plate 10. This makes it possible to improve welding efficiency even when the thickness of the bottom plate 10 is large, to perform welding without burn-through failures, and to easily position the bottom plate 10 and the top plate 20.

The above method further includes, before the overlapping step, a step of applying an adhesive 60 to the whole periphery of the hole 11 of the bottom plate 10 and hole 21 of the top plate 20 in at least one of overlapped surfaces of the bottom plate 10 and the top plate 20. Thereby, the adhesive not only increases the strength of a joint but also serves as a sealing material and can lower the corrosion rates of the bottom plate 10, top plate 20 and weld metal 40.

The thickness P_{H} of the joining assist member 30 is equal to or less than the thickness B_{H1} of the bottom plate 10, and after the press-fitting step, the bottom plate 10 is press-formed. In other words, since the joining assist member 30 does not protrude from the surface of the bottom plate 10, the bottom plate 10 in which the joining assist member 30 has been press-fitted can be easily press-formed into a desired shape using a die or the like.

The thickness P_{H2} of the flange portion 32 of the joining assist member 30 is from 20% to 80% of the thickness B_{H1} of the bottom plate 10, so that the joining assist member 30 can function as a resistance to external stress in the thickness direction while ensuring the length of the shaft portion 31 that gives the swaging effect.

The width P_{D2} of the flange portion 32 of the joining assist member 30 is from 110% to 200% of the diameter B_{D1} of the hole 11 of the bottom plate 10, so that the joining assist member 30 can function as a resistance to external stress in the thickness direction while ensuring the press-fitting property of the joining assist member 30 in the bottom plate 10.

In the filling and welding step, the height P_{H3} of a space unfilled with the weld metal 40 from the surface of the top plate 20 is equal to or less than 30% of the thickness B_{H2} of the top plate 20, or an excess weld metal is formed for the surface of the top plate while completely filling the hole 21 of the top plate 20, so that the joint strength of the dissimilar material welded joint 1 can be ensured.

The joining assist member 30 in this embodiment is made of steel and has an outer shape with step having a shaft portion 31 and a flange portion 32, the relationship between the maximum outer diameter P_{D1} of the shaft portion 31, the width P_{D2} of the flange portion 32, and the diameter B_{D1} of the hole 11 of the bottom plate 10 is P_{D2} > P_{D1} > B_{D1}, and the shaft portion 31 has a constricted portion 39 on the flange portion side. This makes the joining assist member 30 suitable for the above welding method for dissimilar material joining.

The dissimilar material welded joint 1 in this embodiment includes a bottom plate 10 made of a material other than steel, a top plate 20 made of steel and joined to the bottom plate 10, and a joining assist member 30 made of steel. The bottom plate 10 and the top plate 20 have holes 11 and 21, respectively, the holes 11 and 21 being located coaxially. The joining assist member 30 has an outer shape with step having a shaft portion 31 and a flange portion 32. The relationship between the maximum outer diameter P_{D1} of the shaft portion 31, the width P_{D2} of the flange portion 32, and the diameter B_{D1} of the hole 11 of the bottom plate 10 is P_{D2} > P_{D1} > B_{D1}, and the shaft portion 31 has a constricted portion 39 on the flange portion side. The jointing assist member 30 is fixed in the hole 11 of the bottom plate 10 such that an exposed surface 32a of the flange portion 32 is substantially flush with the surface of the bottom plate 10 or is positioned inside the bottom plate 10. The bottom plate 10 and the top plate 20 are overlapped such that the shaft portion 31 of the joining assist member 30 faces the hole 21 of the top plate 20, and the hole 21 of the top plate 20 is filled with the weld metal 40 made of an iron alloy or nickel alloy, and the fusion zone W is formed by the weld metal 40 and a part of the melted portions of the top plate 20 and joining assist member 30.

As a result, for example, a dissimilar material welded joint 1 including a first plate (bottom plate 10) made of a material other than steel, such as an Al alloy or Mg alloy, and a second plate (top plate 20) made of steel can be joined with quality of being high in strength and reliability using an inexpensive welding facility, and can be applied to both an open section structure and a closed section structure without limitation, and can also be applied to the case where the top plate 20 made of steel is on the front side.

### [Second Embodiment]

Next, a welding method for dissimilar material joining, a joining assist member, and a dissimilar material welded joint in the second embodiment of the present invention are described in detail with reference to the drawings. This embodiment differs from the first embodiment in that the flange portion of the joining assist member is not embedded in the bottom plate and is made to contact the surface of the bottom plate.

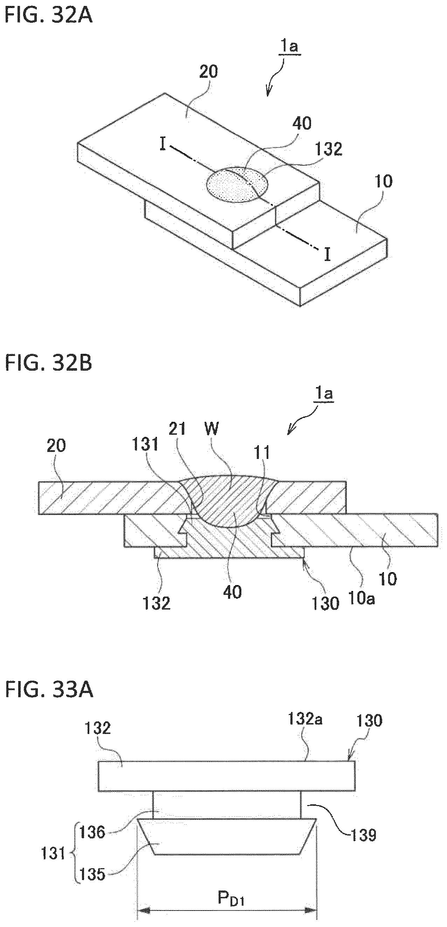

Similar to the first embodiment, by the welding method for dissimilar material joining in this embodiment, a bottom plate 10 (first plate) made of an aluminum alloy or magnesium alloy and a top plate 20 (second plate) made of steel, which are overlapped with each other, are joined via a solid steel-made joining assist member 130, by the arc welding method or laser welding method described below, thereby obtaining a dissimilar material welded joint 1a as illustrated in FIG. 32A and FIG. 32B.

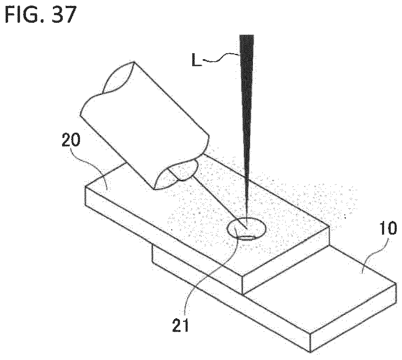

The bottom plate 10 has a circular hole 11 penetrating the bottom plate 10 in the thickness direction and the top plate 20 has a circular hole 21 penetrating the top plate 20 in the thickness direction, the holes 11 and 21 being located coaxially (see FIG. 37A). The insertion portion 131 of the joining assist member 130 is inserted under pressure into the hole 11 of the bottom plate 10.

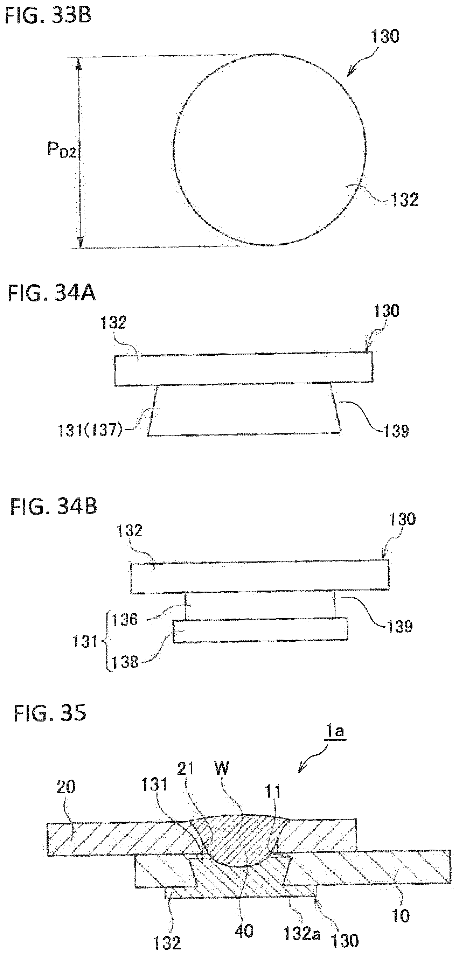

As illustrated in FIG. 33A and FIG. 33B, the joining assist member 130 has an outer shape with step having a shaft-shaped insertion portion 131 and a non-insertion portion 132 that is outwardly flanged with respect to the insertion portion 131. In other words, in the second embodiment, the joining assist member 130 also includes a shaft portion constituting the insertion portion 131 and a flange portion constituting the non-insertion portion 132.

The insertion portion 131 and the non-insertion portion 132 are formed to be solid. The non-insertion portion 132 is to be contact with the surface 10a of the bottom plate 10 (the lower surface of the bottom plate 10 in a state of having been joined with the top plate 20) in a state where the insertion part 131 is inserted into the hole 11 of the bottom plate 10.

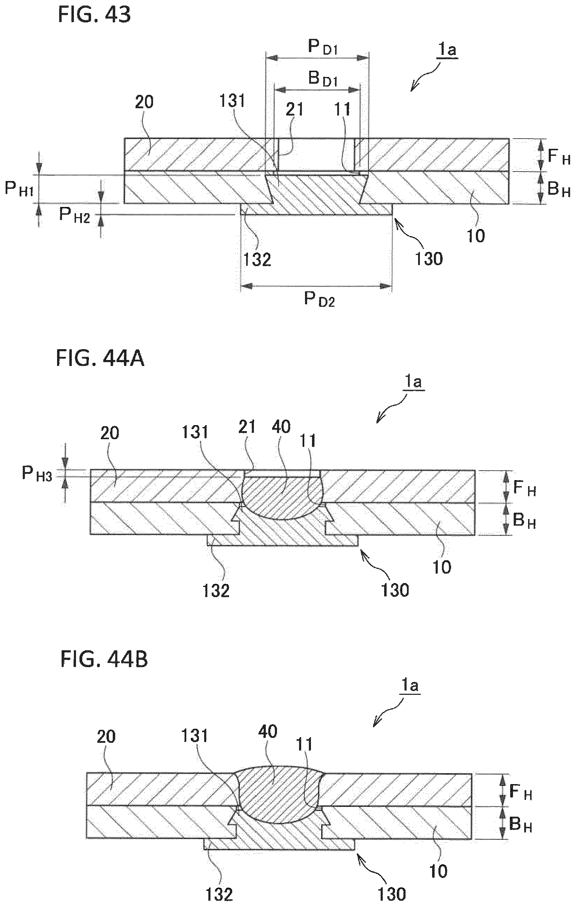

As for the joining assist member 130, as described below, the relationship between the maximum outer diameter P_{D1} of the insertion portion 131, the width P_{D2} of the non-insertion portion 132, and the diameter B_{D1} of the hole 11 of the bottom plate 10 satisfies P_{D2} > P_{D1} > B_{D1} (see FIG. 43).

The diameter of the hole 21 of the top plate 20 is not limited as long as the diameter is large enough to be filled with the weld metal 40 to be described below, and the diameter may be the same as the diameter B_{D1} of the hole 11 of the bottom plate 10, may be larger than the diameter B_{D1}, or may be smaller than the diameter B_{D1}.

Furthermore, in this embodiment, the outer shape of the insertion portion 131 is configured to have a constricted portion 139 on the non-insertion portion side. Specifically, the insertion portion 131 has a tapered portion 135 whose outer periphery gradually expands in diameter from the tip toward the non-insertion portion 132 and defines a maximum outer diameter P_{D1}, and a small-diameter cylindrical portion 136 whose diameter is smaller than the maximum outer diameter P_{D1} of the tapered portion 135. Therefore, the small-diameter cylindrical portion 136 gives the outers shape of the insertion portion 131 having a constricted portion 139 on the non-insertion portion side.

The outer shape of the insertion portion 131 is not particularly limited as long as the insertion portion 131 has a constricted portion 139 on the non-insertion portion side to ensure that the joining assist member 130 is fixed to the bottom plate 10 by swaging binding force. For example, as illustrated in FIG. 34A, the insertion portion 131 may be a reduced-diameter tapered portion 137 in which the outer periphery gradually reduces in diameter from the tip to the non-insertion portion 132. In addition, as illustrated in FIG. 34B, the insertion portion 131 may be configured to have a large-diameter cylindrical portion 138 provided on the tip side and a small-diameter cylindrical portion 136 provided on the non-insertion portion side.

Since the function of the constricted portion 139 is substantially the same in any of the joining assist members 130 illustrated in FIG. 33A, FIG. 34A, and FIG. 34B, the following description is made with arbitrary joining assist member 130. FIG. 35 is a sectional view of the dissimilar material welded joint 1a using the joining assist member 130 in FIG. 34A, which corresponds to that in FIG. 32B.

The outer shape of the non-insertion portion 132 of the joining assist member 130 is not limited to a circle shape as illustrated in FIG. 33B, and can be any shape as long as it blocks the hole 11 opened in the bottom plate 10. In other words, just like the joining assist member 30 in the first embodiment, the outer shape can be an oval shape as illustrated in FIG. 5B or a polygonal shapes with at least four sides as illustrated in FIG. 2B, and FIG. 5C to FIG. 5F. In addition, the corners of the polygonal shapes may be rounded, as illustrated in FIG. 5D.

In these joining assist members 130, the width P_{D2} of the non-insertion portion 132 described below is specified by the shortest distance between opposing surfaces.

As described above, the insertion portion 131 of the joining assist member 130 is located coaxially with the hole 11 of the bottom plate 10 by press-fitting the insertion portion 131 in the bottom plate 10.

Furthermore, the hole 21 of the top plate 20 is filled with a weld metal 40 made of iron alloy or nickel alloy obtained by melt of a filler material (welding material) by arc welding, and a fusion zone W is formed by the weld metal 40 and a part of the melted portions of the top plate 20 and joining assist member 130. Therefore, the fusion zone W is disposed inside the hole 21 of the top plate 20 and the joining assist member 130 and the top plate 20 are welded by the fusion zone W, and as a result, the bottom plate 10 in which the joining assist member 130 has been press-fitted and the top plate 20 are welded.

In the second embodiment described above, circular holes 11 and 21 are provided in the bottom plate 10 and the top plate 20, respectively. However, the shape of the holes 11 and 21 are not limited to circular and the holes 11 and 21 with various shapes other than the circular shape can be used as long as the insertion part 131 of the joining assist member 130 can be inserted therein. For example, triangle shapes, square shapes, polygon shapes having more than four sides, or oval shape can be used. In the case where the shape of the hole 11 or 21 is not circle, the diameter B_{D1} of the hole is defined by a diameter of the inscribed circle of the hole.

The axial cross-section of the insertion part 131 is desirably similar to a cross-section of the hole 11 of the bottom plate 10 because press-fitting can be easily performed. For example, in a case where the shape of the hole 11 is polygonal shape, the axial cross-section of the shaft portion 31 should be similar to that of the hole 11 to prevent the bottom plate 10 from rotating relative to the top plate 20.

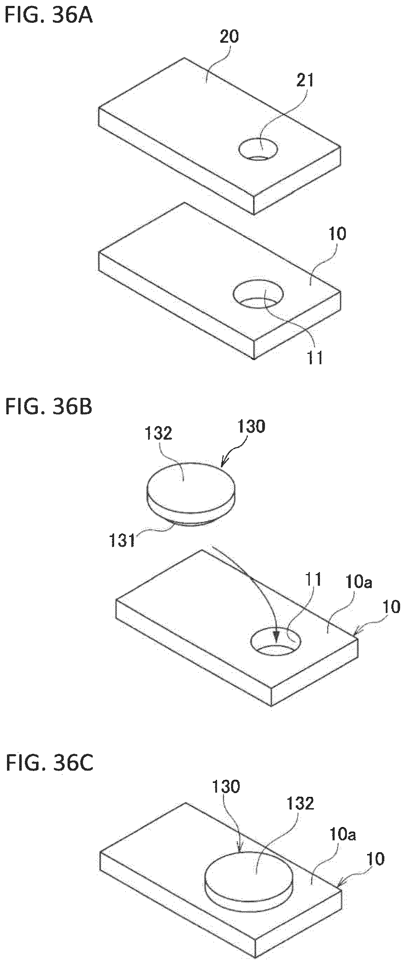

A welding method for dissimilar material joining for forming the dissimilar material welded joint 1a is described below with reference to FIG. 36A to FIG. 36E.

First, as illustrated in FIG. 36A, boring work for making holes 11 and 12 through the bottom plate 10 and top plate 20, respectively, is performed (step S1).

Next, as illustrated in FIG. 36B and FIG. 36C, the insertion portion 131 of the joining assist member 130 is press-fitted in the hole 11 of the bottom plate 10 from the surface 10a of the bottom plate 10 (step S2).

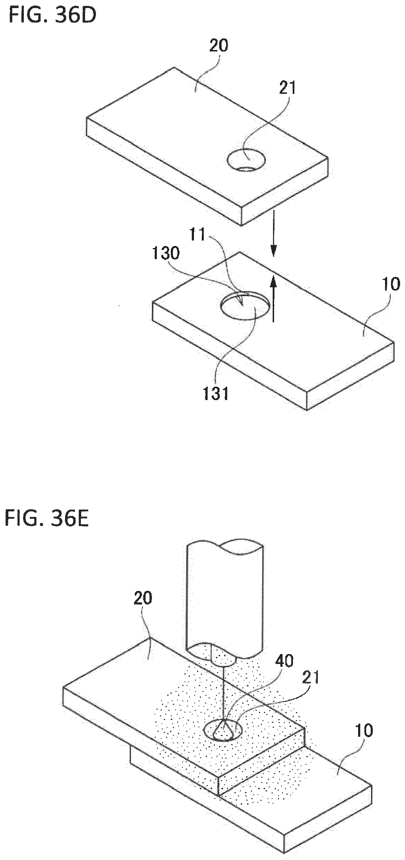

Then, as illustrated in FIG. 36D, the bottom plate 10 in which the joining assist member 130 has been fitted is reversed, and overlapping work of allowing the bottom plate 10 and the top plate 20 to be overlapped with each other is performed such that the insertion portion 131 of the joining assist member 130 faces the hole 21 of the top plate 20 (step S3). In other words, in this state, the insertion portion 131 of the joining assist member 130 press-fitted in the bottom plate 10 is positioned on the top plate 20 side as compared with the non-insertion portion 132, and the hole 11 of the bottom plate 10 and the hole 21 of the top plate 20 are coaxially located.

Subsequently, as illustrated in FIG. 36E and FIG. 37, the bottom plate 10 and the top plate 20 are joined to each other by performing any arc welding work of (a) a consumable-electrode gas-shielded arc welding method, (b) a non-gas arc welding method, (c) a gas tungsten arc welding method, (d) a plasma arc welding method, and (e) a shielded metal arc welding method, or (f) laser welding work (step S4).

FIG. 36E illustrates a case where arc welding work is performed by (a) the consumable-electrode gas-shielded arc welding method.

As for the boring work in step S1, the overlapping work in step S3, and the welding work in step S4, those described in the first embodiment are applied.

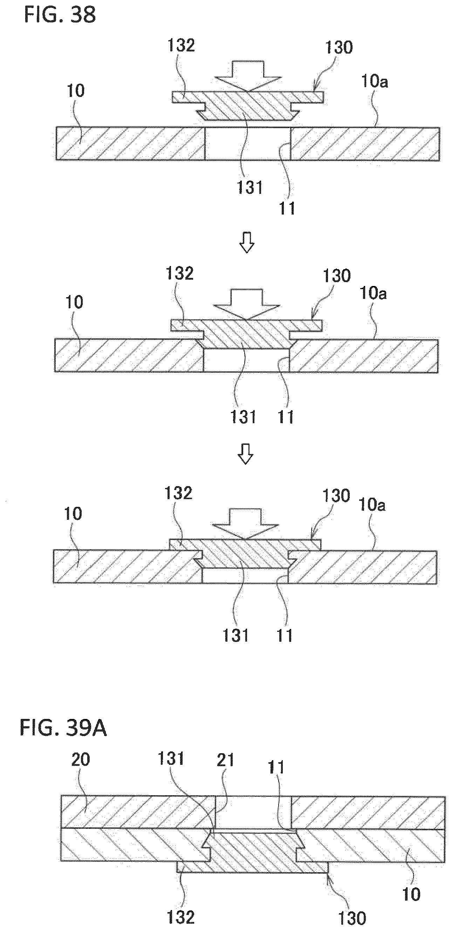

On the other hand, in the press-fitting operation in step S2, the insertion portion 131 of the joining assist member 130 is press-fitted in the hole 11 of the bottom plate 10 from the surface 10a side until the non-insertion portion 132 contacts the surface 10a of the bottom plate 10, as illustrated in FIG. 38.

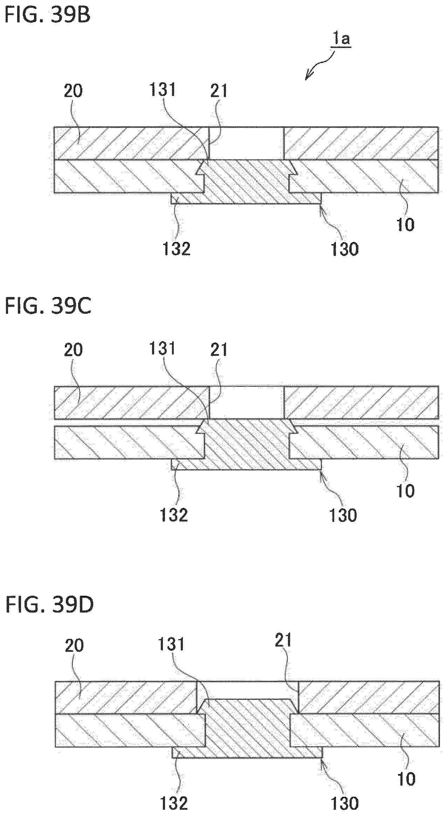

On the other hand, the position of the lower surface (the tip surface of the insertion portion 131) of the joining assist member 130 after press-fitting to the bottom plate 10 can be selected depending on applications. For example, in a case where the diameter of the hole 21 of the top plate 20 is smaller than the outer diameter of the insertion portion 131 of the joining assist member 130 during joining, the case where the joining assist member 130 protrudes from the surface of the bottom plate 10 is undesirable because it cause a gap when the bottom plate 10 and top plate 20 are overlapped with each other, resulting in poor assembly accuracy. For this reason, as illustrated in FIG. 39A and FIG. 39B, the insertion portion 131 of the joining assist member 130 is preferably designed to have a height P_{H1} being equal to or less than the thickness B_{H} of the bottom plate 10.

However, in a case where the occurrence of a gap between the top plate 20 and the bottom plate 10 is expected in the design stage, it is acceptable to use the joining assist member 130 protruding from the back surface (the upper surface of the bottom plate 10 in a state where the joining assist member is joined to the top plate 20) within the gap, as illustrated in FIG. 39C. Alternatively, in a case where the diameter of the hole 21 of the top plate 20 is larger than the outer diameter of the insertion portion 131 of the joining assist member 130, as illustrated in FIG. 39D, such a case is preferable because the protruding portion of the joining assist member 130 serves as a guide for overlapping, and the temporary fixability during welding work is high.

The press-fitting work can be done by any means, and examples of practical method thereof include striking with a hammer and using a press machine powered by oil pressure, water pressure, air pressure, gas pressure or electric drive.

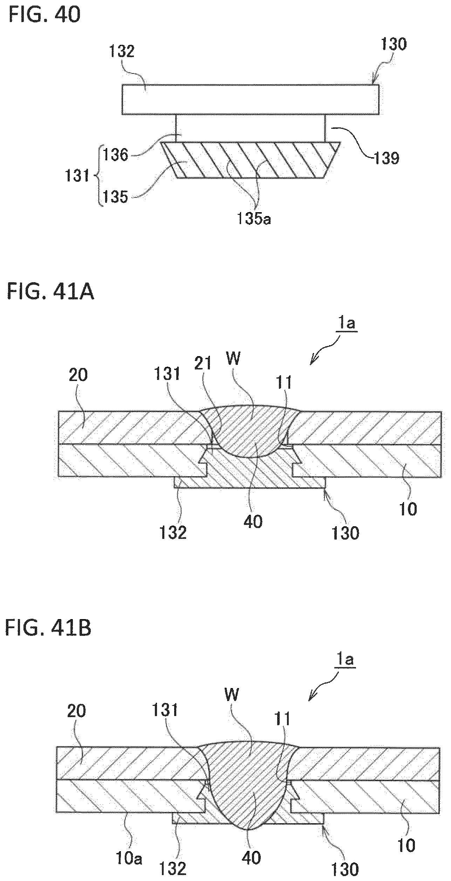

It is also possible to turn in while applying pressure, and in a case of using such a method, the tip of the insertion portion 131 can be provided with regular undulations in the shape of a screw to facilitate turning. For example, as illustrated in FIG. 40, a spiral groove 135a may be formed in the tapered portion 135 of the insertion portion 131.

In a case where the pressing pressure is high, not only the insertion portion 131 but also a part of the non-insertion portion 132 may be unavoidably pressed into the base metal of the bottom plate 10, but there is no particular problem as long as the base metal of the bottom plate 10 is not cracked or something like this does not occur.

Also in this embodiment, as for the penetration of the weld metal 40, the joining assist member 130 is necessary to be moderately melted, as illustrated in FIG. 41A. As illustrated in FIG. 41B, there is no problem even if the weld metal 40 is formed over the range beyond the thickness of the joining assist member 130, i.e. melting is conducted until so-called penetration bead is formed.

However, if the joining assist member 130 does not melt and the weld metal 40 just puts on it, high strength cannot be obtained as a joint because the metal bond is incomplete. In addition, in a case where other member(s) is assembled so as to be in contact with the surface 10a of the bottom plate 10, the protrusion of the weld metal 40, which is the penetration bead, is an obstacle, so it is of course necessary to avoid such an excessive penetration state. Furthermore, welding is necessary to be performed such that the weld metal 40 does not melt down due to deep penetration of the weld metal 40.

With the above work, the first plate (bottom plate 10) made of materials other than steel and the second plate (top plate 20) made of steel are joined with high strength.

The role of the steel-made joining assist member 130 used in the above welding method is substantially the same as that of the joining assist member described in the section of the first embodiment.

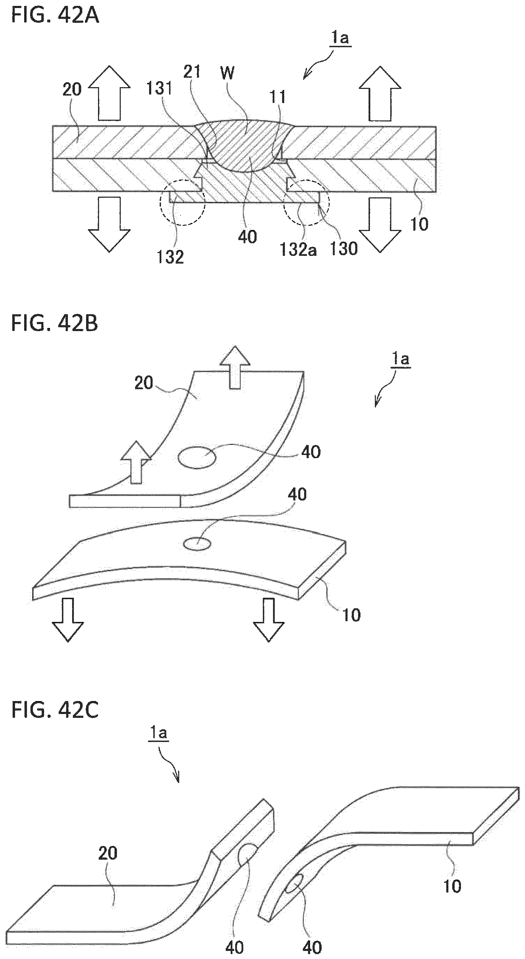

In other words, unlike the first embodiment, the primary role of the non-insertion portion 132 of the joining assist member 130, which is not embedded in the bottom plate 10, is also resistance to vertical peeling stress. As illustrated in FIG. 42A, the use of a joining assist member 130 having an appropriate size can prevent the joining assist member 130 from being peeled from the bottom plate 10 at the interface therebetween and falling out. In general, the weld metal 40 breaks after sufficient plastic deformation. Since the weld metal 40 has a strong bonding force enough to be resistant to tensile stress in the shear direction, bending deformation of the base metal first occurs without brittle fracture (see FIG. 42C), and the stress state thereof is similar to that of vertical peeling tension (see FIG. 42B). In other words, after sufficient deformation, ductile fracture occurs with high strength.

As for the non-insertion portion 132 of the joining assist member 130, the larger the area thereof and the larger the height P_{H2} thereof are, the larger the strength against external stress in the thickness direction (three-dimensional direction) is, which is desirable. However, in the case where the area and height are larger than necessary, it causes a weight increase factor and excessive protrusion from the surface of the top plate 20, resulting in deterioration of aesthetic appearance and occurrence of interference with other parts in proximity, and therefore, the area and height should be controlled to appropriate size depending on necessary design.

FIG. 43 illustrates the various dimensions of the joining assist member 130. In other words, in this embodiment, in addition to the provision that the relationship between the maximum outer diameter P_{D1} of the insertion portion 131, the width P_{D2} of the non-insertion portion 132, and the diameter B_{D1} of the hole 11 of the bottom plate 10 is P_{D2} > P_{D1} > B_{D1}, the dimensions of the joining assist member 130 are specified as follows.

### Height P_{H1} of insertion part

The height P_{H1} of the insertion portion 131 is set to be equal to or larger than 10% of the thickness B_{H} of the bottom plate 10 and less than the total thickness B_{H}+F_{H} of the bottom plate 10 and the top plate 20. The insertion portion 131 of the joining assist member 130 has a temporary binding effect by means of swaging obtained by press-fitting it in the bottom plate 10 as described above. The larger the height P_{H1} of the insertion portion 131 is, the larger the swaging effect is and the insertion portion 131 hardly comes off. In the case where the height P_{H1} of the insertion portion 131 is less than 10% of the thickness of the bottom plate, the swaging effect is hardly obtained and the state is unstable, so the height P_{H1} is desirable to be equal to or larger than 10% of the thickness B_{H}.

On the other hand, the upper limit of the height P_{H1} of the insertion portion 131 is not necessarily equal to the thickness B_{H} of the bottom plate 10, i.e., 100%, and as described above, it may be desirable to have it actively protruding on the top plate side. However, in a case where the height P_{H1} of the insertion portion 131 is high enough to fill all of the holes 21 of the top plate 20, a space to be filled with weld metals is not formed and it becomes difficult to weld the top plate 20 and the joining assist member 130, so the back surface position of the joining assist member 130 is desirably inside the top plate 20. This means that the height P_{H1} of the insertion portion 131 is smaller than the total thickness B_{H}+F_{H} of the bottom plate 10 and the top plate 20.

### Maximum diameter P_{D1} of insertion portion

The maximum diameter of the insertion portion 131 is set to be from 102% to 125% of the diameter B_{D1} of the hole 11 opened in the bottom plate 10. The insertion portion 131 of the joining assist member 130 has a function of swaging binding by press-fitting it in the bottom plate 10. In order to obtain such an effective, it is necessary to be larger than the diameter B_{D1} of the bottom plate 10. It is necessary to be larger than the diameter B_{D1} by at least 2% to apply proper pressure near the hole 11 of the bottom plate 10. Hence, the maximum diameter P_{D1} of the insertion portion 131 is equal to or larger than 102% of the diameter B_{D1}.

On the other hand, the larger the maximum diameter P_{D1} of the insertion portion 131 is, the larger the swaging force is, but a force required for press-fitting becomes large, and therefore, simplicity may be impaired and it may not be able to withstand the pressure around the hole 11 of the bottom plate 10, which could lead to cracking. For these reasons, the upper limit of the maximum diameter P_{D1} of the insertion portion 131 is determined, and is specifically 125%.

### Width P_{D2} of non-insertion portion

The width P_{D2} of the non-insertion portion 132 is designed to be equal to or larger than 105% of the diameter B_{D1} of the hole 11 of the bottom plate 10. The joining assist member 130 has a main role of resisting an external stress in the thickness direction, i.e., a peeling stress. In the configuration of the joining assist member 130, the insertion portion 131 also has some resistance to the peeling stress due to its swaging effect on the bottom plate 10, but the non-insertion portion 132 plays a relatively larger role. The larger the size of the non-insertion portion 132 and the higher the height thereof are, the larger the strength against external stress in the thickness direction (three-dimensional direction) is, which is desirable.

In the case where the width P_{D2} of the non-insertion portion 132 is less than 105% of the diameter B_{D1}, when the non-insertion portion 132 is elasto-plastically deformed by the external stress in the thickness direction, the non-insertion portion 132 may easily have an apparent diameter being equal to or less than the size of the hole 11 of the bottom plate 10, so that the bottom plate can easily come off. In other words, the non-insertion portion 132 does not exhibit high resistance. Therefore, the lower limit of the width P_{D2} of the non-insertion portion 132 is 105% of the diameter B_{D1}. More preferably, the lower limit of the width P_{D2} of the non-insertion portion 132 is 120% of the diameter B_{D1}. On the other hand, there is no need to set the upper limit in terms of joint strength.

As described above, in the case where the shape of the hole 11 is other than circle, the width P_{D2} of the non-insertion portion 132 is preferably equal to or larger than 105% of the diameter of the circumscribed circle of the hole 11 of the bottom plate 10 for achieving the state where the hole 11 is completely blocked by the non-insertion portion 132.

### Height P_{H2} of non-insertion portion

The height P_{H2} of the non-insertion portion 132 is designed to be from 50% to 150% of the thickness B_{H} of the bottom plate 10. As described above, the larger the width P_{D2} of the non-insertion portion 132 of the joining assist member 130 and the higher the height P_{H2} thereof are, the larger the strength against external stress in the thickness direction (three-dimensional direction) is, which is desirable. The height P_{H2} of the non-insertion portion 132 can be increased depending on the thickness B_{H} of the bottom plate 10 to provide high resistance. In the case where the height P_{H2} of the non-insertion portion 132 is less than 50% of the thickness B_{H} of the bottom plate 10, the non-insertion portion 132 of the joining assist member 130 is easily elasto-plastically deformed by external stress in the thickness direction, and the non-insertion portion 132 may have an apparent width being equal to or less than the size of the hole 11 opened in the bottom plate 10, so that the bottom plate can easily come off. In other words, the non-insertion portion 132 does not exhibit high resistance. Therefore, the lower limit of the height P_{H2} of the non-insertion portion 132 is desirably 50% of the thickness B_{H} of the bottom plate 10.

On the other hand, in the case where the height P_{H2} of the non-insertion portion 132 exceeds 150% of the thickness B_{H} of the bottom plate 10, although there is no problem in terms of joint strength, excessively overhanging shape is made, which is not only bad in appearance but also makes the weight pointlessly heavy. Therefore, the height P_{H2} is desirably equal to or less than 150% of the thickness B_{H}.

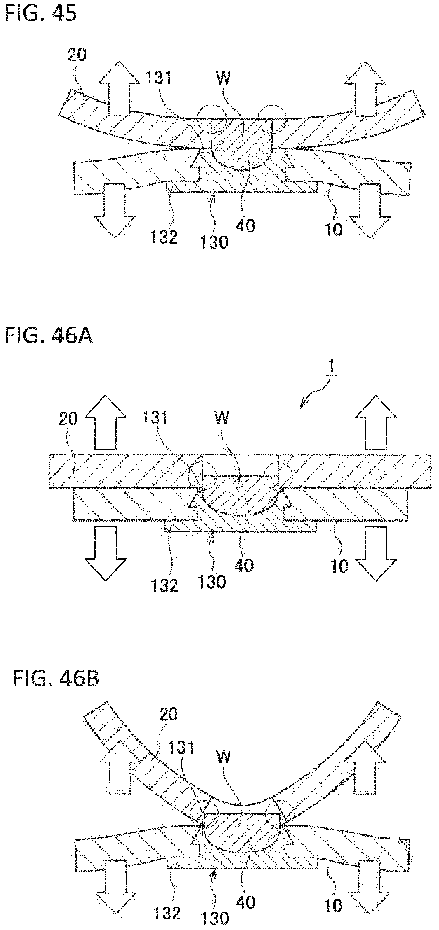

As illustrated in FIG. 44A, the height P_{H3} of the space unfilled with the weld metal 40 from the surface of the top plate 20 is set to be equal to or less than 30% of the thickness F_{H} of the top plate 20. It is desirable that the hole 21 of the top plate 20 is filled with the weld metal 40 and the height of the surface position is equal to that of the surface of the top plate 20. As illustrated in FIG. 45, this prevents the deformation of the joining assist member 130 caused by external stress in the thickness direction (three-dimensional direction) and gives high strength. On the other hand, as illustrated in FIG. 46A, in a case where the unfilled height P_{H3} is excessively large, the bonding area between the joining assist member 130 and the weld metal 40 is small, resulting in low joining strength. In a case where filling is performed at only less than 70% of the thickness F_{H} of the top plate 20, the joint joining strength is significantly low, and as illustrated in FIG. 46B, the joining assist member 130 easily deforms and the bottom plate 10 easily comes off. For this reason, the unfilled height P_{H3} should be equal to or less than 30% of the thickness F_{H} of the top plate 20.

On the other hand, ideally, the hole is filled with the weld metal 40 desirably such that the height thereof is equal to that of the surface of the bottom plate 10, as described above. However, when the dissimilar material welded joint 1a is assembled into a larger structure after joining, in a case where there is room in the upper space of the joint, the whole of the hole 21 of the top plate 20 may be filled with the weld metal 40 and an excess weld metal may be further formed thereon, as illustrated in FIG. 44B.

It is not always necessary to restrict the thickness of the bottom plate 10 and top plate 20, but taking working efficiency and lap welding shape into consideration, the thickness of the top plate 20 is desirably 4.0 mm or less. On the other hand, taking a heat input of arc welding into consideration, unduly small thickness causes burn-through during welding and makes the welding difficult, and therefore, it is desirable that the thickness of each of the bottom plate 10 and the top plate 20 be 0.5 mm or more.

With the above configurations, the bottom plate 10 made of an aluminum alloy or magnesium alloy and the top plate 20 made of steel can be joined strongly.

In also the above second embodiment, the method of combining aluminum alloy or magnesium alloy with steel material, etc., is described, but in the present invention, the first plate (bottom plate) 10 is not limited as long as the material is made of materials other than steel, and applicable examples thereof include members made of carbon fiber reinforced plastics (CFRP), non-ferrous metals, resins, composite materials of resins and metals, and ultra-high tensile steel of 1700 MPa or higher.

It is common that the direct joining of different kinds of metals is associated with a problem other than the formation of IMCs. That is, when different kinds of metals are brought into contact with each other, a galvanic cell is formed, which is a cause of accelerating corrosion. Corrosion caused by this phenomenon (anode reaction in the cell) is called electric corrosion. Corrosion is accelerated when water exists in an interface where different kinds of metals are in contact with each other. Thus, in a case where this embodiment is applied to a joining location into which water is prone to intrude, it is necessary to subject the joining location to sealing treatment for preventing intrusion of water to prevent electric corrosion. Also in this joining method, in the case where a metal material other than steel, such as an Al alloy or Mg alloy, is used as the first plate, since there are plural interfaces where different kinds of metals come into contact with each other, it is preferable to use a resin-based adhesive not only for further increase in joint strength but also as a sealing material.

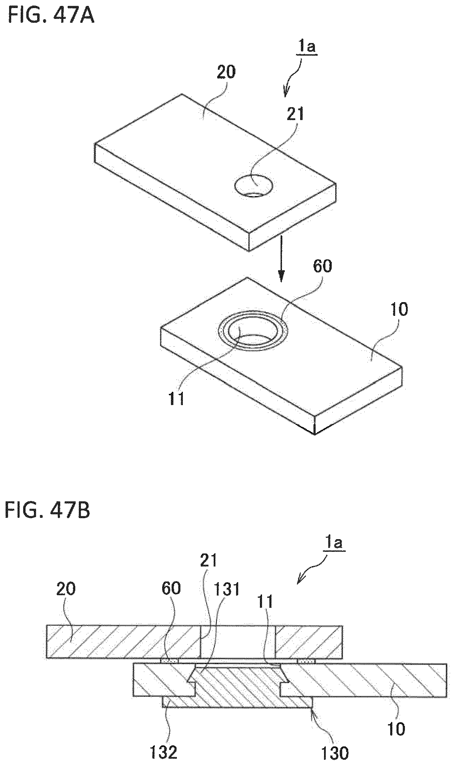

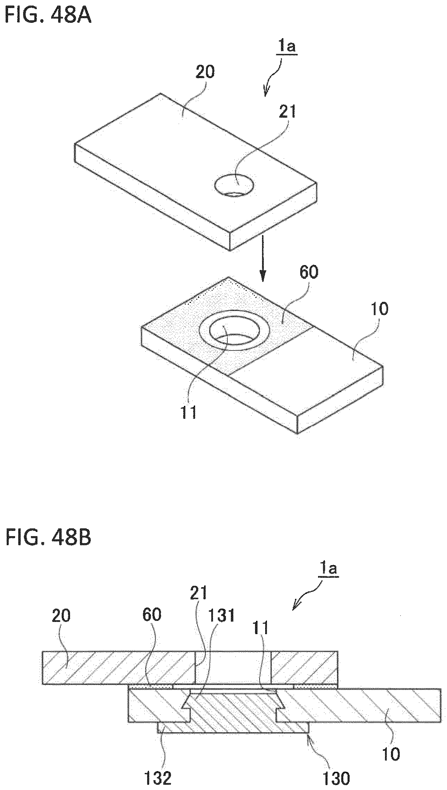

For example, as in the first modification illustrated in FIG. 47A and FIG. 47B, an adhesive 60 may be applied in a ring-like shape to the whole periphery of a welding portion in the joining surfaces of the bottom plate 10 and the top plate 20. Examples of the method for applying the adhesive 60 to the whole periphery of a welding portion in the joining surfaces of the bottom plate 10 and the top plate 20 includes a method in which the adhesive 60 is applied to the entire area of the joining surface excluding the welding portion, as in the second modification illustrated in FIG. 48A and FIG. 48B. This makes it possible to lower the electric corrosion rates of the bottom plate 10, top plate 20, and weld metal 40.

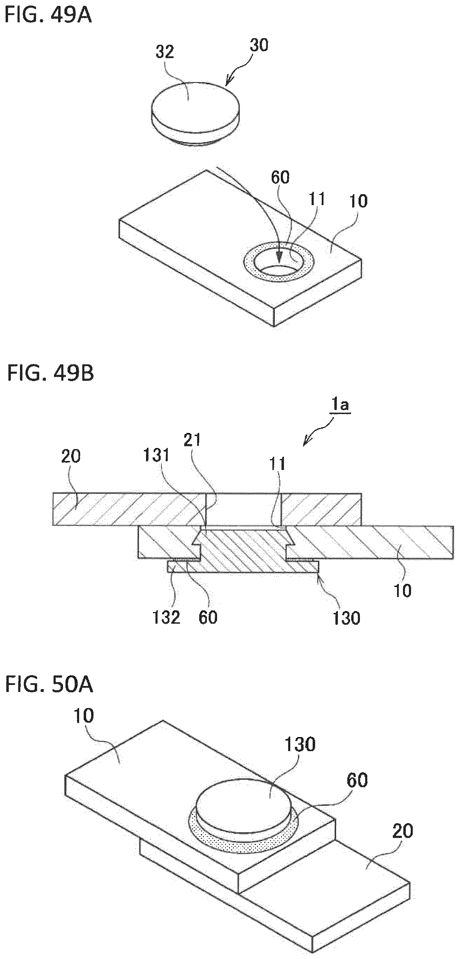

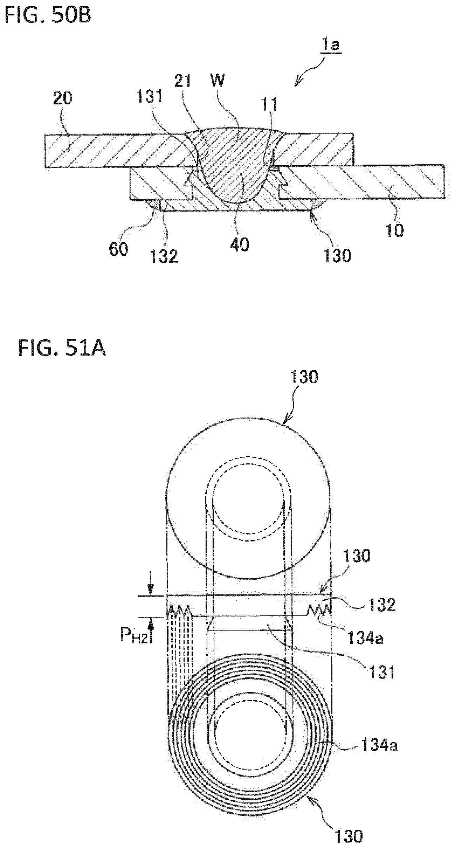

As in the third modification illustrated in FIG. 49A and FIG. 49B, the adhesive 60 may be applied to at least one of facing surfaces of the non-insertion portion 132 of the joining assist member 130 and the periphery of the hole 11 of the bottom plate 10 to face the non-insertion portion 132. Further, the adhesive 60 may be applied to the boundary between the non-insertion portion 132 of the joining assist member 130 and the surface of the bottom plate 10, as in the fourth modification illustrated in FIG. 50A and FIG. 50B.

In both the third and fourth modifications, intrusion of water from the boundary between the non-insertion portion 132 of the joining assist member 130 and the surface of the bottom plate 10 can be prevented to prevent electrical corrosion.

In the third modification illustrated in FIG. 49A and FIG. 49B, the application can be performed only during the insertion step, but in the fourth modification illustrated in FIG. 50A and FIG. 50B, the application can be performed during the insertion step or even after the filling and welding step.

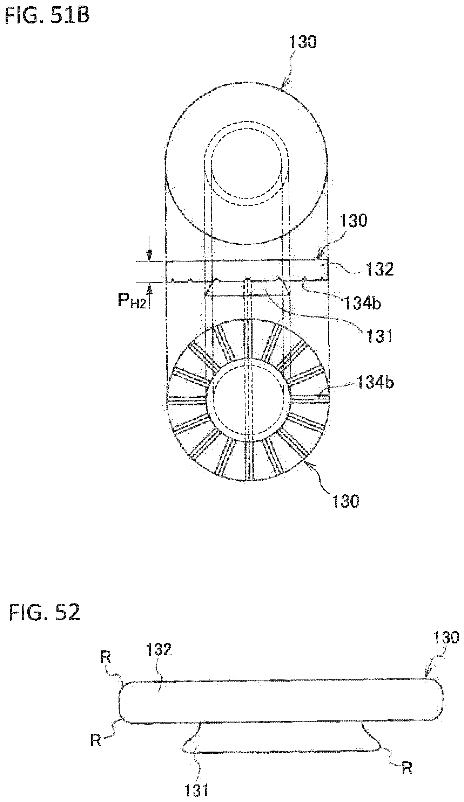

The contact surface between the joining assist member 130 and the bottom plate 10 does not necessarily have to be a flat surface as illustrated in FIG. 33A. That is, the contact surface between the joining assist member 130 and the bottom plate 10 may have a slit 134a or 134b as necessary, as illustrated in FIG. 51A and FIG. 51B. In particular, in a case where a circumferential slit 134a, a radial slit 134b, or a grid-like slit (not illustrated) is provided on the side of a surface to be contacted with the bottom plate 10, the adhesive to be applied enters the gaps between the slits 134a or 134b and does not escape, and as a result, stable adhesion and the sealing effect can be ensured. In the case of such a non-flat surface, the thickness P_{H2} of the non-insertion portion 132 of the joining assist member 130 is defined based on a part where the height thereof is the largest.

As illustrated in FIG. 52, the modification in which positions corresponding to edges of the joining assist member 130 have a roundness R in terms of safety in use and restrictions during forging causes no problem.

Furthermore, the top plate 20 may have a swell portion 22, as in the modification illustrated in FIG. 27A. In this case, the height P_{H1} of the insertion portion 131 is designed to be less than the thickness BH of the bottom plate 10 (see FIG. 43).

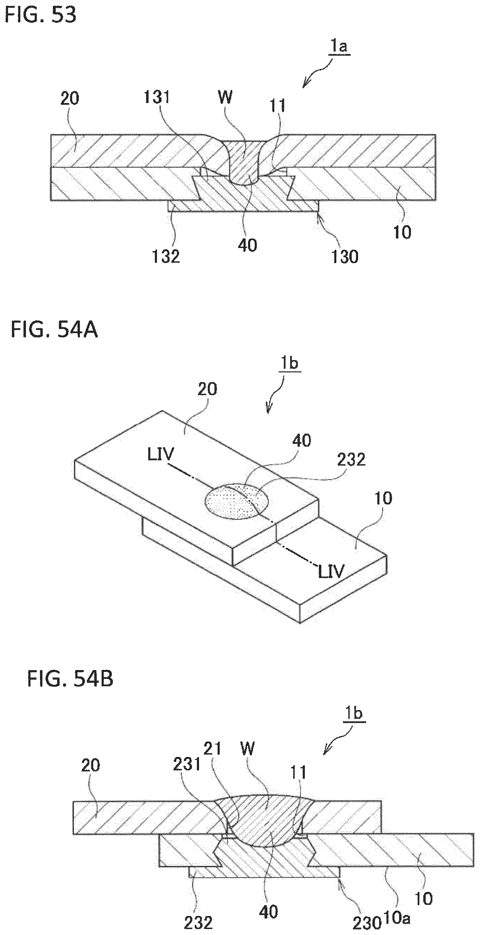

In a case where the thickness of the bottom plate 10 is relatively small, the top plate 20 can be welded well by simply making a hole in the top plate 20 as described above. However, in a case where the thickness of the bottom plate 10 is large, it takes time to fill the holes 11 of the bottom plate 10 in the welding step, resulting in poor efficiency. Also, the amount of heat is excessive, and a part of the joining assist member 130 tends to cause burn-through before the filling is completed. For this reason, in the case where the top plate 20 has the swell portion 22 by drawing, as illustrated in FIG. 53, the volume of the hole 11 can be reduced and the hole 11 can be filled while preventing a burn-through failure.

It also prevents the excess weld metal on the weld metal 40 from protruding from the surface of the top plate 20, resulting in improvement of its appearance or prevention of interference with other members. Furthermore, by providing a swell portion 22 at the welding portion of the top plate 20, the top plate 20 can be easily positioned with respect to the hole 11 of the bottom plate 10, making it easy to overlap the bottom plate 10 and the top plate 20. This effect can be obtained regardless of a thickness of a plate, so applying a drawing process to the top plate 20 is effective regardless of a thickness of a plate.

The drawing process for the swell portion 22 is the same as that described in the first embodiment.

Since the welding method in this embodiment can also be called spot welding with a small joining area, in the case of joining overlapped portions J of materials for actual use having a relatively large joining area, this welding method may be performed at plural positions, as illustrated in FIG. 29A to FIG. 29C. Then, strong joining can be attained in the overlapped portions J. Whereas this embodiment can be applied to open section structures as illustrated in FIG. 29B and FIG. 29C, it can be particularly suitably applied to closed section structures as illustrated in FIG. 29A.

As described above, this welding method for dissimilar material joining in this embodiment includes: a step of making holes 11 and 21 through the bottom plate 10 and the top plate 20, respectively; a step of placing the solid steel-made joining assist member 130 having an outer shape with step having an insertion portion 131 and the non-insertion portion 132 on the surface of the bottom plate 10 and press-fitting the insertion portion 131 in the hole 11 of the bottom plate 10, the insertion portion 131 having a constricted portion 139 on the non-insertion portion side, and the relationship between the maximum outer diameter P_{D1} of the insertion portion 131, the width P_{D2} of the non-insertion portion 132, and the diameter B_{D1} of the hole 11 of the bottom plate 10 satisfying P_{D2}>P_{D1}>B_{D1}; a step of overlapping the bottom plate 10 and the top plate 20 such that the insertion portion 131 of the joining assist member 130 faces the hole 21 of the top plate 20; and a step of filling the hole 21 of the top plate 20 with the weld metal 40 and welding the top plate 20 and the joining assist member 130 by any of the following methods (a) to (f).

(a) A gas-shielded arc welding method using, as a consumable electrode, a welding wire to provide the weld metal 40 made of an iron alloy or nickel alloy;
(b) a non-gas arc welding method using the above welding wire as a consumable electrode;
(c) a gas tungsten arc welding method using the above welding wire as a non-consumable electrode filler;
(d) a plasma arc welding method using the above welding wire as a non-consumable electrode filler;
(e) a shielded metal arc welding method using, as a consumable electrode, a covered electrode to provide the weld metal 40 made of an iron alloy or nickel alloy; and
(f) a lase welding method using the above welding wire as a non-consumable electrode filler.

This method makes it possible to join the first plate (bottom plate 10) made of a material other than steel, such as an Al alloy or an Mg alloy, and the second plate (top plate 20) made of steel using an inexpensive welding facility with quality of being high in strength and reliability, and can be applied to both an open section structure and a closed section structure with no limitations, and also can be applied to the case where the top plate 20 made of steel is on the front side.

In the filling and welding step, a laser is used in addition to the arc as a heat source in any of the above arc welding method (a) to (e), and welding is performed. This can further improve the working efficiency.

The height P_{H1} of the insertion portion 131 of the joining assist member 130 is less than the thickness B_{H1} of the bottom plate 10, and the top plate 20 has a swell portion 22 formed by drawing, and in the overlapping step, the swell portion 22 of the top plate 20 is positioned inside the hole 11 of the bottom plate 10. This makes it possible to improve welding efficiency even when the thickness of the bottom plate 10 is large, to perform welding without burn-through failures, and to easily position the bottom plate 10 and the top plate 20.

The above method further includes, before the overlapping step, a step of applying an adhesive 60 to the whole periphery of the hole 11 of the bottom plate 10 and hole 21 of the top plate 20 in at least one of overlapped surfaces of the bottom plate 10 and the top plate 20. Thereby, the adhesive not only increases the strength of a joint but also serves as a sealing material and can lower the corrosion rates of the bottom plate 10, top plate 20 and weld metal 40.

In the insertion step, the adhesive 60 is applied to at least one of facing surfaces of the non-insertion portion 132 of the joining assist member 130 and the bottom plate 10 facing the non-insertion portion 132. Also in this case, the adhesive 60 not only increases the strength of a joint but also serves as a sealing material and can lower the corrosion rates of the bottom plate 10, top plate 20 and weld metal 40.

In addition, in the insertion step or after the filling and welding step, the adhesive 60 is applied to the boundary between the non-insertion portion 132 of the joining assist member 130 and the surface of the bottom plate 10. Also in this case, the adhesive 60 not only increases the strength of a joint but also serves as a sealing material and can lower the corrosion rates of the bottom plate 10, top plate 20 and weld metal 40.

Since the height P_{H1} of the insertion portion 131 of the joining assist member 130 is equal to or larger than 10% of the thickness B_{H} of the bottom plate 10 and is less than the total thickness B_{H}+F_{H} of the bottom plate 10 and the top plate 20, the insertion portion 131 can give a temporary binding effect by means of swaging and a space to be filled with the weld metal 40 can be ensured.

Since the maximum diameter P_{D1} of the insertion portion 131 of the joining assist member 130 is from 102% to 125% of the diameter B_{D1} or B_{D2} of the hole 11 of the bottom plate 10, the insertion portion 131 can give a temporary binding effect by means of swaging and also can prevent the hole 11 of the bottom plate 10 from being damaged.

Since the width P_{D2} of the non-insertion portion 132 of the joining assist member 130 is equal to or larger than 105% of the diameter B_{D1} or B_{D2} of the hole 11 of the bottom plate 10, the joining assist member 130 can function as a resistance to external stress in the thickness direction.

Since the height P_{H2} of the non-insertion portion 132 of the joining assist member 130 is from 50% to 150% of the thickness B_{H} of the bottom plate 10, the joining assist member 130 can function as a resistance to external stresses in the thickness direction of the joining assist member 130, and the weight increase can be reduced.

In the filling and welding step, the height P_{H3} of a space unfilled with the weld metal 40 from the surface of the top plate 20 is equal to or less than 30% of the thickness F_{H} of the top plate 20, or an excess weld metal is formed for the surface of the top plate while completely filling the hole 21 of the top plate 20, so that the joint strength of the dissimilar material welded joint 1a can be ensured.

The joining assist member 130 in this embodiment is solid, is made of steel and has an outer shape with step having an insertion portion 131 and a non-insertion portion 132, the relationship between the maximum outer diameter P_{D1} of the insertion portion 131, the width P_{D2} of the non-insertion portion 132, and the diameter B_{D1} of the hole 11 of the bottom plate 10 is P_{D2} > P_{D1} > B_{D1}, and the insertion portion 131 has a constricted portion 139 on the non-insertion portion side. This makes the joining assist member 130 suitable for the above welding method for dissimilar material joining.

The dissimilar material welded joint 1a in this embodiment includes a bottom plate 10 made of a material other than steel, a top plate 20 made of steel and joined to the bottom plate 10, and a joining assist member 130 being solid and made of steel. The bottom plate 10 and the top plate 20 have holes 11 and 21, respectively, the holes 11 and 21 being located coaxially. The joining assist member 130 has an outer shape with step having an insertion portion 131 and a non-insertion portion 132. The relationship between the maximum outer diameter P_{D1} of the insertion portion 131, the width P_{D2} of the non-insertion portion 132, and the diameter B_{D1} of the hole 11 of the bottom plate 10 is P_{D2} > P_{D1} > B_{D1}, and the insertion portion 131 has a constricted portion 139 on the non-insertion portion side. The insertion portion 131 of the jointing assist member 130 is fixed in the hole 11 of the bottom plate 10. The bottom plate 10 and the top plate 20 are overlapped such that the insertion portion 131 of the joining assist member 130 faces the hole 21 of the top plate 20, and the hole 21 of the top plate 20 is filled with the weld metal 40 made of iron alloy or nickel alloy, and the fusion zone W is formed by the weld metal 40 and a part of the melted portions of the top plate 20 and joining assist member 130.

As a result, for example, a dissimilar material welded joint 1a including a first plate (bottom plate 10) made of a material other than steel, such as an Al alloy or Mg alloy, and a second plate (top plate 20) made of steel can be joined with quality of being high in strength and reliability using an inexpensive welding facility, and can be applied to both an open section structure and a closed section structure without limitation, and can also be applied to the case where the top plate 20 made of steel is on the front side.

### [Third Embodiment]

Next, a welding method for dissimilar material joining, a joining assist member, and a dissimilar material welded joint in the second embodiment of the present invention are described in detail with reference to the drawings. This embodiment differs from the first and second embodiments in that at least one protrusion for press-fitting is provided on the outer periphery of the shaft portion of the joining assist member.

Similar to the first and second embodiments, by the welding method for dissimilar material joining in this embodiment, a bottom plate 10 (first plate) made of aluminum alloy or magnesium alloy and a top plate 20 (second plate) made of steel, which are overlapped with each other, are joined via a solid steel-made joining assist member 230, by the arc welding method or laser welding method described below, thereby obtaining a dissimilar material welded joint 1b as illustrated in FIG. 54A and FIG. 54B.

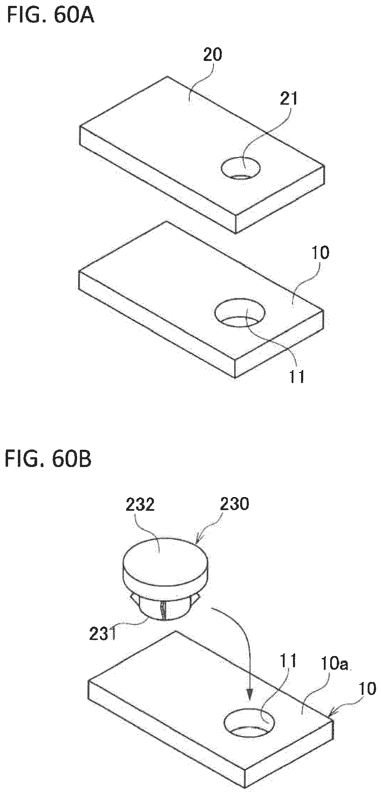

The bottom plate 10 has a circular hole 11 penetrating the bottom plate 10 in the thickness direction and the top plate 20 has a circular hole 21 penetrating the top plate 20 in the thickness direction, the holes 11 and 21 being located coaxially (see FIG. 60A). The insertion portion 231 of the joining assist member 230 is inserted under pressure into the hole 11 of the bottom plate 10.

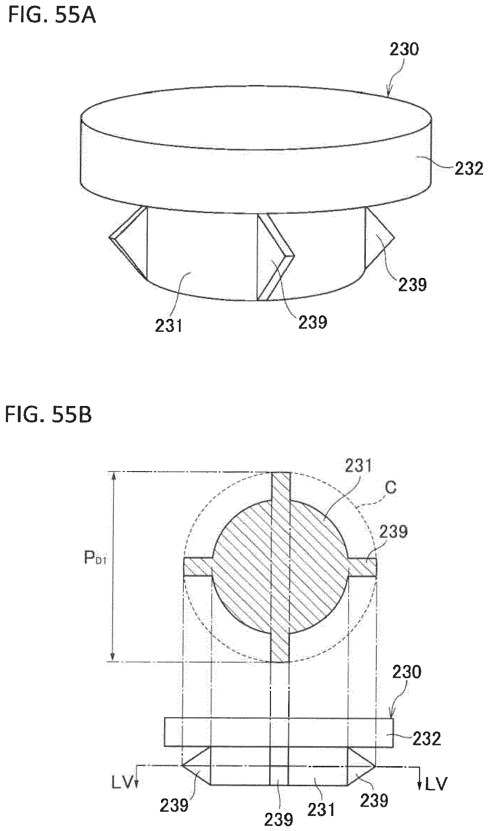

As illustrated in FIG. 55A and FIG. 55B, the joining assist member 230 has an outer shape with step having an insertion portion 231 to be disposed in the hole 11 of the bottom plate 10 and a non-insertion portion 232 to be disposed on the upper surface of the bottom plate 10 and facing outward relative to the insertion portion 231. In other words, in the third embodiment, the joining assist member 230 also includes a shaft portion constituting the insertion portion 231 and a flange portion constituting the non-insertion portion 232. In addition, at least one (in this embodiment, four) protrusion 239 for press-fitting is provided on the outer periphery of the insertion portion 231.

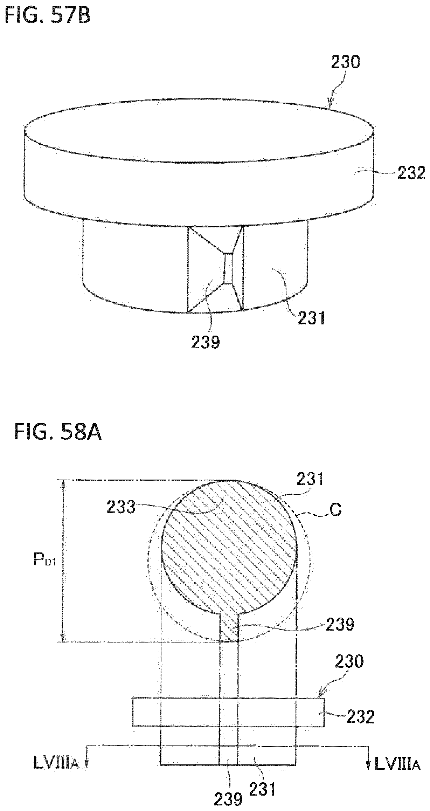

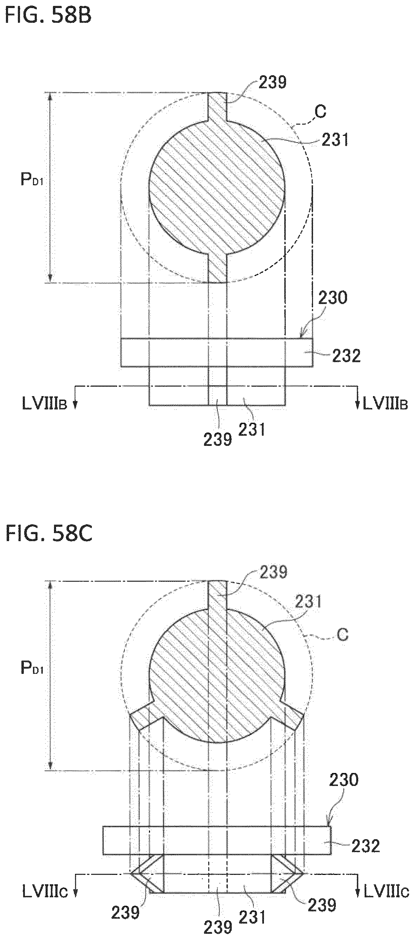

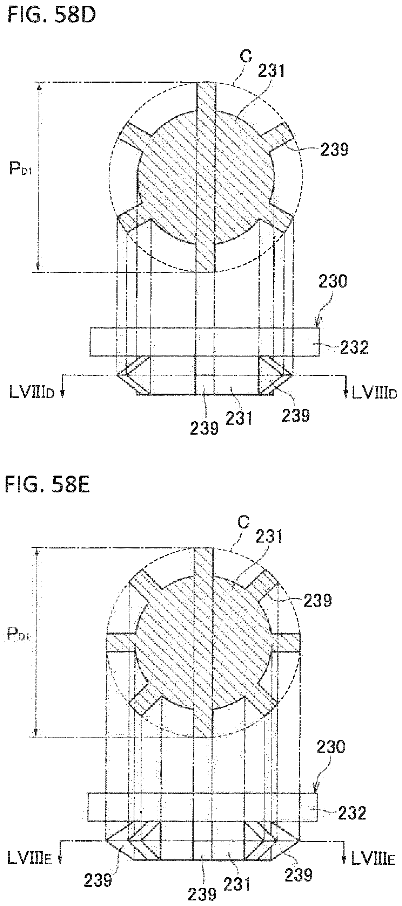

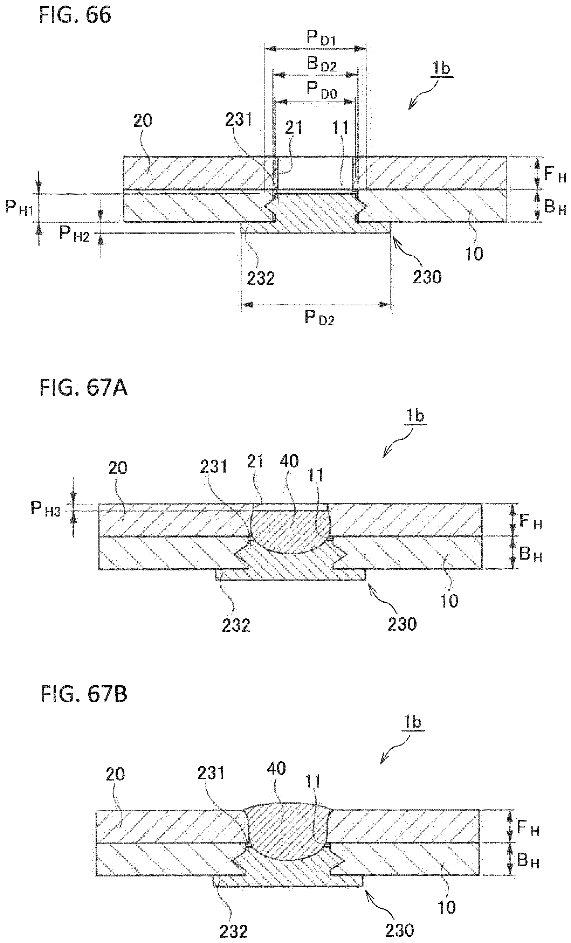

As described below, the width P_{D2} of the non-insertion portion 232 is set to be larger than the diameter B_{D2} of the hole 11 of the bottom plate 10 (see FIG. 66). The diameter P_{D1} of the largest circle in contact with the outermost diameter portion of a plurality of protrusions 239 for press-fitting is also set to be larger than the diameter B_{D2} of the hole 11 of the bottom plate 10 (see FIG. 58A to FIG. 58E).

The diameter of the hole 21 of the top plate 20 is not limited as long as the diameter is large enough to be filled with the weld metal 40 to be described below, and the diameter may be the same as the diameter B_{D1} of the hole 11 of the bottom plate 10, may be larger than the diameter B_{D1}, or may be smaller than the diameter B_{D1}.

In the third embodiment, the bottom plate 10 and the top plate 20 have circular holes 11 and holes 21, respectively, but the shape of the hole 11 is not limited to circle and the holes with various shapes other than the circular shape can be used as long as the insertion portion 231 of the joining assist member 230 can be inserted therein. For example, triangle shapes, square shapes, polygon shapes having more than four sides, or oval shapes can be used. However, unlike the first and second embodiments, in the third embodiment, a protrusion 239 is partially provided on the outer periphery of the insertion portion 231, and in the case where the shape of the hole 11 or 21 is not circle, the diameter B_{D1} of the hole is defined by a diameter of the circumscribed circle of the hole.

The axial cross-section of the insertion part 231 other than the protrusions 239 is desirably similar to a cross-section of the hole 11 of the bottom plate 10 because press-fitting can be easily performed. For example, in a case where the shape of the hole 11 is polygonal shape, the axial cross-section of the insertion portion 231 should be similar to that of the hole 11 to prevent the bottom plate 10 from rotating relative to the top plate 20.

The protrusions 239 are formed in a feather shape in consideration of eliminating the gap between the insertion portion 231 and the hole 11 of the bottom plate 10 and insertability of the insertion portion 231 since the insertion portion 231 of the joining assist member 230 is fixed in the hole 11 of the bottom plate 10 by swaging binding force. In other words, the maximum outer diameter P_{D0} of the insertion portion 231 is smaller than the diameter B_{D2} of the hole 11 of the bottom plate 10, and the protrusions 239 are made to bite into the wall of the hole 11 of the bottom plate 10 to partially eliminate the above gap. The protrusions 239 preferably have a shape in which radial width is gradually increases from the tip of the insertion portion 231 toward the non-insertion portion 232, in consideration of insertability. Furthermore, since the thickness of the protrusion 239 in the circumferential direction is small, it becomes a state of being linear contact with the hole 11 of the bottom plate 10, and a significant increase in push-in pressure is not bought about.

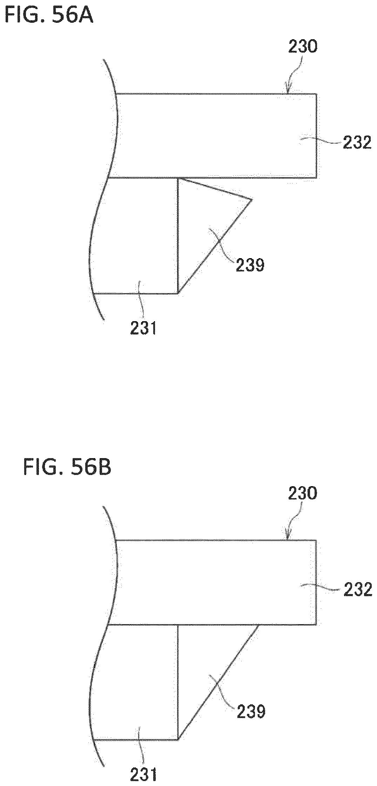

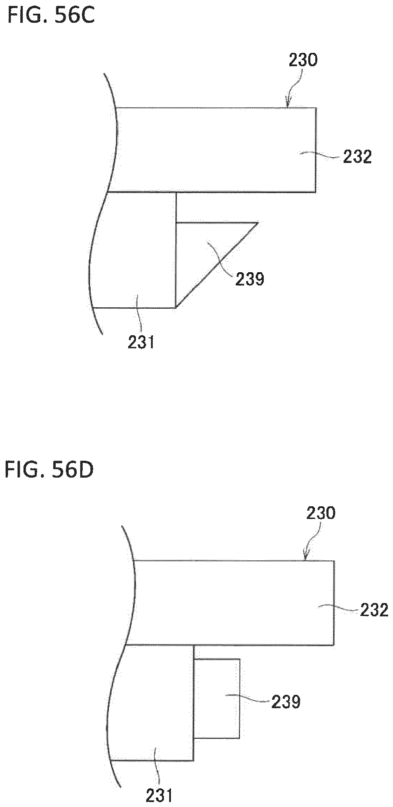

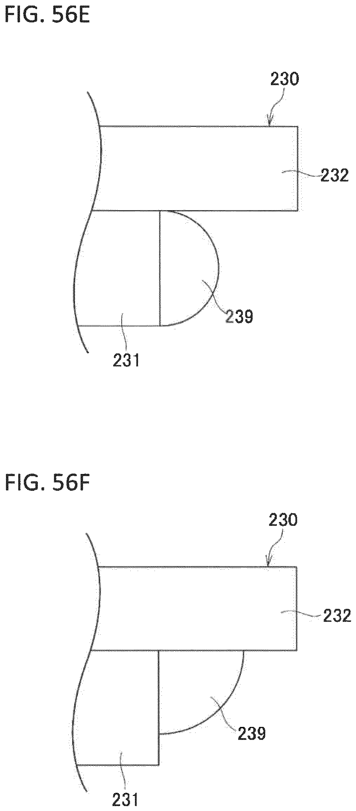

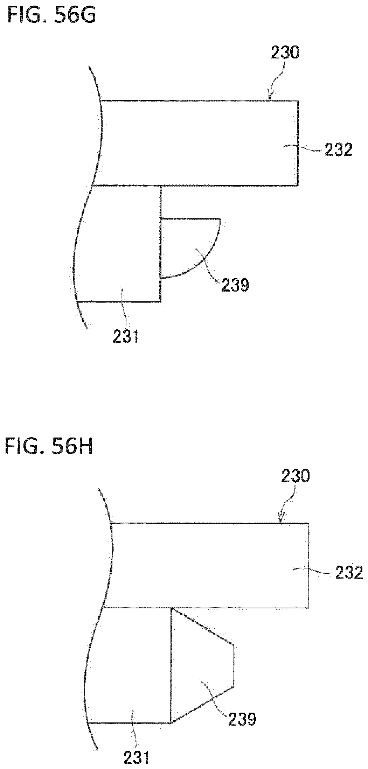

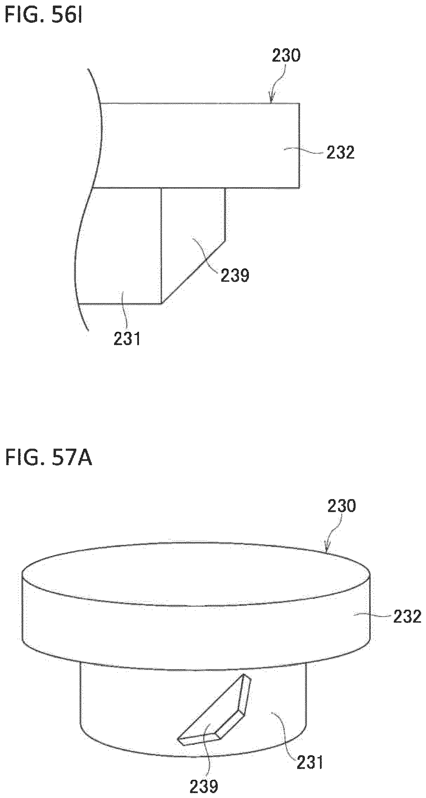

The shape of the protrusion 239 may be an isosceles triangle as illustrated in FIG. 55A and FIG. 55B, and as illustrated in FIG. 56A FIG. 56I, other shapes such as triangular shapes, rectangular shapes, partial circular shapes or trapezoidal shapes are typical and there is no restriction on the shape of the protrusion 239. The protrusion 239 can also be connected to the lower surface of the non-inserted portion 232 to thereby improve the strength of the protrusion 239. Furthermore, the protrusion 239 may be parallel to the axial direction of the insertion portion 231, as illustrated in FIG. 55A, or may be inclined to the axial direction, as illustrated in FIG. 57A. This case is suitable for performing press-fitting while rotating the joining assist member 230. As illustrated in FIG. 57B, the protrusion 239 may be in an angle form where the circumferential width narrows from the base to the tip.

The number of protrusions 239 is not limited to four as illustrated in FIG. 55B, and at least one protrusion is sufficient, and there is no need to set the upper limit. That is, the number of the protrusion 239 may be one, two, three, six, or eight, as illustrated in FIG. 58A to FIG. 58E. However, the number of protrusions 239 should not be increased more than necessary, because as the number of protrusions 239 increases, the contact area with the hole 11 of the bottom plate 10 increases and the pressure required for insertion increases. The number of protrusions 239 is preferably equal to or less than eight.

As illustrated in FIG. 58A, in the case where the number of the protrusion 239 is one, the diameter P_{D1} of the circle C being contact with the outermost diameter portion of one protrusion 239 and the outer periphery of the insertion portion 231 is also set to be larger than the diameter B_{D2} of the hole 11 of the bottom plate 10.

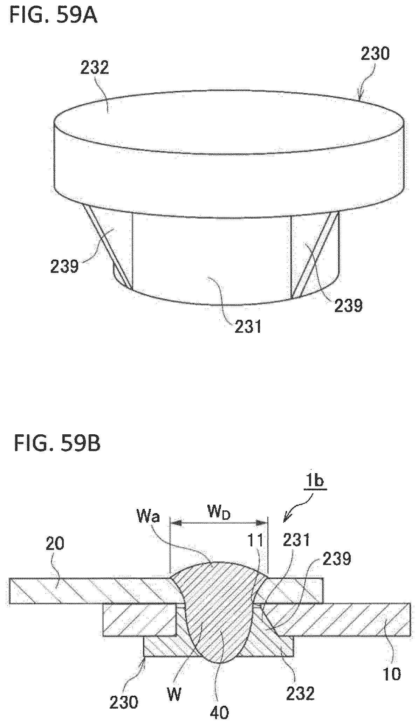

The joining assist member 230 can be designed with any combination of the number of protrusions 239 and shapes described above. For example, a joining assist member 230 having three right-angled triangular-shaped protrusions 239 may be configured as illustrated in FIG. 59A. FIG. 59B is a sectional view of a dissimilar material welded joint 1b using the joining assist member 230 in FIG. 59A, which corresponds to that in FIG. 54B. Since the function of the protrusion 239 is substantially the same as in any of the above-described joining assist members 230, the following description is made with arbitrary joining assist member 230.

The outer shape of the non-insertion portion 232 of the joining assist member 230 is not limited to a circle shape as illustrated in FIG. 55A and FIG. 55B, and can be any shape as long as it blocks the hole 11 opened in the bottom plate 10. In other words, the outer shape can be an oval shape as illustrated in FIG. 5B, or polygonal shapes with at least four sides as illustrated in FIG. 5C to FIG. 5F. The corners of the polygonal shape may be rounded, as illustrated in FIG. 5D.

In these joining assist members 230, the width P_{D2} of the non-insertion portion 32 described below is specified by the shortest distance between opposing surfaces.

As described above, the insertion portion 231 of the joining assist member 230 is located coaxially with the hole 11 of the bottom plate 10 by press-fitting the insertion portion 231 in the bottom plate 10.

Furthermore, the hole 21 of the top plate 20 is filled with a weld metal 40 made of iron alloy or nickel alloy obtained by melt of a filler material (welding material) by arc welding, and a fusion zone W is formed by the weld metal 40 and a part of the melted portions of the top plate 20 and joining assist member 230. Therefore, the fusion zone W is disposed inside the hole 21 of the top plate 20 and the joining assist member 230 and the top plate 20 are welded by the fusion zone W, and as a result, the bottom plate 10 in which the joining assist member 230 has been press-fitted and the top plate 20 are welded.

A welding method for dissimilar material joining for forming the dissimilar material welded joint 1b is described below with reference to FIG. 60A to FIG. 60E.

First, as illustrated in FIG. 60A, boring work for making holes 11 and 12 through the bottom plate 10 and top plate 20, respectively, is performed (step S1).

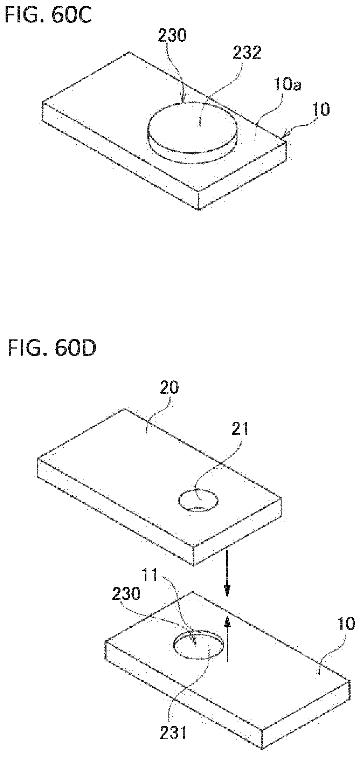

Next, as illustrated in FIG. 60B and FIG. 60C, the insertion portion 231 of the joining assist member 230 is press-fitted in the hole 11 of the bottom plate 10 from the surface 10a of the bottom plate 10 (step S2).

Then, as illustrated in FIG. 60D, the bottom plate 10 in which the joining assist member 230 has been fitted is reversed, and overlapping work of allowing the bottom plate 10 and the top plate 20 to be overlapped with each other such that the insertion portion 231 of the joining assist member 230 faces the hole 21 of the top plate 20 (step S3). In other words, in this state, the insertion portion 231 of the joining assist member 230 press-fitted in the bottom plate 10 is positioned on the top plate 20 side as compared with the non-insertion portion 232, and the hole 11 of the bottom plate 10 and the hole 21 of the top plate 20 are coaxially located.

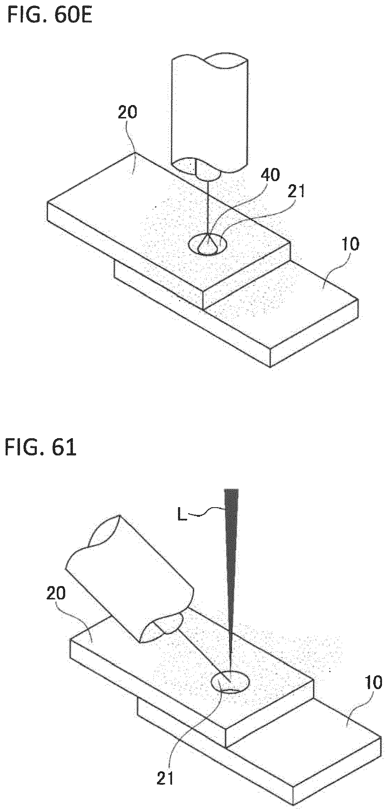

Subsequently, as illustrated in FIG. 60E and FIG. 61, the bottom plate 10 and the top plate 20 are joined to each other by performing any arc welding work of (a) a consumable-electrode gas-shielded arc welding method, (b) a non-gas arc welding method, (c) a gas tungsten arc welding method, (d) a plasma arc welding method, and (e) a shielded metal arc welding method, or (f) laser welding work (step S4).

FIG. 60E illustrates a case where arc welding work is performed by (a) the consumable-electrode gas-shielded arc welding method.

As for the boring work in step S1, the overlapping work in step S3, and the welding work in step S4, those described in the first embodiment are applied.

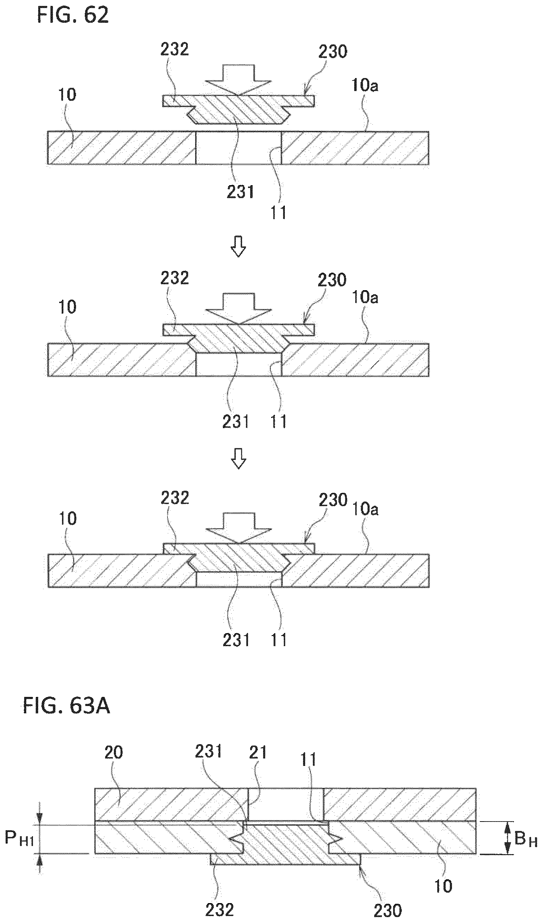

On the other hand, in the press-fitting operation in step S2, the insertion portion 231 of the joining assist member 230 is press-fitted in the hole 11 of the bottom plate 10 from the surface 10a side until the non-insertion portion 232 contacts the surface 10a of the bottom plate 10, as illustrated in FIG. 62.

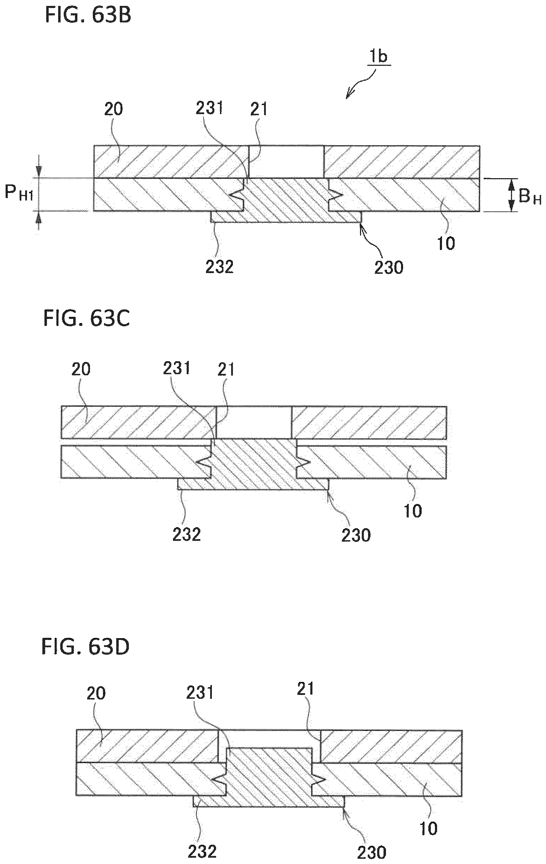

On the other hand, the position of the lower surface (the tip surface of the insertion portion 231) of the joining assist member 230 after press-fitting to the bottom plate 10 can be selected depending on applications. For example, in a case where the diameter of the hole 21 of the top plate 20 is smaller than the outer diameter of the insertion portion 231 of the joining assist member 230 during joining, the case where the joining assist member 230 protrudes from the surface of the bottom plate 10 is undesirable because it cause a gap when the bottom plate 10 and top plate 20 are overlapped with each other, resulting in poor assembly accuracy. For this reason, as illustrated in FIG. 63A and FIG. 63B, the insertion portion 231 of the joining assist member 230 is preferably designed to have a height P_{H1} being equal to or less than the thickness B_{H} of the bottom plate 10.

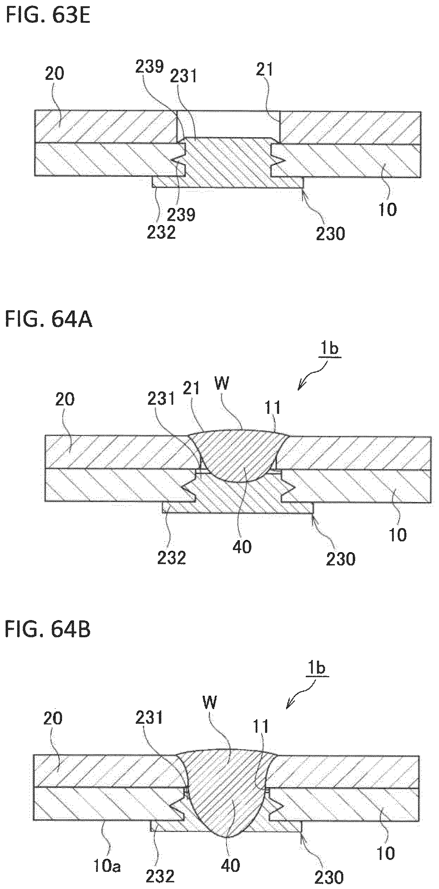

However, in a case where the occurrence of a gap between the top plate 20 and the bottom plate 10 is expected in the design stage, it is acceptable to use the joining assist member 230 protruding from the back surface (the upper surface of the bottom plate 10 in a state where the joining assist member is joined to the top plate 20) within the gap, as illustrated in FIG. 63C. Alternatively, in a case where the diameter of the hole 21 of the top plate 20 is larger than the outer diameter of the insertion portion 231 of the joining assist member 230, as illustrated in FIG. 63D, such a case is preferable because the protruding portion of the joining assist member 230 serves as a guide for overlapping, and the temporary fixability during welding work is high. In addition, in the case where the joining assist member 230 protrudes from the back surface, by providing the protrusion 239 on the protruding part of the joining assist member 230 as illustrated in FIG. 63E, the temporary fixability between the bottom plate 10 and the joining assist member 230 is further enhanced, which is more desirable.

Also in this embodiment, as for the penetration of the weld metal 40, the joining assist member 230 is necessary to be moderately melted, as illustrated in FIG. 64A. As illustrated in FIG. 64B, there is no problem even if the weld metal 40 is formed over the range beyond the thickness of the joining assist member 230, i.e. melting is conducted until so-called penetration bead is formed.

However, if the joining assist member 230 does not melt and the weld metal 40 just puts on it, high strength cannot be obtained as a joint because the metal bond is incomplete. In addition, in a case where other member(s) is assembled so as to be in contact with the surface 10a of the bottom plate 10, the protrusion of the weld metal 40, which is the penetration bead, is an obstacle, so it is of course necessary to avoid such an excessive penetration state. Furthermore, welding is necessary to be performed such that the weld metal 40 does not melt down due to deep penetration of the weld metal 40.

With the above work, the bottom plate 10 made of materials other than steel and the top plate 20 made of steel are joined with high strength.

The role of the steel-made joining assist member 230 used in the above welding method is substantially the same as that of the joining assist member described in the section of the first embodiment.

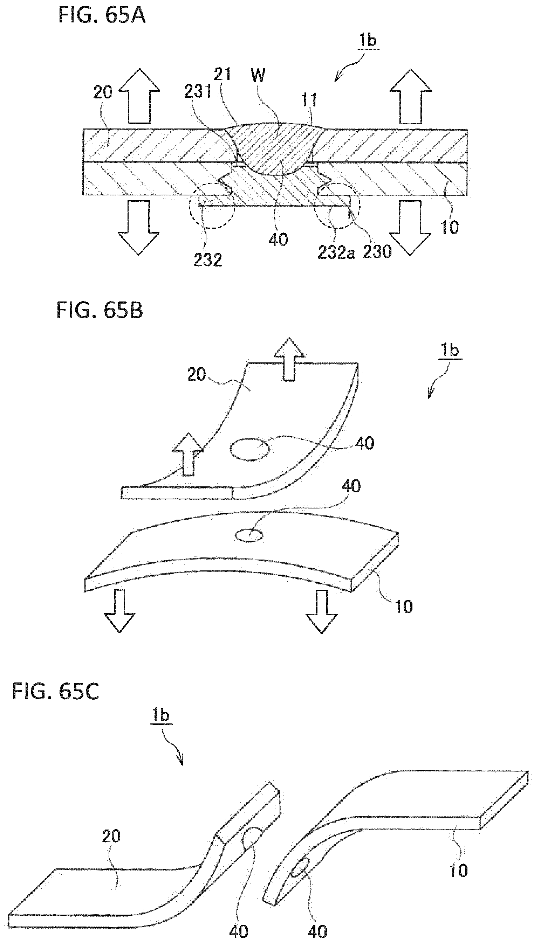

The primary role of the non-insertion portion 232 of the joining assist member 230, which is sider than the hole 11 of the bottom plate 10, is also resistance to vertical peeling stress. As illustrated in FIG. 65A, the use of a joining assist member 230 having an appropriate size can prevent the joining assist member 230 from being peeled from the bottom plate 10 at the interface therebetween and falling out. In general, the weld metal 40 breaks after sufficient plastic deformation. Since the weld metal 40 has a strong bonding force enough to be resistant to tensile stress in the shear direction, bending deformation of the base metal first occurs without brittle fracture (see FIG. 65C), and the stress state thereof is similar to that of vertical peeling tension (see FIG. 65B). In other words, after sufficient deformation, ductile fracture occurs with high strength.

As for the non-insertion portion 232 of the joining assist member 230, the larger the area thereof and the larger the height P_{H2} thereof are, the larger the strength against external stress in the thickness direction (three-dimensional direction) is, which is desirable. However, if the area and height are larger than necessary, it causes a weight increase factor and excessive protrusion from the surface of the top plate 20, resulting in deterioration of aesthetic appearance and occurrence of interference with other parts in proximity, and therefore, the area and height should be controlled to appropriate size depending on necessary design.

As described above, the joining assist member 230 has the roles of (1) preventing IMC formation caused by melting of aluminum alloy or magnesium alloy, which is the material of the bottom plate 10, during welding, and (2) firmly bonding the bottom plate 10 and the top plate 20 after welding.

However, there is one issue in practical use. The smaller the outer diameter P_{D0} of the insertion portion 231 of the joining assist member 230 compared to the diameter B_{D2} of the hole 11 of the bottom plate 10 is, the easier it is to insert, and therefore the smaller the outer diameter P_{D0} of the insertion portion 231 is, the more desirable it is from the viewpoint of insertability. However, the gap between the hole 11 of the bottom plate 10 and the insertion portion 231 of the joining assist member 230 causes mutual misalignment between the top plate 20 and bottom plate 10 to be joined with each other. In other words, since no force to bind the bottom plate 10 in the horizontal direction is not generated in this joint state, when the bottom plate 10 is subjected to horizontal shear stress, misalignment is relatively easily caused such that the bottom plate 19 slips to an extent of the gap between the joining assist 230 and the hole 11 of the bottom plate 10.

After the bottom plate 10 has been displaced by the gap, it does not move easily, but even a slight displacement is not acceptable because it is a factor that degrades the design accuracy. Therefore, in the joining state, there must be no gap between the joining assist member 230 and the hole 11 of the bottom plate 10. This can be achieved by designing the outer diameter P_{D0} of the insertion portion 231 of the joining assist member 230 to be larger than the diameter B_{D2} of the hole 11 of the bottom plate 10 and inserting it under pressure. However, as described above, in a case where the diameter is simply large, the target position is difficult to be determined and insertability becomes significantly worse, and even if the target position is determined coaxially, extremely high pressure is required.

In addition, when the joining assist member 230 is set in the bottom plate 10 before the welding step, if the joining assist member 230 is simply press-fitted in the bottom plate 10, the joining assist member 230 may easily come off from the bottom plate 10 when the bottom plate 10 is vertically flipped. In order to prevent such a situation, it is necessary to temporarily fix the joining assist member 230 to the bottom plate 10 until it is welded. As a measure to prevent such a situation, a function of "swaging" utilizing elasto-plastic deformation of metal being the material of the bottom plate 10 is imparted to the joining assist member 230.

Therefore, as in this embodiment, by providing a protrusion 239 for press-fitting on the outer periphery of the insertion portion 231, it is possible to prevent a part from falling off when flipped vertically, to eliminate the gap between the insertion portion 231 and the hole 11 of the bottom plate 10, and to ensure insertability. In other words, the outer diameter P_{D0} of the insertion portion 231 is smaller than the diameter B_{D2} of the hole of the bottom plate 10, and the protrusion 239 is allowed to bite into the wall of the hole 11 of the bottom plate 10 to partially eliminate the gap. Since the thickness of the protrusion 239 in the circumferential direction is small, it becomes a state of being linear contact with the hole 11 of the bottom plate 10, and a significant increase in push-in pressure is not bought about. In such a joining assist member 230, the diameter P_{D1} of the largest circle C being contact with the outermost diameter portion of at least two protrusions 239, or the diameter P_{D1} of the circle C being contact with the outermost diameter portion of one protrusion 239 and the outer periphery of the insertion portion 231 is larger than the diameter B_{D2} of the hole 11 of the bottom plate 10.

For example, in a case where the shape of the hole 11 is a polygonal shape, when the outer diameter P_{D0} of the insertion portion 231 is smaller than the diameter B_{D1} of the inscribed circle of the hole 11 of the bottom plate 10, the insertability can be further improved.

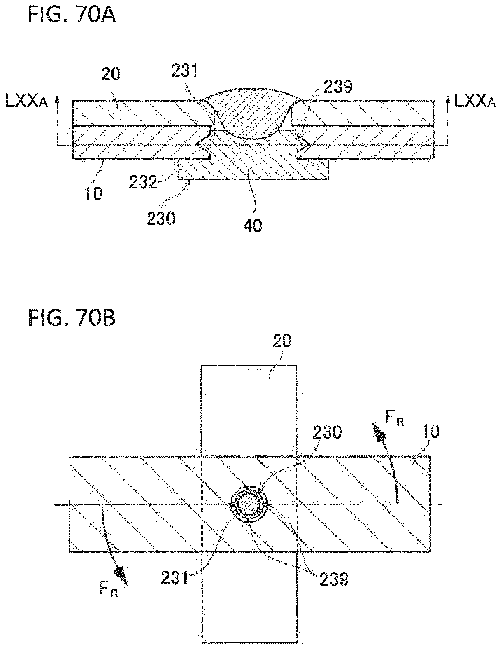

By press-fitting the joining assist member 230 having a protrusion 239 on the insertion portion 231 in the bottom plate 10, several secondary effects can also be obtained. As the first effect, the bottom plate 10 and the top plate 20, which are to be joined, are less likely to rotate mutually. In the case where the sectional shape of the insertion portion 231 of the joining assist member 230 is an exact circle, when the joining assist member 230 is joined by press-fitting the insertion portion 231, for example, there is a possibility that the bottom plate rotates around the joining assist member 230 by applying a strong horizontal rotational force F_{R} to the bottom plate 10. However, as illustrated in FIG. 70A and FIG. 70B, the joining assist member 230 has a protrusion 239, and the protrusion 239 can easily prevent rotation by allowing the protrusion to bite into the periphery of the hole 11 of the bottom plate 10.

As the second effect, the joining assist members 230 are press-fitted in the aluminum or magnesium alloy that is the bottom plate 10 before the joining step, for example, in a plant for a step different from the joining step. In this case, the joining assist member 230 does not easily come off from the bottom plate 10, so it can be transported to a joining plant for the joining step to be performed, thereby increasing the flexibility of the manufacturing steps.

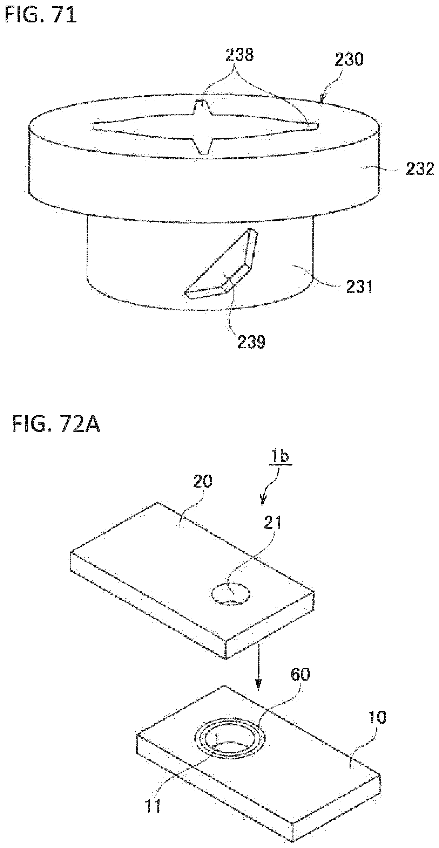

The method for press-fitting the joining assist member 230 can be done by any means, and examples of practical method thereof include pressing in by hand, striking with a hammer, using a press machine powered by oil pressure, water pressure, air pressure, gas pressure, or electric drive, and using a power of an industrial robot arm. In addition, press-fitting can be performed by turning the joining assist member 230 into the hole, and in the case where such a method is used, as illustrated in FIG. 71, a notch 238 can be provided on the upper surface of the insertion portion 231 to fit a screwdriver for turning screws to facilitate turning the joining assist member 230 into the bottom plate 10.

In a case where the pressing pressure is high, not only the insertion portion 231 but also a part of the non-insertion portion 232 may be pressed into the base metal of the bottom plate 10, but this is not a problem. Rather, in the case where the outer shape of the non-insertion portion 232 is non-circular (see FIG. 5B to FIG. 5F), such a case is desirable because a part of the non-insertion portion 232 is pressed into the base metal of the bottom plate 10, resulting in achievement of the effect of preventing the phenomena where the swaging effect is eliminated by a relatively weak force when the bottom plate 10 is subjected to a horizontal rotational force with respect to the top plate 20 and the plates rotate.

For the above reasons, the joining assist member 230 is solid and made of steel, has a an external shape with step having an insertion portion 231 and a non-insertion portion 232, and has at least one protrusion 239 for press-fitting on the outer periphery of the insertion portion 231, and the width P_{D2} of the non-insertion portion 232 is larger than that of the hole 11 of the bottom plate 10, and the diameter P_{D1} of the largest circle C being contact with the outermost diameter portion of at least two protrusions 239 or the diameter P_{D1} of the circle C being contact with the outermost diameter portion of one protrusion 239 and the outer periphery of the insertion portion 231 is larger than the diameter B_{D2} of the hole 11 of the bottom plate 10. This makes it possible to join an aluminum alloy or magnesium alloy and a steel plate, which are generally considered impossible to be welded.

As for the material of the steel-made jointing assist member 230, there is no particular limitation as long as the material is pure iron or iron alloys, and examples thereof include mild steel, carbon steel, stainless steel, and the like.

The material of the bottom plate 10 is not limited to aluminum alloy or magnesium alloy, and members made of various materials can be used as long as the material is made of materials other than steel. Examples of the materials other than steel include, for example, carbon fiber reinforced plastics (CFRP), non-ferrous metals, resins, composite materials of resins and metals, and ultra-high tensile steel of 1700 MPa or higher.

In addition, the surface of the joining assist member 230 can be treated to form a film of electrically base elements, a film of processed materials, a film of insulating substances, or passivation film in order to prevent its own rusting and to prevent electrical corrosion from occurring between it and the aluminum plate. Examples thereof include zinc plating, chrome plating, nickel plating, aluminum plating, tin plating, resin coating, ceramic coating, and the like.

The various dimensions of the joining assist member 230 are set as follows in relation to the bottom plate 10 and top plate 20, as illustrated in FIG. 66.

### Height P_{H1} of insertion part

The height P_{H1} of the insertion portion 231 is set to be equal to or larger than 10% of the thickness B_{H} of the bottom plate 10 and less than the total thickness B_{H}+F_{H} of the bottom plate 10 and the top plate 20. The insertion portion 231 of the joining assist member 230 has a temporary binding effect by means of swaging obtained by press-fitting it in the bottom plate 10 as described above. The larger the height P_{H1} of the insertion portion 231 is, the larger the swaging effect is and the insertion portion 231 hardly comes off. In the case where the height P_{H1} of the insertion portion 231 is less than 10% of the thickness of the bottom plate, the swaging effect is hardly obtained and the state is unstable, so the height P_{H1} is desirable to be equal to or larger than 10% of the thickness B_{H}.

On the other hand, the upper limit of the height P_{H1} of the insertion portion 231 is not necessarily equal to the thickness B_{H} of the bottom plate 10, i.e., 100%, and as described above, it may be desirable to have it actively protruding on the top plate side. However, if the height P_{H1} of the insertion portion 231 is high enough to fill all of the holes 21 of the top plate 20, a space to be filled with weld metals is not formed and it becomes difficult to weld the top plate 20 and the joining assist member 230, so the back surface position of the joining assist member 230 is desirably inside the top plate 20. This means that the height P_{H1} of the insertion portion 231 is smaller than the total thickness B_{H}+F_{H} of the bottom plate 10 and the top plate 20.

### Diameter P_{D1} of largest circle being contact with outermost diameter portion of at least two protrusions, or diameter P_{D1} of circle being contact with outermost diameter portion of one protrusion and outer periphery of insertion portion

The diameter P_{D1} of the largest circle C being contact with the outermost diameter portion of a plurality of protrusions 239 provided on the insertion portion 231 is designed to be from 105% to 125% of the diameter B_{D2} of the hole 11 of the bottom plate 10. The protrusion 239 provided on the insertion portion 231 of the joining assist member 230 has a function of swaging binding by press-fitting it in the bottom plate 10. In order to achieve such as effect, the diameter P_{D1} of the largest circle C is necessary to be larger than the diameter B_{D2} of the bottom plate 10. In the case where the diameter P_{D1} of the largest circle C is not larger than the diameter B_{D2} by at least 5%, it is not possible to apply proper pressure near the hole of the bottom plate. Hence, the diameter P_{D1} of the largest circle C is at least 105% of the diameter B_{D2}.

On the other hand, the larger the diameter P_{D1} of the largest circle C being contact with the outermost diameter portion of a plurality of protrusions 239 is, the stronger the swaging force is, but the force required for press-fitting becomes larger, and therefore, simplicity may be impaired and it may not be able to withstand the pressure around the hole of the bottom plate, which could lead to cracking. For these reasons, the upper limit of the diameter P_{D1} of the largest circle C is determined, and is specifically 125%.

In the case where only one protrusion 239 is provided on the outer periphery of the insertion portion 231, the diameter P_{D1} of the circle C being contact with the outermost diameter portion of one protrusion 239 and the outer periphery of the insertion portion 231 is designed to be from 105% to 125% of the diameter B_{D2} of the hole 11 of the bottom plate 10.

### Outer diameter of insertion portion P_{D0}

The outer diameter P_{D0} of the insertion portion 231 is designed to be from 80% to 104% of the diameter B_{D2} of the hole 11 of the bottom plate 10. The swaging binding effect for the bottom plate 10, owing to the insertion portion 231 of the joining assist member 230, is achieved by the protrusion 239. In the case where the outer diameter P_{D0} of the insertion portion 231 is smaller than the diameter B_{D2} of the bottom plate 10, it does not become a resistance factor to insertion, and such a case is desirable. However, in the case where the outer diameter P_{D0} of the insertion portion 231 is excessively small, when an external stress acts on the dissimilar material welded joint 1b after joining, misalignment in the thickness direction is caused by relatively small force to an extent of the gap between the insertion portion 231 of the joining assist member 230 and the hole 11 of the bottom plate 10, so a smaller gap is desirable. From these conflicting properties, the outer diameter P_{D0} of the insertion portion 231 is desirably less than 100% and close to 100% of the diameter B_{D2} of the hole 11 of the bottom plate 10. However, from an industrial standpoint, it is necessary to allow for a certain amount of variation, and there is no practical problem in terms of joint performance as long as the lower limit of the outer diameter P_{D0} of the insertion portion 231 is up to 80%.

On the other hand, the upper limit of the outer diameter P_{D0} of the insertion portion 231 is allowed to be up to 104% of the diameter B_{D2} of the bottom plate 10. In the case where the outer diameter P_{D0} of the insertion portion 231 is larger than the diameter B_{D2} of the bottom plate 10, not only the protrusion 239 but also the insertion portion 231 becomes a resistance factor for press-fitting. For example, aluminum alloys or magnesium alloys have low elasto-plastic deformation resistance, so there is not practical problem for the insertion work as long as the outer diameter is up to 104%.

### Width P_{D2} of non-insertion portion

The width P_{D2} of the non-insertion portion 232 is designed to be equal to or larger than 105% of the diameter B_{D2} of the hole 11 of the bottom plate 10. The joining assist member 230 has a main role of resisting an external stress in the thickness direction, i.e., a peeling stress. In the configuration of the joining assist member 230, the insertion portion 231 also has some resistance to the peeling stress due to its swaging effect on the bottom plate 10, but the non-insertion portion 232 plays a relatively larger role. The larger the size of the non-insertion portion 232 and the higher the height thereof are, the larger the strength against external stress in the thickness direction (three-dimensional direction) is, which is desirable.

In the case where the width P_{D2} of the non-insertion portion 232 is less than 105% of the diameter B_{D2}, when the non-insertion portion 232 is elasto-plastically deformed by the external stress in the thickness direction, the non-insertion portion 232 may easily have an apparent diameter being equal to or less than the size of the hole 11 of the bottom plate 10, so that the bottom plate can easily come off. In other words, the non-insertion portion 232 does not exhibit high resistance. Therefore, the lower limit of the width P_{D2} of the non-insertion portion 232 is 105% of the diameter B_{D2}. More preferably, the lower limit of the width P_{D2} of the non-insertion portion 232 is 120% of the diameter B_{D2}. On the other hand, there is no need to set the upper limit in terms of joint strength.

### Height P_{H2} of non-insertion portion

The height P_{H2} of the non-insertion portion 232 is designed to be from 50% to 150% of the thickness B_{H} of the bottom plate 10. As described above, the larger the width P_{D2} of the non-insertion portion 232 of the joining assist member 230 and the higher the height P_{H2} thereof are, the larger the strength against external stress in the thickness direction (three-dimensional direction) is, which is desirable. The height P_{H2} of the non-insertion portion 232 can be increased depending on the thickness B_{H} of the bottom plate 10 to provide high resistance. In the case where the height P_{H2} of the non-insertion portion 232 is less than 50% of the thickness B_{H} of the bottom plate 10, the non-insertion portion 232 of the joining assist member 230 is easily elasto-plastically deformed by external stress in the thickness direction, and the non-insertion portion 232 may have an apparent width being equal to or less than the size of the hole 11 opened in the bottom plate 10, so that the bottom plate can easily come off. In other words, the non-insertion portion 232 does not exhibit high resistance. Therefore, the lower limit of the height P_{H2} of the non-insertion portion 232 is desirably 50% of the thickness B_{H} of the bottom plate 10.

On the other hand, in the case where the height P_{H2} of the non-insertion portion 232 exceeds 150% of the thickness B_{H} of the bottom plate 10, although there is no problem in terms of joint strength, excessively overhanging shape is made, which is not only bad in appearance but also makes the weight pointlessly heavy. Therefore, the height P_{H2} is desirably equal to or less than 150% of the thickness B_{H}.

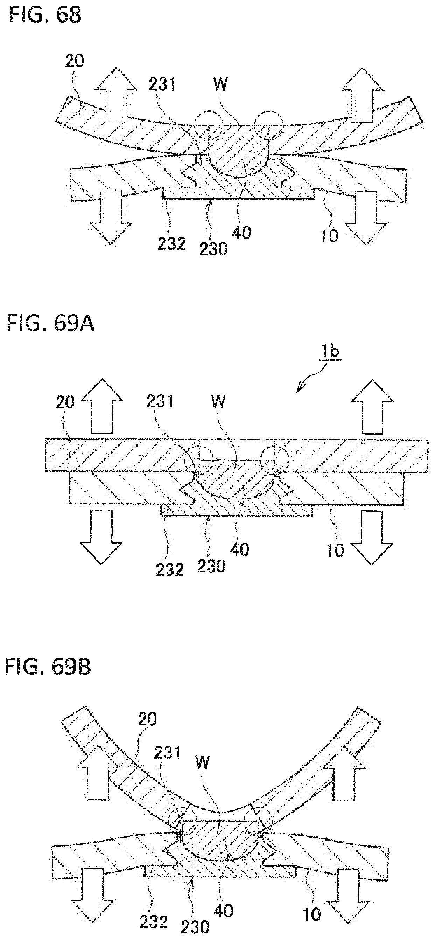

As illustrated in FIG. 67A, the height P_{H3} of the space unfilled with the weld metal 40 from the surface of the top plate 20 is set to be equal to or less than 30% of the thickness F_{H} of the top plate 20. It is desirable that the hole 21 of the top plate 20 is filled with the weld metal 40 and the height of the surface position is equal to that of the surface of the top plate 20. As illustrated in FIG. 68, this prevents the deformation of the joining assist member 230 caused by external stress in the thickness direction (three-dimensional direction) and gives high strength. On the other hand, as illustrated in FIG. 69A, in a case where the unfilled height P_{H3} is excessively large, the bonding area between the joining assist member 230 and the weld metal 40 is small, resulting in low joining strength. In a case where filling is performed at only less than 70% of the thickness F_{H} of the top plate 20, the joint joining strength is significantly low, and as illustrated in FIG. 69B, the joining assist member 230 easily deforms and the bottom plate 10 easily comes off. For this reason, the lower limit of the unfilled height P_{H3} should be 30% of the thickness F_{H} of the top plate 20.

On the other hand, ideally, the hole is filled with the weld metal 40 desirably such that the height thereof is equal to that of the surface of the bottom plate 10, as described above. However, when the dissimilar material welded joint 1b is assembled into a larger structure after joining, in a case where there is room in the upper space of the joint, the whole of the hole 21 of the top plate 20 may be filled with the weld metal 40 and an excess weld metal may be further formed thereon, as illustrated in FIG. 67B.

It is not always necessary to restrict the thickness of the bottom plate 10 and top plate 20, but taking working efficiency and lap welding shape into consideration, the thickness of the top plate 20 is desirably 5.0 mm or less and is more desirably 4.0 mm or less. On the other hand, taking a heat input of arc welding into consideration, unduly small thickness causes burn-through during welding and makes the welding difficult, and therefore, it is desirable that the thickness of each of the bottom plate 10 and the top plate 20 be 0.5 mm or more.

With the above configurations, the bottom plate 10 made of an aluminum alloy or magnesium alloy and the top plate 20 made of steel can be joined strongly.

It is common that the direct joining of different kinds of metals is associated with a problem other than the formation of IMCs. That is, when different kinds of metals are brought into contact with each other, a galvanic cell is formed, which is a cause of accelerating corrosion. Corrosion caused by this phenomenon (anode reaction in the cell) is called electric corrosion. Corrosion is accelerated when water exists in an interface where different kinds of metals are in contact with each other. Thus, in a case where this embodiment is applied to a joining location into which water is prone to intrude, it is necessary to subject the joining location to sealing treatment for preventing intrusion of water to prevent electric corrosion. Also in this joining method, in the case where a metal material other than steel, such as an A1 alloy or Mg alloy, is used as the first plate, since there are plural interfaces where different kinds of metals come into contact with each other, it is preferable to use a resin-based adhesive not only for further increase in joint strength but also as a sealing material.

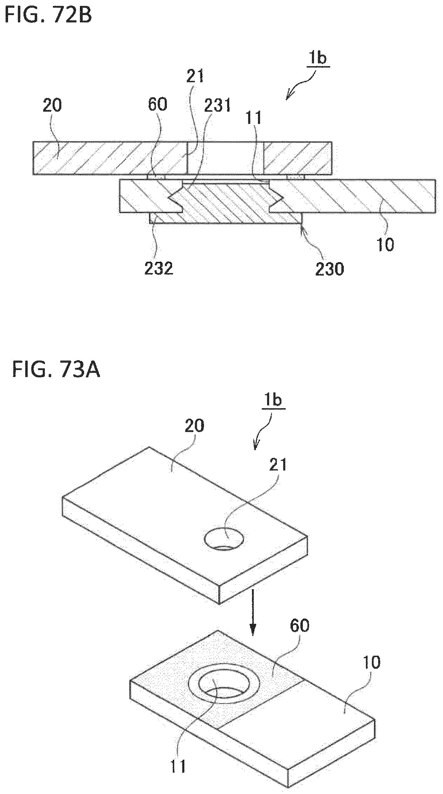

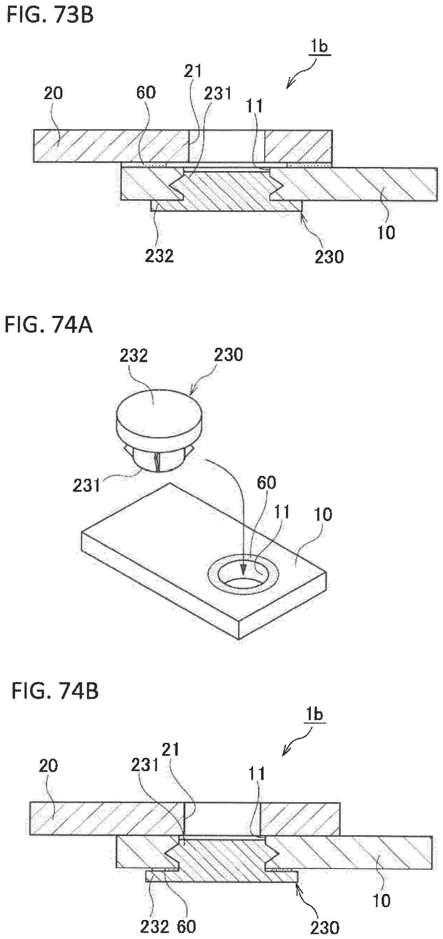

For example, as in the first modification illustrated in FIG. 72A and FIG. 72B, an adhesive 60 may be applied in a ring-like shape to the whole periphery of a welding portion in the joining surfaces of the bottom plate 10 and the top plate 20. Examples of the method for applying the adhesive 60 to the whole periphery of a welding portion in the joining surfaces of the bottom plate 10 and the top plate 20 includes a method in which the adhesive 60 is applied to the entire area of the joining surface excluding the welding portion, as in the second modification illustrated in FIG. 73A and FIG. 73B. This makes it possible to lower the electric corrosion rates of the bottom plate 10, top plate 20, and weld metal 40.

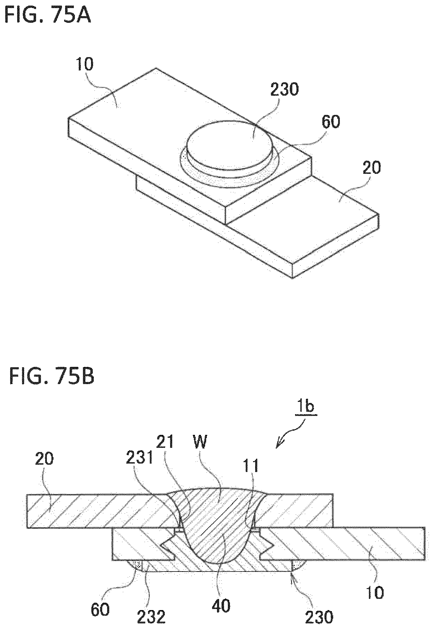

As in the third modification illustrated in FIG. 74A and FIG. 74B, the adhesive 60 may be applied to at least one of facing surfaces of the non-insertion portion 232 of the joining assist member 230 and the periphery of the hole 11 of the bottom plate 10 to face the non-insertion portion 232. Further, the adhesive 60 may be applied to the boundary between the non-insertion portion 232 of the joining assist member 230 and the surface of the bottom plate 10, as in the fourth modification illustrated in FIG. 75A and FIG. 75B.

In both the third and fourth modifications, intrusion of water from the boundary between the non-insertion portion 232 of the joining assist member 230 and the surface of the bottom plate 10 can be prevented to prevent electrical corrosion.

In the third modification illustrated in FIG. 74A and FIG. 74B, the application can be performed only during the insertion step, but in the fourth modification illustrated in FIG. 75A and FIG. 75B, the application can be performed during the insertion step or even after the filling and welding step.

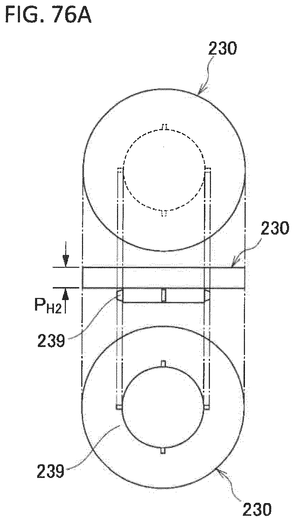

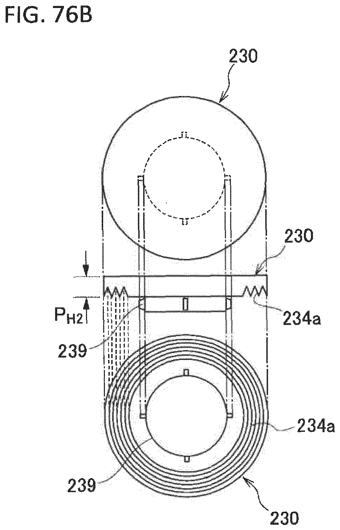

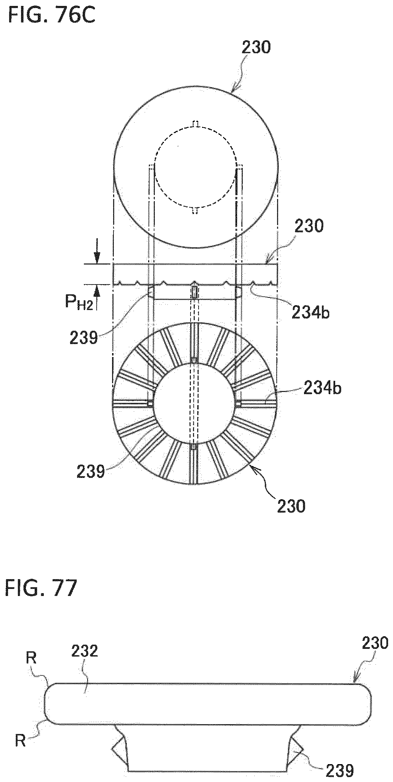

The contact surface between the joining assist member 230 and the bottom plate 10 does not necessarily have to be a flat surface as illustrated in FIG. 76A. That is, the contact surface between the joining assist member 230 and the bottom plate 10 may have a slit 234a or 234b as necessary, as illustrated in FIG. 76B and FIG. 76C. In particular, in a case where a circumferential slit 234a, a radial slit 234b, or a grid-like slit (not illustrated) is provided on the side of a surface to be contacted with the bottom plate 10, the adhesive to be applied enters the gaps between the slits 234a or 234b and does not escape, and as a result, stable adhesion and the sealing effect can be ensured. In the case of such a non-flat surface, the thickness P_{H2} of the non-insertion portion 232 of the joining assist member 230 is defined based on a part where the height thereof is the largest.

As illustrated in FIG. 77, the modification in which positions corresponding to edges of the joining assist member 230 have a roundness R in terms of safety in use and restrictions during forging causes no problem.

Furthermore, the top plate 20 may have a swell portion 22, as in the modification illustrated in FIG. 27A. In this case, the height P_{H1} of the insertion portion 231 is designed to be less than the thickness B_{H} of the bottom plate 10 (see FIG. 66).

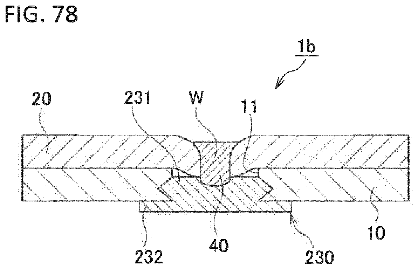

In a case where the thickness of the bottom plate 10 is relatively small, the top plate 20 can be welded well by simply making a hole in the top plate 20 as described above. However, in a case where the thickness of the bottom plate 10 is large, it takes time to fill the holes 11 of the bottom plate 10 in the welding step, resulting in poor efficiency. Also, the amount of heat is excessive, and a part of the joining assist member 230 tends to cause burn-through before the filling is completed. For this reason, in the case where the top plate 20 has the swell portion 22 by drawing, as illustrated in FIG. 78, the volume of the hole 11 can be reduced and the hole 11 can be filled while preventing a burn-through failure.

It also prevents the excess weld metal on the weld metal 40 from protruding from the surface of the top plate 20, resulting in improvement of its appearance or prevention of interference with other members. Furthermore, by providing a swell portion 22 at the welding portion of the top plate 20, the top plate 20 can be easily positioned with respect to the hole 11 of the bottom plate 10, making it easy to overlap the bottom plate 10 and the top plate 20. This effect can be obtained regardless of a thickness of a plate, so applying a drawing process to the top plate 20 is effective regardless of a thickness of a plate.

As for the drawing process for the swell portion 22, as illustrated in FIG. 28A, the peripheral part of the portion of the top plate 20 where the swell portion 22 is to be formed is bound by the die 50. Then, as illustrated in FIG. 28B, the swell portion 22 is formed by applying pressure to the portion where the swell portion 22 is to be formed and pushing it with the punch 51. The drawing process for the bottom plate 10 can be performed before or after the deep drawing process.

Since the welding method in this embodiment can be called spot welding with a small joining area, in the case of joining overlapped portions J of materials for actual use having a relatively large joining area, this welding method may be performed at plural positions, as illustrated in FIG. 29A to FIG. 29C. Then, strong joining can be attained in the overlapped portions J. Whereas this embodiment can be applied to open section structures as illustrated in FIG. 29B and FIG. 29C, it can be particularly suitably applied to closed section structures as illustrated in FIG. 29A.

As described above, this welding method for dissimilar material joining in this embodiment includes: a step of making holes 11 and 21 through the bottom plate 10 and the top plate 20, respectively; a step of placing the solid steel-made joining assist member 230 having an outer shape with step having an insertion portion 231 and a non-insertion portion 232 above the hole of the bottom plate 10 and press-fitting the insertion portion 231 in the hole of the bottom plate 10, the insertion portion 231 having at least one protrusion 239 for press-fitting on the outer periphery of the insertion portion 231, the width P_{D2} of the non-insertion portion 232 being larger than the diameter B_{D2} of the hole of the bottom plate 10, the diameter P_{D1} of the largest circle being contact with the outermost diameter portion of at least two protrusions 239 or the diameter P_{D1} of the circle being contact with the outermost diameter portion of one protrusion 239 and the outer periphery of the insertion portion 231 being larger than the hole of the bottom plate 10; a step of overlapping the bottom plate 10 and the top plate 20 such that the insertion portion 231 of the joining assist member 230 faces the hole of the top plate 20; and a step of filling the hole of the top plate 20 with the weld metal 40 and welding the top plate 20 and the joining assist member 230 by any of the following methods (a) to (f).
(a) A gas-shielded arc welding method using, as a consumable electrode, a welding wire to provide the weld metal 40 made of an iron alloy or nickel alloy;
(b) a non-gas arc welding method using the above welding wire as a consumable electrode;
(c) a gas tungsten arc welding method using the above welding wire as a non-consumable electrode filler;
(d) a plasma arc welding method using the above welding wire as a non-consumable electrode filler;
(e) a shielded metal arc welding method using, as a consumable electrode, a covered electrode to provide the weld metal 40 made of an iron alloy or nickel alloy; and
(f) a lase welding method using the above welding wire as a filler wire.

This method makes it possible to join the first plate (bottom plate 10) made of a material other than steel, such as an Al alloy or an Mg alloy, and the second plate (top plate 20) made of steel using an inexpensive welding facility with quality of being high in strength and reliability, and can be applied to both an open section structure and a closed section structure with no limitations, and also can be applied to the case where the top plate 20 made of steel is on the front side.

In the filling and welding step, a laser is used in addition to the arc as a heat source in any of the above arc welding method (a) to (e), and welding is performed. This can further improve the working efficiency.

The height P_{H1} of the insertion portion 231 of the joining assist member 230 is less than the thickness B_{H1} of the bottom plate 10, and the top plate 20 has a swell portion 22 formed by drawing, and in the overlapping step, the swell portion 22 of the top plate 20 is positioned inside the hole 11 of the bottom plate 10. This makes it possible to improve welding efficiency even when the thickness of the bottom plate 10 is large, to perform welding without burn-through failures, and to easily position the bottom plate 10 and the top plate 20.

The above method further includes, before the overlapping step, a step of applying an adhesive 60 to the whole periphery of the hole 11 of the bottom plate 10 and hole 21 of the top plate 20 in at least one of overlapped surfaces of the bottom plate 10 and the top plate 20. Thereby, the adhesive not only increases the strength of a joint but also serves as a sealing material and can lower the corrosion rates of the bottom plate 10, top plate 20 and weld metal 40.

In the insertion step, the adhesive 60 is applied to at least one of facing surfaces of the non-insertion portion 232 of the joining assist member 230 and the bottom plate 10 facing the non-insertion portion 232. Also in this case, the adhesive 60 not only increases the strength of a joint but also serves as a sealing material and can lower the corrosion rates of the bottom plate 10, top plate 20 and weld metal 40.

In addition, in the insertion step or after the filling and welding step, the adhesive 60 is applied to the boundary between the non-insertion portion 232 of the joining assist member 230 and the surface of the bottom plate 10. Also in this case, the adhesive 60 not only increases the strength of a joint but also serves as a sealing material and can lower the corrosion rates of the bottom plate 10, top plate 20 and weld metal 40.

Since the height P_{H1} of the insertion portion 231 of the joining assist member 230 is equal to or larger than 10% of the thickness B_{H} of the bottom plate 10 and is less than the total thickness B_{H}+F_{H} of the bottom plate 10 and the top plate 20, the insertion portion 231 can give a temporary binding effect by means of swaging and a space to be filled with the weld metal 40 can be ensured.

The diameter P_{D1} of the largest circle C being contact with the outermost diameter portion of at least two protrusions 239 or the diameter P_{D1} of the circle C being contact with the outermost diameter portion of one protrusion 239 and the outer periphery of the insertion portion 231 is from 105% to 125% of the diameter B_{D2} of the hole 11 of the bottom plate 10, so that the joining assist member 230 can be swaging-bound to the hole 11 of the bottom plate 10 by an appropriate swaging force.

Since the maximum outer diameter P_{D0} of the insertion portion 231 of the joining assist member 230 is from 80% to 104% of the diameter B_{D2} of the hole 11 of the bottom plate 10, it is possible to prevent the displacement of the bottom plate 10 when external stress is applied to the joint and to ensure insertability.

Since the width P_{D2} of the non-insertion portion 232 of the joining assist member 230 is equal to or larger than 105% of the diameter B_{D2} of the hole 11 of the bottom plate 10, the joining assist member 230 can function as a resistance to external stress in the thickness direction.

Since the height P_{H2} of the non-insertion portion 232 of the joining assist member 230 is from 50% to 150% of the thickness B_{H} of the bottom plate 10, the joining assist member 230 can function as a resistance to external stresses in the thickness direction of the joining assist member 230, and the weight increase can be reduced.

In the filling and welding step, the height P_{H3} of a space unfilled with the weld metal 40 from the surface of the top plate 20 is equal to or less than 30% of the thickness F_{H} of the top plate 20, or an excess weld metal is formed for the surface of the top plate while completely filling the hole 21 of the top plate 20, so that the joint strength of the dissimilar material welded joint 1b can be ensured.

The joining assist member 230 in this embodiment is solid, is made of steel and has an outer shape with step having an insertion portion 231 and non-insertion portion 232, and the insertion portion 231 has at least one protrusion 239 for press-fitting on an outer periphery thereof, the width P_{D2} of the non-insertion part 232 is larger than the diameter B_{D2} of the hole of the bottom plate 10, and the diameter P_{D1} of the largest circle being contact with the outermost diameter portion of at least two protrusions 239 or the diameter P_{D1} of the circle being contact with the outermost diameter portion of one protrusion 239 and the outer periphery of the insertion portion 231 is larger than the diameter B_{D2} of the hole of the bottom plate 10. This makes the joining assist member 230 suitable for the above welding method for dissimilar material joining.

The dissimilar material welded joint 1b in this embodiment includes a bottom plate 10 made of a material other than steel, a top plate 20 made of steel and joined to the bottom plate 10, and a joining assist member 230 being solid and made of steel. The bottom plate 10 and the top plate 20 have holes 11 and 21, respectively. The joining assist member 230 has an outer shape with step having an insertion portion 231 and a non-insertion portion 232. The insertion portion 231 has at least one protrusion for press-fitting on an outer periphery thereof. The width P_{D2} of the non-insertion part 232 is larger than the diameter B_{D2} of the hole of the bottom plate 10, and the diameter P_{D1} of the largest circle being contact with the outermost diameter portion of at least two protrusions 239 or the diameter P_{D1} of the circle being contact with the outermost diameter portion of one protrusion 239 and the outer periphery of the insertion portion 231 is larger than the diameter B_{D2} of the hole of the bottom plate 10. The insertion portion 231 of the joining assist member 230 has been fixed in the hole of the bottom plate 10, and the bottom plate 10 and the top plate 20 are overlapped such that the hole of the bottom plate 10 and the hole of the top plate 20 are located coaxially. The hole of the top plate 20 has been filled with a weld metal of an iron alloy or nickel alloy, and a fusion zone W is formed by the weld metal 40, a part of the melted portions of the top plate 20 and joining assist member 230.

As a result, a dissimilar material welded joint 1b including a first plate (bottom plate 10) made of a material other than steel and a second plate (top plate 20) made of steel can be joined with quality of being high in strength and reliability using an inexpensive welding facility, and can be applied to both an open section structure and a closed section structure without limitation, and can also be applied to the case where the top plate 20 made of steel is on the front side.

The present invention is not limited to the above-described embodiments, and suitable deformation, improvement or the like can be made.

As described above, the present description discloses the followings.
(1) A welding method for dissimilar material joining for joining a first plate made of a material other than steel and a second plate made of steel, the method comprising:
   a step of making a hole through each of the first plate and the second plate;
   a step of press-fitting at least a shaft portion of a joining assist member being solid, being made of steel, and having an outer shape with step having the shaft portion and a flange portion, in which the shaft portion has a constricted portion on a flange portion side, in the hole of the first plate, wherein a relationship between a maximum outer diameter P_{D1} of the shaft portion, a width P_{D2} of the flange portion and a diameter B_{D1} of the hole of the first plate satisfies P_{D2} > P_{D1} > B_{D1}, or
   a step of press-fitting at least a shaft portion of a joining assist member being solid, being made of steel, and having an outer shape with step having the shaft portion and a flange portion, in which the shaft portion has at least one protrusion for press-fitting on an outer periphery thereof, in the hole of the first plate, wherein a width P_{D2} of the flange portion is larger than a diameter B_{D2} of the hole of the first plate, and a diameter P_{D1} of a largest circle being contact with an outermost diameter portion of at least two of the protrusions or a diameter P_{D2} of a circle being contact with an outermost diameter portion of the one protrusion and an outer periphery of the shaft portion is larger than the diameter B_{D2} of the hole of the first plate;
   a step of overlapping the first plate and the second plate such that the shaft portion of the joining assist member faces the hole of the second plate; and
   a step of filling the hole of the second plate with a weld metal and welding the second plate and the joining assist member by any of the following methods (a) to (f):
      (a) a gas-shielded arc welding method using, as a consumable electrode, a welding wire to provide the weld metal made of an iron alloy or nickel alloy;
      (b) a non-gas arc welding method using the welding wire as a consumable electrode;
      (c) a gas tungsten arc welding method using the welding wire as a non-consumable electrode filler;
      (d) a plasma arc welding method using the welding wire as a non-consumable electrode filler;
      (e) a shielded metal arc welding method using, as a consumable electrode, a covered electrode to provide the weld metal made of an iron alloy or nickel alloy; and
      (f) a laser welding method using the welding wire as a filler wire.
(2) The welding method for dissimilar material joining according to (1), wherein in the press-fitting step, the joining assist member is press-fitted in the hole of the first plate such that an exposed surface of the flange portion is substantially flush with a surface of the first plate or is positioned inside the first plate.
(3) The welding method for dissimilar material joining according to (2), wherein in the filling and welding step, a laser is used in addition to an arc as a heat source in any of the methods (a) to (e) for welding.
(4) The welding method for dissimilar material joining according to (2) or (3),
   wherein a thickness P_{H} of the joining assist member is equal to or less than a thickness B_{H1} of the first plate,
   wherein the second plate has a swell portion formed by a drawing process,
   wherein in the overlapping step, the swell portion of the second plate is positioned inside the hole of the first plate.
(5) The welding method for dissimilar material joining according to any one of (2) to (4), further comprising, before the overlapping step, a step of applying an adhesive to a whole periphery of the holes of the first plate and second plate in at least one of overlapped surfaces of the first plate and the top plate.
(6) The welding method for dissimilar material joining according to any one of (2) to (5),
   wherein a thickness P_{H} of the joining assist member is equal to or less than a thickness B_{H1} of the first plate,
   wherein the first plate is press-formed after the press-fitting step.
(7) The welding method for dissimilar material joining according to any one of (2) to (6), wherein a thickness P_{H2} of the flange portion of the joining assist member is from 20% to 80% of a thickness B_{H1} of the first plate.
(8) The welding method for dissimilar material joining according to any one of (2) to (7), wherein a width P_{D2} of the flange portion of the joining assist member is from 110% to 200% of a diameter B_{D1} of the hole of the first plate.
(9) The welding method for dissimilar material joining according to any one of (2) to (8), wherein in the filling and welding step, a height P_{H3} of a space unfilled with the weld metal from a surface of the second plate is equal to or less than 30% of a thickness B_{H2} of the second plate, or the hole of the second plate is completely filled with the weld metal and an excess weld metal is formed for a surface of the second plate.
(10) The welding method for dissimilar material joining according to (1),
   wherein in the press-fitting step, the joining assist member is placed above the hole of the first plate, and the shaft portion is press-fitted in the hole of the first plate,
   wherein the shaft portion constitutes an insertion portion and the flange portion constitutes a non-insertion portion.
(11) The welding method for dissimilar material joining according to (10), wherein in the filling and welding step, a laser is used in addition to an arc as a heat source in any of the methods (a) to (e) for welding.
(12) The welding method for dissimilar material joining according to (10) or (11),
   wherein a thickness P_{H1} of the insertion portion of the joining assist member is less than a thickness B_{H} of the first plate,
   wherein the second plate has a swell portion formed by a drawing process,
   wherein in the overlapping step, the swell portion of the second plate is positioned inside the hole of the first plate.
(13) The welding method for dissimilar material joining according to any one of (10) to (13), further comprising, before the overlapping step, a step of applying an adhesive to a whole periphery of the holes of the first plate and second plate in at least one of overlapped surfaces of the first plate and the second plate.
(14) The welding method for dissimilar material joining according to any one of (10) to (13), wherein in the insertion step, an adhesive is applied to at least one of facing surfaces of the non-insertion portion of the joining assist member and the first plate facing the non-insertion portion.
(15) The welding method for dissimilar material joining according to any one of (10) to (14), wherein in the insertion step or after the filling and welding step, an adhesive is applied to a boundary between the non-insertion portion of the joining assist member and a surface of the first plate.
(16) The welding method for dissimilar material joining according to any one of (10) to (15), wherein a height P_{H1} of the insertion portion of the joining assist member is equal to or larger than 10% of a thickness B_{H} of the first plate and is less than a total thickness BH+FH of the first plate and the second plate.
(17) The welding method for dissimilar material joining according to any one of (10) to (16), wherein a maximum diameter P_{D1} of the insertion portion of the joining assist member is from 102% to 125% of a diameter B_{D1} or B_{D2} of the hole of the first plate.
(18) The welding method for dissimilar material joining according to any one of (10) to (17), wherein a width P_{D2} of the non-insertion portion of the joining assist member is equal to or larger than 105% of a diameter B_{D1} or B_{D2} of the hole of the first plate.
(19) The welding method for dissimilar material joining according to any one of (10) to (18), wherein a height P_{H2} of the non-insertion portion of the joining assist member is from 50% to 150% of a thickness B_{H} of the first plate.
(20) The welding method for dissimilar material joining according to any one of (10) to (19), wherein in the filling and welding step, a height P_{H3} of a space unfilled with the weld metal from a surface of the second plate is equal to or less than 30% of a thickness F_{H} of the second plate, or the hole of the second plate is completely filled with the weld metal and an excess weld metal is formed for a surface of the second plate.
(21) The welding method for dissimilar material joining according to any one of (10) to (15), wherein a diameter P_{D1} of a largest circle being contact with an outermost diameter portion of at least two of the protrusions or a diameter P_{D1} of a circle being contact with an outermost diameter portion of the one protrusion and an outer periphery of the shaft portion is from 105% to 125% of a diameter B_{D2} of the hole of the first plate.
(22) The welding method for dissimilar material joining according to any one of (10) to (15) or (21), wherein an outer diameter P_{D0} of the shaft portion of the joining assist member is from 80% to 104% of a diameter B_{D1} or B_{D2} of the hole of the first plate.
(23) A joining assist member for use in the welding method for dissimilar material joining as described in any one of any one of (1) to (20), the joining assist member being solid, being made of steel, and having an outer shape with step having a shaft portion and a flange portion,
   wherein a relationship between a maximum outer diameter P_{D1} of the shaft portion, a width P_{D2} of the flange portion, and a diameter B_{D1} of the hole of the first plate satisfies P_{D2} > P_{D1} > B_{D1}, and the shaft portion has a constricted portion on a flange portion side.
(24) A joining assist member for use in the welding method for dissimilar material joining as described in any one of any one of (1) to (22), the joining assist member being solid, being made of steel, and having an outer shape with step having a shaft portion and a flange portion,
   wherein the shaft portion has at least one protrusion for press-fitting on an outer periphery thereof, a width P_{D2} of the flange portion is larger than a diameter B_{D2} of the hole of the first plate, and a diameter P_{D1} of a largest circle being contact with an outermost diameter portion of at least two of the protrusions or a diameter P_{D1} of a circle being contact with an outermost diameter portion of the one protrusion and an outer periphery of the shaft portion is larger than a diameter B_{D2} of the hole of the first plate.
(25) A dissimilar material welded joint comprising a first plate made of a material other than steel, and a second plate made of steel and jointed to the first plate,
   wherein the first plate has a hole, the second plate has a hole, and these holes are located coaxially,
   wherein the dissimilar material welded joint further comprises a joining assist member,
   the joining assist member being made of steel, and having an outer shape with step having a shaft portion and a flange portion, wherein a relationship between a maximum outer diameter P_{D1} of the shaft portion, a width P_{D2} of the flange portion, and a diameter B_{D1} of the hole of the first plate satisfies P_{D2} > P_{D1} > B_{D1}, and the shaft portion has a constricted portion on a flange portion side; or
   the joining assist member being solid, being made of steel, and having an outer shape with step having a shaft portion and a flange portion, wherein the shaft portion has at least one protrusion for press-fitting on an outer periphery thereof, a width P_{D2} of the flange portion is larger than a diameter B_{D2} of the hole of the first plate, and a diameter P_{D1} of a largest circle being contact with an outermost diameter portion of at least two of the protrusions or a diameter P_{D1} of a circle being contact with an outermost diameter portion of the one protrusion and an outer periphery of the shaft portion is larger than a diameter B_{D2} of the hole of the first plate,
   wherein at least the shaft portion of the joining assist member is fixed in the hole of the first plate,
   wherein the first plate and the second plate are overlapped such that the shaft portion of the joining assist member faces the hole of the second plate,
   wherein the hole of the second plate is filled with a weld metal made of an iron alloy or nickel alloy and fusion zone is formed by the weld metal and a part of a melted portions of the second plate and joining assist member.
(26) The dissimilar material welded joint according to (25), wherein the joining assist member is fixed in the hole of the first plate such that an exposed surface of the flange portion is substantially flush with a surface of the first plate or is positioned inside the first plate.
(27) The dissimilar material welded joint according to (26), wherein a swell portion formed on the second plate is positioned inside the hole of the first plate.
(28) The dissimilar material welded joint according to (26) or (27), comprising an adhesive applied to a whole periphery of the holes of the first plate and second plate in at least one of overlapped surfaces of the first plate and the second plate.
(29) The dissimilar material welded joint according to any one of (26) to (28), wherein a thickness P_{H2} of the flange portion of the joining assist member is from 20% to 80% of a thickness B_{H1} of the first plate.
(30) The dissimilar material welded joint according to any one of (26) to (29), wherein a width P_{D2} of the flange portion of the joining assist member is from 110% to 200% of a diameter B_{D1} of the hole of the first plate.
(31) The dissimilar material welded joint according to any one of (26) to (30), wherein a height P_{H3} of a space unfilled with the weld metal from a surface of the second plate is equal to or less than 30% of a thickness B_{H2} of the second plate.
(32) The dissimilar material welded joint according to any one of (26) to (30), wherein the hole of the second plate is completely filled with the weld metal and an excess weld metal is formed for a surface of the second plate.
(33) The dissimilar material welded joint according to any one of (26) to (32), wherein the joining assist member is fixed in the hole of the first plate by press-fitting.
(34) The dissimilar material welded joint according to (25),
   wherein an insertion portion of the joining assist member is fixed in the hole of the first plate,
   wherein the shaft portion constitutes the insertion portion and the flange portion constitutes a non-insertion portion.
(35) The dissimilar material welded joint according to (34), wherein a swell portion formed on the second plate is positioned inside the hole of the first plate.
(36) The dissimilar material welded joint according to (34) or (35), comprising an adhesive in a whole periphery of the holes of the first plate and second plate in at least one of overlapped surfaces of the first plate and the second plate.
(37) The dissimilar material welded joint according to any one of (34) to (36), comprising an adhesive in at least one of facing surfaces of the non-insertion portion of the joining assist member and the first plate facing the non-insertion portion.
(38) The dissimilar material welded joint according to any one of (34) to (37), comprising an adhesive in a boundary between the non-insertion portion of the joining assist member and a surface of the first plate.
(39) The dissimilar material welded joint according to claim any one of (34) to (38), wherein a height P_{H1} of the insertion portion of the joining assist member is equal to or larger than 10% of a thickness B_{H} of the first plate and is less than a total thickness B_{H}+F_{H} of the first plate and the second plate.
(40) The dissimilar material welded joint according to any one of (34) to (39), wherein a maximum diameter P_{D1} of the insertion portion of the joining assist member is from 102% to 125% of a diameter B_{D1} or B_{D2} of the hole of the first plate.
(41) The dissimilar material welded joint according to any one of (34) to (40), wherein a width P_{D2} of the non-insertion portion of the joining assist member is equal to or larger than 105% of a diameter B_{D1} or B_{D2} of the hole of the first plate.
(42) The dissimilar material welded joint according to any one of (34) to (41), wherein a height P_{H2} of the non-insertion portion of the joining assist member is from 50% to 150% of a thickness B_{H} of the first plate.
(43) The dissimilar material welded joint according to any one of (34) to (42), wherein a height P_{H3} of a space unfilled with the weld metal from a surface of the second plate is equal to or less than 30% of a thickness F_{H} of the second plate.
(44) The dissimilar material welded joint according to any one of (34) to (42), wherein the hole of the second plate is completely filled with the weld metal and an excess weld metal is formed for a surface of the second plate.
(45) The dissimilar material welded joint according to any one of (34) to (44), wherein the joining assist member is fixed in the hole of the first plate by press-fitting.
(46) The dissimilar material welded joint according to any one of (34) to (39), wherein a diameter P_{D1} of a largest circle being contact with an outermost diameter portion of at least two of the protrusions or a diameter P_{D1} of a largest circle being contact with an outermost diameter portion of the one protrusion and an outer periphery of the shaft portion is from 105% to 125% of a diameter B_{D2} of the hole of the first plate.
(47) The dissimilar material welded joint according to any one of (34) to (39) or (46), wherein an outer diameter P_{D0} of the shaft portion of the joining assist member is from 80% to 104% of a diameter B_{D1} or B_{D2} of the hole of the first plate.

Although various embodiments are described above, it goes without saying that the present invention is not limited to such embodiments. It would be obvious that a person skilled in the art can conceive of various changes or modifications within the scope of the claims, which are also naturally understood to belong to the technical scope of the present invention. In addition, each of the components in the above embodiments may be combined as desired without departing from the purpose of the invention.

This application is based on Japanese Patent Application No. 2018-214061 filed on November 14, 2018, the contents of which are herein incorporated by reference.

### Reference Signs Lists

- 1, 1a, 1b, 100a:: Dissimilar material welded joint
- 10:: Bottom plate (first plate)
- 10a:: Surface
- 11:: Hole
- 20:: Top plate (second plate)
- 21:: Hole
- 22:: Swell portion
- 30, 130, 230:: Joining assist member
- 31:: Shaft portion
- 32:: Flange portion
- 35, 135:: Tapered portion
- 35a, 135a:: Groove
- 36, 136:: Small-diameter cylindrical portion
- 37, 137:: Reduced-diameter tapered portion
- 38, 138:: Large-diameter cylindrical portion
- 39, 139:: Constricted portion
- 40, 40a:: Weld metal
- 50:: Die
- 51:: Punch
- 60:: Adhesive
- 70, 70a:: Die
- 131, 231:: Insertion portion
- 132, 232:: Non-insertion portion
- 134a, 134b, 234a, 234b:: Slit
- 238:: Notch
- 239:: Protrusion for press-fitting
- W:: Fusion zone
- R:: Roundness
- J:: Overlapped portion

## Claims

1. A welding method for dissimilar material joining for joining a first plate made of a material other than steel and a second plate made of steel, the method comprising:
a step of making a hole through each of the first plate and the second plate;
a step of press-fitting at least a shaft portion of a joining assist member being solid, being made of steel, and having an outer shape with step having the shaft portion and a flange portion, in which the shaft portion has a constricted portion on a flange portion side, in the hole of the first plate, wherein a relationship between a maximum outer diameter P_{D1} of the shaft portion, a width P_{D2} of the flange portion and a diameter B_{D1} of the hole of the first plate satisfies P_{D2} > P_{D1} > B_{D1}, or
a step of press-fitting at least a shaft portion of a joining assist member being solid, being made of steel, and having an outer shape with step having the shaft portion and a flange portion, in which the shaft portion has at least one protrusion for press-fitting on an outer periphery thereof, in the hole of the first plate, wherein a width P_{D2} of the flange portion is larger than a diameter B_{D2} of the hole of the first plate, and a diameter P_{D1} of a largest circle being contact with an outermost diameter portion of at least two of the protrusions or a diameter P_{D2} of a circle being contact with an outermost diameter portion of the one protrusion and an outer periphery of the shaft portion is larger than the diameter B_{D2} of the hole of the first plate;
a step of overlapping the first plate and the second plate such that the shaft portion of the joining assist member faces the hole of the second plate; and
a step of filling the hole of the second plate with a weld metal and welding the second plate and the joining assist member by any of the following methods (a) to (f):
(a) a gas-shielded arc welding method using, as a consumable electrode, a welding wire to provide the weld metal made of an iron alloy or nickel alloy;
(b) a non-gas arc welding method using the welding wire as a consumable electrode;
(c) a gas tungsten arc welding method using the welding wire as a non-consumable electrode filler;
(d) a plasma arc welding method using the welding wire as a non-consumable electrode filler;
(e) a shielded metal arc welding method using, as a consumable electrode, a covered electrode to provide the weld metal made of an iron alloy or nickel alloy; and
(f) a laser welding method using the welding wire as a filler wire.

2. The welding method for dissimilar material joining according to claim 1, wherein in the press-fitting step, the joining assist member is press-fitted in the hole of the first plate such that an exposed surface of the flange portion is substantially flush with a surface of the first plate or is positioned inside the first plate.

3. The welding method for dissimilar material joining according to claim 2, wherein in the filling and welding step, a laser is used in addition to an arc as a heat source in any of the methods (a) to (e) for welding.

4. The welding method for dissimilar material joining according to claim 2 or 3,
wherein a thickness P_{H} of the joining assist member is equal to or less than a thickness B_{H1} of the first plate,
wherein the second plate has a swell portion formed by a drawing process,
wherein in the overlapping step, the swell portion of the second plate is positioned inside the hole of the first plate.

5. The welding method for dissimilar material joining according to claim 2 or 3, further comprising, before the overlapping step, a step of applying an adhesive to a whole periphery of the holes of the first plate and second plate in at least one of overlapped surfaces of the first plate and the top plate.

6. The welding method for dissimilar material joining according to claim 2 or 3,
wherein a thickness P_{H} of the joining assist member is equal to or less than a thickness B_{H1} of the first plate,
wherein the first plate is press-formed after the press-fitting step.

7. The welding method for dissimilar material joining according to claim 2 or 3, wherein a thickness P_{H2} of the flange portion of the joining assist member is from 20% to 80% of a thickness B_{H1} of the first plate.

8. The welding method for dissimilar material joining according to claim 2 or 3, wherein a width P_{D2} of the flange portion of the joining assist member is from 110% to 200% of a diameter B_{D1} of the hole of the first plate.

9. The welding method for dissimilar material joining according to claim 2 or 3, wherein in the filling and welding step, a height P_{H3} of a space unfilled with the weld metal from a surface of the second plate is equal to or less than 30% of a thickness B_{H2} of the second plate, or the hole of the second plate is completely filled with the weld metal and an excess weld metal is formed for a surface of the second plate.

10. The welding method for dissimilar material joining according to claim 1,
wherein in the press-fitting step, the joining assist member is placed above the hole of the first plate, and the shaft portion is press-fitted in the hole of the first plate,
wherein the shaft portion constitutes an insertion portion and the flange portion constitutes a non-insertion portion.

11. The welding method for dissimilar material joining according to claim 10, wherein in the filling and welding step, a laser is used in addition to an arc as a heat source in any of the methods (a) to (e) for welding.

12. The welding method for dissimilar material joining according to claim 10 or 11,
wherein a thickness P_{H1} of the insertion portion of the joining assist member is less than a thickness B_{H} of the first plate,
wherein the second plate has a swell portion formed by a drawing process,
wherein in the overlapping step, the swell portion of the second plate is positioned inside the hole of the first plate.

13. The welding method for dissimilar material joining according to claim 10 or 11, further comprising, before the overlapping step, a step of applying an adhesive to a whole periphery of the holes of the first plate and second plate in at least one of overlapped surfaces of the first plate and the second plate.

14. The welding method for dissimilar material joining according to claim 10 or 11, wherein in the insertion step, an adhesive is applied to at least one of facing surfaces of the non-insertion portion of the joining assist member and the first plate facing the non-insertion portion.

15. The welding method for dissimilar material joining according to claim 10 or 11, wherein in the insertion step or after the filling and welding step, an adhesive is applied to a boundary between the non-insertion portion of the joining assist member and a surface of the first plate.

16. The welding method for dissimilar material joining according to claim 10 or 11, wherein a height P_{H1} of the insertion portion of the joining assist member is equal to or larger than 10% of a thickness B_{H} of the first plate and is less than a total thickness B_{H}+F_{H} of the first plate and the second plate.

17. The welding method for dissimilar material joining according to claim 10 or 11, wherein a maximum diameter P_{D1} of the insertion portion of the joining assist member is from 102% to 125% of a diameter B_{D1} or B_{D2} of the hole of the first plate.

18. The welding method for dissimilar material joining according to claim 10 or 11, wherein a width P_{D2} of the non-insertion portion of the joining assist member is equal to or larger than 105% of a diameter B_{D1} or B_{D2} of the hole of the first plate.

19. The welding method for dissimilar material joining according to claim 10 or 11, wherein a height P_{H2} of the non-insertion portion of the joining assist member is from 50% to 150% of a thickness B_{H} of the first plate.

20. The welding method for dissimilar material joining according to claim 10 or 11, wherein in the filling and welding step, a height P_{H3} of a space unfilled with the weld metal from a surface of the second plate is equal to or less than 30% of a thickness F_{H} of the second plate, or the hole of the second plate is completely filled with the weld metal and an excess weld metal is formed for a surface of the second plate.

21. The welding method for dissimilar material joining according to claim 10 or 11, wherein a diameter P_{D1} of a largest circle being contact with an outermost diameter portion of at least two of the protrusions or a diameter P_{D1} of a circle being contact with an outermost diameter portion of the one protrusion and an outer periphery of the shaft portion is from 105% to 125% of a diameter B_{D2} of the hole of the first plate.

22. The welding method for dissimilar material joining according to claim 10 or 11, wherein an outer diameter P_{D0} of the shaft portion of the joining assist member is from 80% to 104% of a diameter B_{D1} or B_{D2} of the hole of the first plate.

23. A joining assist member for use in the welding method for dissimilar material joining as described in any one of claims 1 to 3, the joining assist member being solid, being made of steel, and having an outer shape with step having a shaft portion and a flange portion,
wherein a relationship between a maximum outer diameter P_{D1} of the shaft portion, a width P_{D2} of the flange portion, and a diameter B_{D1} of the hole of the first plate satisfies P_{D2} > P_{D1} > B_{D1}, and the shaft portion has a constricted portion on a flange portion side.

24. A joining assist member for use in the welding method for dissimilar material joining as described in any one of claims 1 to 3, the joining assist member being solid, being made of steel, and having an outer shape with step having a shaft portion and a flange portion,
wherein the shaft portion has at least one protrusion for press-fitting on an outer periphery thereof, a width P_{D2} of the flange portion is larger than a diameter B_{D2} of the hole of the first plate, and a diameter P_{D1} of a largest circle being contact with an outermost diameter portion of at least two of the protrusions or a diameter P_{D1} of a circle being contact with an outermost diameter portion of the one protrusion and an outer periphery of the shaft portion is larger than a diameter B_{D2} of the hole of the first plate.

25. A dissimilar material welded joint comprising a first plate made of a material other than steel, and a second plate made of steel and jointed to the first plate,
wherein the first plate has a hole, the second plate has a hole, and these holes are located coaxially,
wherein the dissimilar material welded joint further comprises a joining assist member,
the joining assist member being made of steel, and having an outer shape with step having a shaft portion and a flange portion, wherein a relationship between a maximum outer diameter P_{D1} of the shaft portion, a width P_{D2} of the flange portion, and a diameter B_{D1} of the hole of the first plate satisfies P_{D2} > P_{D1} > B_{D1}, and the shaft portion has a constricted portion on a flange portion side; or
the joining assist member being solid, being made of steel, and having an outer shape with step having a shaft portion and a flange portion, wherein the shaft portion has at least one protrusion for press-fitting on an outer periphery thereof, a width P_{D2} of the flange portion is larger than a diameter B_{D2} of the hole of the first plate, and a diameter P_{D1} of a largest circle being contact with an outermost diameter portion of at least two of the protrusions or a diameter P_{D1} of a circle being contact with an outermost diameter portion of the one protrusion and an outer periphery of the shaft portion is larger than a diameter B_{D2} of the hole of the first plate,
wherein at least the shaft portion of the joining assist member is fixed in the hole of the first plate,
wherein the first plate and the second plate are overlapped such that the shaft portion of the joining assist member faces the hole of the second plate,
wherein the hole of the second plate is filled with a weld metal made of an iron alloy or nickel alloy and fusion zone is formed by the weld metal and a part of a melted portions of the second plate and joining assist member.

26. The dissimilar material welded joint according to claim 25, wherein the joining assist member is fixed in the hole of the first plate such that an exposed surface of the flange portion is substantially flush with a surface of the first plate or is positioned inside the first plate.

27. The dissimilar material welded joint according to claim 26, wherein a swell portion formed on the second plate is positioned inside the hole of the first plate.

28. The dissimilar material welded joint according to claim 26 or 27, comprising an adhesive applied to a whole periphery of the holes of the first plate and second plate in at least one of overlapped surfaces of the first plate and the second plate.

29. The dissimilar material welded joint according to claim 26 or 27, wherein a thickness P_{H2} of the flange portion of the joining assist member is from 20% to 80% of a thickness B_{H1} of the first plate.

30. The dissimilar material welded joint according to claim 26 or 27, wherein a width P_{D2} of the flange portion of the joining assist member is from 110% to 200% of a diameter B_{D1} of the hole of the first plate.

31. The dissimilar material welded joint according to claim 26 or 27, wherein a height P_{H3} of a space unfilled with the weld metal from a surface of the second plate is equal to or less than 30% of a thickness B_{H2} of the second plate.

32. The dissimilar material welded joint according to claim 26 or 27, wherein the hole of the second plate is completely filled with the weld metal and an excess weld metal is formed for a surface of the second plate.

33. The dissimilar material welded joint according to claim 26 or 27, wherein the joining assist member is fixed in the hole of the first plate by press-fitting.

34. The dissimilar material welded joint according to claim 25,
wherein an insertion portion of the joining assist member is fixed in the hole of the first plate,
wherein the shaft portion constitutes the insertion portion and the flange portion constitutes a non-insertion portion.

35. The dissimilar material welded joint according to claim 34, wherein a swell portion formed on the second plate is positioned inside the hole of the first plate.

36. The dissimilar material welded joint according to claim 34 or 35, comprising an adhesive in a whole periphery of the holes of the first plate and second plate in at least one of overlapped surfaces of the first plate and the second plate.

37. The dissimilar material welded joint according to claim 34 or 35, comprising an adhesive in at least one of facing surfaces of the non-insertion portion of the joining assist member and the first plate facing the non-insertion portion.

38. The dissimilar material welded joint according to claim 34 or 35, comprising an adhesive in a boundary between the non-insertion portion of the joining assist member and a surface of the first plate.

39. The dissimilar material welded joint according to claim 34 or 35, wherein a height P_{H1} of the insertion portion of the joining assist member is equal to or larger than 10% of a thickness B_{H} of the first plate and is less than a total thickness B_{H}+F_{H} of the first plate and the second plate.

40. The dissimilar material welded joint according to claim 34 or 35, wherein a maximum diameter P_{D1} of the insertion portion of the joining assist member is from 102% to 125% of a diameter B_{D1} or B_{D2} of the hole of the first plate.

41. The dissimilar material welded joint according to claim 34 or 35, wherein a width P_{D2} of the non-insertion portion of the joining assist member is equal to or larger than 105% of a diameter B_{D1} or B_{D2} of the hole of the first plate.

42. The dissimilar material welded joint according to claim 34 or 35, wherein a height P_{H2} of the non-insertion portion of the joining assist member is from 50% to 150% of a thickness B_{H} of the first plate.

43. The dissimilar material welded joint according to claim 34 or 35, wherein a height P_{H3} of a space unfilled with the weld metal from a surface of the second plate is equal to or less than 30% of a thickness F_{H} of the second plate.

44. The dissimilar material welded joint according to claim 34 or 35, wherein the hole of the second plate is completely filled with the weld metal and an excess weld metal is formed for a surface of the second plate.

45. The dissimilar material welded joint according to claim 34 or 35, wherein the joining assist member is fixed in the hole of the first plate by press-fitting.

46. The dissimilar material welded joint according to claim 34 or 35, wherein a diameter P_{D1} of a largest circle being contact with an outermost diameter portion of at least two of the protrusions or a diameter P_{D1} of a largest circle being contact with an outermost diameter portion of the one protrusion and an outer periphery of the shaft portion is from 105% to 125% of a diameter B_{D2} of the hole of the first plate.

47. The dissimilar material welded joint according to claim 34 or 35, wherein an outer diameter P_{D0} of the shaft portion of the joining assist member is from 80% to 104% of a diameter B_{D1} or B_{D2} of the hole of the first plate.
